(19) **Europäisches Patentamt / European Patent Office / Office européen des brevets**

(11) **EP 4 167 534 A1**

(12) **EUROPEAN PATENT APPLICATION**
published in accordance with Art. 153(4) EPC

(43) Date of publication:
**19.04.2023 Bulletin 2023/16**

(21) Application number: **21838819.7**

(22) Date of filing: **08.07.2021**

(51) International Patent Classification (IPC):
*H04L 25/02* (2006.01)  *H04L 5/00* (2006.01)

(52) Cooperative Patent Classification (CPC):
**H04L 5/00; H04L 25/02**

(86) International application number:
**PCT/CN2021/105105**

(87) International publication number:
**WO 2022/007870 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2020 CN 202010664650**

(71) Applicant: **Huawei Technologies Co., Ltd.**
**Longgang District,**
**Shenzhen,**
**Guangdong 518129 (CN)**

(72) Inventors:
• **LIANG, Dandan**
  **Shenzhen, Guangdong 518129 (CN)**
• **GAN, Ming**
  **Shenzhen, Guangdong 518129 (CN)**
• **ZHOU, Zhengchun**
  **Chengdu, Sichuan 611756 (CN)**
• **LEI, Xianfu**
  **Chengdu, Sichuan 611756 (CN)**
• **LIU, Chenchen**
  **Shenzhen, Guangdong 518129 (CN)**
• **YANG, Yang**
  **Chengdu, Sichuan 611756 (CN)**
• **LIN, Wei**
  **Shenzhen, Guangdong 518129 (CN)**
• **TANG, Xiaohu**
  **Chengdu, Sichuan 611756 (CN)**

(74) Representative: **MERH-IP Matias Erny Reichl Hoffmann**
**Patentanwälte PartG mbB**
**Paul-Heyse-Strasse 29**
**80336 München (DE)**

(54) **METHOD FOR TRANSMITTING PPDU AND RELATED APPARATUS**

(57)    This application relates to the field of wireless communication, and in particular, to a method for transmitting a physical layer protocol data unit and a related apparatus. For example, this application is applied to a wireless local area network supporting the 802.11be standard. The method includes: A first communication device generates and sends a PPDU over a first bandwidth. The first bandwidth is greater than or equal to 80 MHz. Correspondingly, a second communication device parses the received PPDU to obtain an LTF sequence included in the PPDU. The LTF sequence is generated based on a first LTF sequence. The first LTF sequence is not a high efficiency LTF sequence. According to embodiments of this application, an LTF sequence applicable to channel estimation can be designed for a larger bandwidth. This provides a basis for subsequent channel estimation.

FIG. 5

**Description**

This application claims priority to Chinese Patent Application No. 202010664650.1, filed with the China National Intellectual Property Administration on July 10, 2020 and entitled "PPDU TRANSMISSION METHOD AND RELATED APPARATUS", which is incorporated herein by reference in its entirety.

**TECHNICAL FIELD**

This application relates to the field of wireless communication technologies, and in particular, to a PPDU transmission method and a related apparatus.

**BACKGROUND**

Because performance of a wireless communication system is greatly affected by a wireless channel, for example, shadow fading and frequency-selective fading. Consequently, a propagation path between a transmitter and a receiver is extremely complex. The channel needs to be estimated in coherent detection of an orthogonal frequency division multiplexing (orthogonal frequency division multiplexing, OFDM) system, and channel estimation accuracy directly affects performance of the entire system.

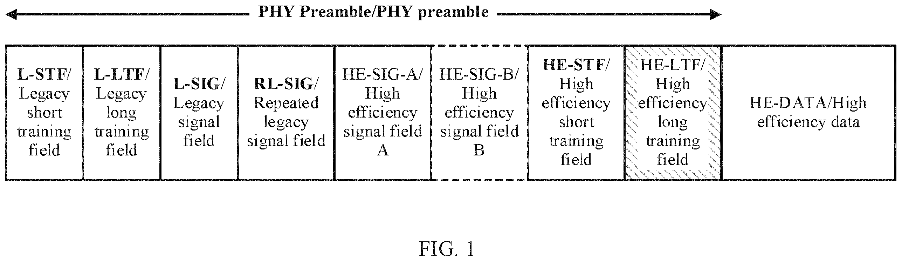

Therefore, wireless local area network (wireless local area network, WLAN) standards focusing on an OFDM technology, such as the 802. 11g/a, 802.11n, and 802.11ac standards, have in common that a long training field (long training field, LTF) sequence used for channel estimation is specified at a physical layer. To improve a system throughput rate, an orthogonal frequency division multiple access (frequency division multiple access, OFDMA) technology is introduced in the 802.11ax standard, and the LTF sequence used for channel estimation is also specified in the 802.11ax standard. For example, a format of a high efficiency (high efficiency, HE) physical layer protocol data unit (physical layer protocol data unit, PPDU) specified in the 802.11ax standard may be shown in FIG. 1. FIG. 1 is a schematic diagram of a frame structure of an HE PPDU. As shown in FIG. 1, an HE-LTF is a high efficiency long training field used for channel estimation. The field may include one or more HE-LTF code elements, and each code element is one OFDM symbol.

However, with development of mobile Internet and popularization of intelligent terminals, data traffic increases rapidly, and users have increasingly high requirements on communication service quality. The Institute of Electrical and Electronics Engineers (institute of electrical and electronics engineers, IEEE) 802.11ax standard no longer meets user requirements on a large throughput, a low jitter, a low delay, and the like. Therefore, it is urgent to develop a next-generation WLAN technology, namely, the IEEE 802.11be standard, the extremely high throughput (extremely high throughput, EHT) standard, or the Wi-Fi 7 standard. Different from the IEEE 802.11ax, the IEEE 802.11be uses ultra-large bandwidths, such as 240 MHz and 320 MHz, to implement an ultra-high transmission rate and support a scenario of ultra-high user density.

A maximum bandwidth supported by the IEEE 802.11ax is 160 MHz, an HE-LTF sequence included in the PPDU in the IEEE 802.11ax is not applicable to channel estimation for a larger channel bandwidth (for example, 240 MHz and 320 MHz). Therefore, in the 802.11be standard, for a larger channel bandwidth (for example, 240 MHz, and 320 MHz), how to design an LTF sequence included in the PPDU to adapt to channel estimation for a larger bandwidth becomes an urgent problem to be resolved.

**SUMMARY**

Embodiments of this application provide a PPDU transmission method and a related apparatus, to design an LTF sequence applicable to channel estimation for a larger bandwidth such as 160 MHz, 240 MHz, and 320 MHz. This provides a basis for subsequent channel estimation, decrease a peak-to-average power ratio, and reduce a requirement for a linear power amplifier.

The following describes this application from different aspects. It should be understood that mutual reference may be made to the following implementations and beneficial effects of the different aspects.

According to a first aspect, an embodiment of this application provides a PPDU transmission method, applied to a first communication device such as an AP. The PPDU transmission method includes: A first communication device generates and sends a PPDU over a first bandwidth. The PPDU includes an LTF sequence. The LTF sequence is generated based on a first LTF sequence. The first LTF sequence is not a high efficiency LTF sequence. The first bandwidth is greater than or equal to 80 MHz.

Optionally, the first LTF sequence is not an LTF sequence in any bandwidth (for example, an 80 MHz bandwidth) in the 802.11ax standard. The first LTF sequence may be an LTF sequence in the 80 MHz bandwidth.

Optionally, the PPDU is an extremely high throughput PPDU, and the LTF sequence is carried in an extremely high throughput EHT long training field in the EHT PPDU.

This solution designs a new first LTF sequence in the 80 MHz bandwidth. An LTF sequence in a larger bandwidth is generated based on the first LTF sequence. In this case, the LTF sequence is applicable to channel estimation for a larger bandwidth such as 160 MHz, 240 MHz, and 320 MHz. This provides a basis for subsequent channel estimation, decrease a peak-to-average power ratio, and reduce a requirement for a linear power amplifier.

According to a second aspect, an embodiment of this application provides a PPDU transmission method, applied to a second communication device such as a STA. The PPDU transmission method includes: A second communication device receives a PPDU from a first communication device over a first bandwidth, and parses the received PPDU, to obtain an LTF sequence included in the PPDU. The first bandwidth is greater than or equal to 160 MHz. The LTF sequence is generated based on a first LTF sequence. The first LTF sequence is not a high efficiency LTF sequence.

Optionally, the first LTF sequence is not an LTF sequence in any bandwidth (for example, an 80 MHz bandwidth) in the 802.11ax standard. The first LTF sequence may be an LTF sequence in the 80 MHz bandwidth.

Optionally, the PPDU is an extremely high throughput PPDU, and the LTF sequence is carried in an extremely high throughput EHT long training field in the EHT PPDU.

According to a third aspect, an embodiment of this application provides a communication apparatus. The communication apparatus may be a first communication device or a chip in the first communication device, for example, a Wi-Fi chip. The communication apparatus includes:

a processing unit, configured to generate a PPDU; and a transceiver unit, configured to send the PPDU over a first bandwidth. The PPDU includes an LTF sequence. The LTF sequence is generated based on a first LTF sequence. The first LTF sequence is not a high efficiency LTF sequence. The first bandwidth is greater than or equal to 80 MHz.

Optionally, the first LTF sequence is not an LTF sequence in any bandwidth (for example, an 80 MHz bandwidth) in the 802.11ax standard. The first LTF sequence may be an LTF sequence in the 80 MHz bandwidth.

Optionally, the PPDU is an extremely high throughput PPDU, and the LTF sequence is carried in an extremely high throughput EHT long training field in the EHT PPDU.

According to a fourth aspect, an embodiment of this application provides a communication apparatus. The communication apparatus may be a second communication device or a chip in the second communication device, for example, a Wi-Fi chip. The communication apparatus includes:

a processing unit, configured to receive a PPDU from a first communication device over a first bandwidth; and a transceiver unit, configured to parse the received PPDU, to obtain an LTF sequence included in the PPDU. The first bandwidth is greater than or equal to 80 MHz. The LTF sequence is generated based on a first LTF sequence. The first LTF sequence is not a high efficiency LTF sequence.

Optionally, the first LTF sequence is not an LTF sequence in any bandwidth (for example, an 80 MHz bandwidth) in the 802.11ax standard. The first LTF sequence may be an LTF sequence in the 80 MHz bandwidth.

Optionally, the PPDU is an extremely high throughput PPDU, and the LTF sequence is carried in an extremely high throughput EHT long training field in the EHT PPDU.

In an implementation of any one of the foregoing aspects, the first LTF sequence may be determined based on a Golay complementary pair (a, b) with a length of 128. a is determined based on a truth table of a quadratic Boolean function $f$. b is determined based on a truth table of a function $g$. The function $g$ is determined based on the quadratic Boolean function $f$.

Optionally, the first LTF sequence may be a 2x LTF sequence in the 80 MHz bandwidth, and is denoted as LTF2x80MHz below. The first LTF sequence has a length of 1001.

The first LTF sequence is: LTF2x80MHz (-500:2:500) = [$a_{121}$, $b_{128}$, $0_3$, -$a_{128}$, -$b_{121}$].

The expression indicates that values of subcarriers at even locations in subcarriers numbered -500 to 500 are sequentially values in the foregoing sequence, and values of subcarriers at other locations are 0s. $a_{121}$ = a (5:125). $b_{121}$ = b (4:124). $a_{128}$ = a. $b_{128}$ = b. $0_3$ indicates three consecutive 0s. $a = (-1)^{\overline{f}}$. $b = (-1)^{\overline{g}}$. $\overline{f}$ indicates the truth table of the quadratic Boolean function $f$. $\overline{g}$ indicates the truth table of the function $g$. The function $g(x_1,x_2,...,x_7) = f + x_{\pi(1)}$. $\pi$ is an arrangement or permutation of symbols {1, 2, ..., 7}. $\pi(1)$ indicates a first number in the current arrangement $\pi$.

Optionally, the first LTF sequence may be a 4x LTF sequence in the 80 MHz bandwidth, and is denoted as LTF4x80MHz below.

LTF4x80MHz (-500:1:500) = [$a_{128}$, (-1)*$b_{121}$, (-1)*$a_{121}$, (-1)*$b_{128}$, $0_5$, (-1)*$a_{128}$, (-1)*$b_{121}$, $a_{121}$, (-1)*$b_{128}$].

LTF4x80MHz (-500:1:500) indicates the first LTF sequence with a length of 1001. $a_{121}$ = a (1:121). $b_{121}$ = b (8:128). $a_{128}$ = a. $b_{128}$ = b. $0_5$ indicates five consecutive 0s. $a = (-1)^{\overline{f}}$. $b = (-1)^{\overline{g}}$. $\overline{f}$ indicates the truth table of the quadratic Boolean function $f$. $\overline{g}$ indicates the truth table of the function $g$. The function $g(x_1,x_2,...,x_7) = f + x_{\pi(1)}$. $\pi$ is an arrangement or permutation of symbols {1, 2, ..., 7}. $\pi(1)$ indicates a first number in the current arrangement $\pi$.

This solution generates the first LTF sequence (the first LTF sequence is a new sequence) in a 2x case or a 4x case based on a Golay (Golay) sequence and a Boolean function, and the first LTF sequence has a smaller PAPR value.

In an implementation of any one of the foregoing aspects, when the first bandwidth is 160 MHz, the LTF sequence may be:

[LTF2x80MHz_part1, LTF2x80MHz_part2, LTF2x80MHz_part3, LTF2x80MHz_part4, LTF2x80MHz_part5, $0_{23}$, LTF2x80MHz_part1, (-1)* LTF2x80MHz_part2, (-1)*LTF2x80MHz_part3, (-1)*LTF2x80MHz_part4, LTF2x80MHz_part5]; or
[LTF4x80MHz_part1, (-1)*LTF4x80MHz_part2, LTF4x80MHz_part3, LTF4x80MHz_part4, (-1)*LTF4x80MHz_part5, $0_{23}$, LTF4x80MHz_part1, LTF4x80MHz_part2, (-1)* LTF4x80MHz_part3, LTF4x80MHz_part4, LTF4x80MHz_part5].

Both LTF2x80MHz and LTF4x80MHz indicate the first LTF sequence with the length of 1001. LTF2x80MHz = [LTF2x80MHz_part1, LTF2x80MHz_part2, LTF2x80MHz_part3, LTF2x80MHz_part4, LTF2x80MHz_part5]. LTF2x80MHz_part1 is a $1^{st}$ element to a $242^{nd}$ element of LTF2x80MHz. LTF2x80MHz_part2 is a $243^{rd}$ element to a $484^{th}$ element of LTF2x80MHz. LTF2x80MHz_part3 is a $485^{th}$ element to a $517^{th}$ element of LTF2x80MHz. LTF2x80MHz_part4 is a $518^{th}$ element to a $759^{th}$ element of LTF2x80MHz. LTF2x80MHz_part5 is a $760^{th}$ element to a $1001^{st}$ element of LTF2x80MHz.

LTF4x80MHz = [LTF4x80MHz_part1, LTF4x80MHz_part2, LTF4x80MHz_part3, LTF4x80MHz_part4, LTF4x80MHz_part5]. LTF4x80MHz_part1 is a $1^{st}$ element to a $242^{nd}$ element of LTF4x80MHz. LTF4x80MHz_part2 is a $243^{rd}$ element to a $484^{th}$ element of LTF4x80MHz. LTF4x80MHz_part3 is a $485^{th}$ element to a $517^{th}$ element of LTF4x80MHz. LTF4x80MHz_part4 is a $518^{th}$ element to a $759^{th}$ element of LTF4x80MHz. LTF4x80MHz_part5 is a $760^{th}$ element to a $1001^{st}$ element of LTF4x80MHz. $0_{23}$ indicates 23 consecutive 0s.

This solution generates a 2x LTF sequence and a 2x LTF sequence that are in a 160 MHz bandwidth based on the LTF2x80MHz sequence and the LTF4x80MHz sequence, and the 2x LTF sequence and the 2x LTF sequence have smaller PAPR values.

In an implementation of any one of the foregoing aspects, when the first bandwidth is 240 MHz, the LTF sequence may be:

[LTF2x80MHz_Left, 0, (-1)*LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF4x80MHz_part1, LTF4x80MHz_part2, LTF4x80MHz_part3, LTF4x80MHz_part4, (-1)*LTF4x80MHz_part5, $0_{23}$, (-1)*LTF4x80MHz_part1, LTF4x80MHz_part2, LTF4x80MHz_part3, LTF4x80MHz_part4, LTF4x80MHz_part5, $0_{23}$, LTF4x80MHz_part1, LTF4x80MHz_part2, (-1)*LTF4x80MHz_part3, (-1)*LTF4x80MHz_part4, LTF4x80MHz_part5].

Both LTF2x80MHz and LTF4x80MHz indicate the first LTF sequence with the length of 1001. LTF2x80MHz = [LTF2x80MHz _Left, 0, LTF2x80MHz_Right]. LTF2x80MHz_Left is a $1^{st}$ element to a $500^{th}$ element of LTF2x80MHz. LTF2x80MHz_Right is a $502^{nd}$ element to a $1001^{st}$ element of LTF2x80MHz.

LTF4x80MHz = [LTF4x80MHz_part1, LTF4x80MHz_part2, LTF4x80MHz_part3, LTF4x80MHz_part4, LTF4x80MHz_part5]. LTF4x80MHz_part1 is a $1^{st}$ element to a $242^{nd}$ element of LTF4x80MHz. LTF4x80MHz_part2 is a $243^{rd}$ element to a $484^{th}$ element of LTF4x80MHz. LTF4x80MHz_part3 is a $485^{th}$ element to a $517^{th}$ element of LTF4x80MHz. LTF4x80MHz_part4 is a $518^{th}$ element to a $759^{th}$ element of LTF4x80MHz. LTF4x80MHz_part5 is a $760^{th}$ element to a $1001^{st}$ element of LTF4x80MHz. $0_{23}$ indicates 23 consecutive 0s.

This solution generates a 2x LTF sequence and a 4x LTF sequence that are in a 240 MHz bandwidth based on the LTF2x80MHz sequence and the LTF4x80MHz sequence, and the 2x LTF sequence and the 4x LTF sequence have smaller PAPR values.

In an implementation of any one of the foregoing aspects, when the first bandwidth is 320 MHz, the LTF sequence may be:

[LTF2x80MHz_Left, 0, (-1)*LTF2x80MHz_Right, $0_{23}$, (-1)*LTF2x80MHz_Left, 0, LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF2x80MHz_part1, LTF2x80MHz_part2, LTF2x80MHz_part3, LTF2x80MHz_part4, LTF2x80MHz_part5, $0_{23}$, LTF2x80MHz_part1, LTF2x80MHz_part2, LTF2x80MHz_part3, LTF2x80MHz_part4, (-1)*LTF2x80MHz_part5, $0_{23}$, LTF2x80MHz_part1, (-1)*LTF2x80MHz_part2, (-1)*LTF2x80MHz_part3, (-1)*LTF2x80MHz_part4, (-1)*LTF2x80MHz_part5, $0_{23}$, (-1)*LTF2x80MHz_part1, LTF2x80MHz_part2, LTF2x80MHz_part3, LTF2x80MHz_part4, (-1)*LTF2x80MHz_part5].

LTF2x80MHz indicates the first LTF sequence with the length of 1001. LTF2x80MHz = [LTF2x80MHz_Left, 0, LTF2x80MHz_Right]. LTF2x80MHz_Left is a $1^{st}$ element to a $500^{th}$ element of LTF2x80MHz. LTF2x80MHz_Right is a 502$^{nd}$ element to a 1001$^{st}$ element of LTF2x80MHz.

LTF2x80MHz = [LTF2x80MHz_part1, LTF2x80MHz_part2, LTF2x80MHz_part3, LTF2x80MHz_part4, LTF2x80MHz_part5]. LTF2x80MHz_part1 is a 1$^{st}$ element to a 242$^{nd}$ element of LTF2x80MHz. LTF2x80MHz_part2 is a 243$^{rd}$ element to a 484$^{th}$ element of LTF2x80MHz. LTF2x80MHz_part3 is a 485$^{th}$ element to a 517$^{th}$ element of LTF2x80MHz. LTF2x80MHz_part4 is a 518$^{th}$ element to a 759$^{th}$ element of LTF2x80MHz. LTF2x80MHz_part5 is a 760$^{th}$ element to a 1001$^{st}$ element of LTF2x80MHz. $0_{23}$ indicates 23 consecutive 0s.

Optionally, when the first bandwidth is 320 MHz, the LTF sequence may be:

[LTF4x80MHz_part1, LTF4x80MHz_part2, LTF4x80MHz_part3, LTF4x80MHz_part4, LTF4x80MHz_part5, $0_{23}$, LTF4x80MHz_part1, (-1)*LTF4x80MHz_part2, LTF4x80MHz_part3, LTF4x80MHz_part4, (-1)*LTF4x80MHz_part5, $0_{23}$, (-1)* LTF4x80MHz_part1, (-1)*LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, LTF4x80MHz_part3, LTF4x80MHz_part4, (-1)*LTF4x80MHz_part5]; or

[LTF4x80MHz_part1, LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, (-1)*LTF4x80MHz_part3, LTF4x80MHz_part4, LTF4x80MHz_part5, $0_{23}$, (-1)*LTF4x80MHz_part1, (-1)*LTF4x80MHz_part2, (-1)*LTF4x80MHz_part3, (-1)*LTF4x80MHz_part4, LTF4x80MHz_part5, $0_{23}$, LTF4x80MHz_part1, (-1)*LTF4x80MHz_part2, (-1)*LTF4x80MHz _part3, (-1)*LTF4x80MHz_part4, LTF4x80MHz_part5],

LTF4x80MHz indicates the first LTF sequence with the length of 1001. LTF4x80MHz = [LTF4x80MHz_part1, LTF4x80MHz_part2, LTF4x80MHz_part3, LTF4x80MHz_part4, LTF4x80MHz_part5]. LTF4x80MHz_part1 is a 1$^{st}$ element to a 242$^{nd}$ element of LTF4x80MHz. LTF4x80MHz_part2 is a 243$^{rd}$ element to a 484$^{th}$ element of LTF4x80MHz. LTF4x80MHz_part3 is a 485$^{th}$ element to a 517$^{th}$ element of LTF4x80MHz. LTF4x80MHz_part4 is a 518$^{th}$ element to a 759$^{th}$ element of LTF4x80MHz. LTF4x80MHz_part5 is a 760$^{th}$ element to a 1001$^{st}$ element of LTF4x80MHz. $0_{23}$ indicates 23 consecutive 0s.

This solution generates a 2x LTF sequence and a 4x LTF sequence that are in a 320 MHz bandwidth based on the LTF2x80MHz sequence and the LTF4x80MHz sequence, and the 2x LTF sequence and the 4x LTF sequence have smaller PAPR values.

According to a fifth aspect, an embodiment of this application provides a communication apparatus, which is specifically a first communication device and includes a processor and a transceiver. The processor is configured to support the first communication device in performing a corresponding function in the method in the first aspect. The transceiver is configured to: support communication between the first communication device and a second communication device, and send information, a frame, a data packet, an instruction, or the like to the second communication device in the foregoing method. The first communication device may further include a memory, and the memory is configured to be coupled to the processor and stores a program instruction and data that are necessary for the first communication device.

Specifically, the processor is configured to generate a PPDU, where the PPDU includes an LTF sequence. A length of the LTF sequence is greater than or equal to a first length. The LTF sequence is generated based on a first LTF sequence. The first length is a length of an LTF sequence of a PPDU transmitted on a 160 MHz channel. The first LTF sequence is not a high efficiency LTF sequence. The transceiver is configured to send the PPDU over a first bandwidth, where the first bandwidth is greater than or equal to 160 MHz.

According to a sixth aspect, an embodiment of this application provides a communication apparatus, which is specifically a second communication device and includes a processor and a transceiver. The processor is configured to support the second communication device in performing a corresponding function in the method in the second aspect. The transceiver is configured to: support communication between the second communication device and a first communication device, and receive information, a frame, a data packet, an instruction, or the like sent by the first communication device in the foregoing method. The second communication device may further include a memory, and the memory is configured to be coupled to the processor and stores a program instruction and data that are necessary for the second communication device.

Specifically, the transceiver is configured to receive a PPDU from the first communication device over a first bandwidth. The first bandwidth is greater than or equal to 160 MHz. The processor is configured to parse the received PPDU to obtain an LTF sequence included in the PPDU. A length of the LTF sequence is greater than or equal to a first length. The LTF sequence is generated based on a first LTF sequence. The first length is a length of an LTF sequence of a PPDU transmitted on a 160 MHz channel. The first LTF sequence is not a high efficiency LTF sequence.

According to a seventh aspect, an embodiment of this application provides a chip or a chip system, including an input/output interface and a processing circuit. The processing circuit is configured to generate a PPDU, where the PPDU includes an LTF sequence. A length of the LTF sequence is greater than or equal to a first length. The LTF sequence is generated based on a first LTF sequence. The first length is a length of an LTF sequence of a PPDU transmitted on a 160 MHz channel. The first LTF sequence is not a high efficiency LTF sequence. The input/output interface is configured to send the PPDU over a first bandwidth, where the first bandwidth is greater than or equal to 160 MHz.

In a possible design, the input/output interface is configured to receive a PPDU from a first communication device over a first bandwidth. The first bandwidth is greater than or equal to 160 MHz. The processing circuit is configured to parse the received PPDU to obtain an LTF sequence included in the PPDU. A length of the LTF sequence is greater than or equal to a first length. The LTF sequence is generated based on a first LTF sequence. The first length is a length of an LTF sequence of a PPDU transmitted on a 160 MHz channel. The first LTF sequence is not a high efficiency LTF sequence.

According to an eighth aspect, this application provides a computer-readable storage medium. The computer-readable storage medium stores instructions. When the instructions are run on a computer, the computer is enabled to perform the PPDU transmission method according to any one of the foregoing aspects.

According to ninth aspect, this application provides a computer program product that includes instructions, and when the product is run on a computer, the computer is enabled to perform the PPDU transmission method in the foregoing aspect.

Embodiments of this application designs an LTF sequence applicable to channel estimation for a larger bandwidth such as 160 MHz, 240 MHz, and 320 MHz. This provides a basis for subsequent channel estimation, decrease a peak-to-average power ratio, and reduce a requirement for a linear power amplifier.

**BRIEF DESCRIPTION OF DRAWINGS**

To describe the technical solutions in embodiments of this application more clearly, the following briefly describes the accompanying drawings used for describing embodiments.

FIG. 1 is a schematic diagram of a frame structure of an HE PPDU;
FIG. 2 is a schematic diagram of an architecture of a wireless communication system according to an embodiment of this application;
FIG. 3a is a schematic diagram of a structure of an access point according to an embodiment of this application;
FIG. 3b is a schematic diagram of a structure of a station according to an embodiment of this application;
FIG. 4 is a schematic diagram of an 80 MHz tone plan (tone plan) in the 802.11be according to an embodiment of this application;
FIG. 5 is a schematic flowchart of a PPDU transmission method according to an embodiment of this application;
FIG. 6 is a schematic diagram of a structure of an EHT PPDU according to an embodiment of this application;
FIG. 7 is a schematic diagram of a structure of a communication apparatus according to an embodiment of this application; and
FIG. 8 is a schematic diagram of another structure of a communication apparatus according to an embodiment of this application.

**DESCRIPTION OF EMBODIMENTS**

The following clearly and completely describes the technical solutions in embodiments of this application with reference to the accompanying drawings in embodiments of this application.

For ease of understanding the technical solutions in embodiments of this application, the following briefly describes a system architecture of a PPDU transmission method provided in embodiments of this application. It may be understood that the system architecture described in embodiments of this application is intended to describe the technical solutions in embodiments of this application more clearly, and do not constitute any limitation on the technical solutions provided in embodiments of this application.

Embodiments of this application provide a PPDU transmission method, applied to a wireless communication system, to design an LTF sequence applicable to channel estimation for a larger bandwidth such as 160 MHz, 240 MHz, and 320 MHz. This provides a basis for subsequent channel estimation, decrease a peak-to-average power ratio, and reduce a requirement for a linear power amplifier. The wireless communication system may be a wireless local area network or a cellular network. The PPDU transmission method may be implemented by a communication device, or a chip or a processor in the communication device in the wireless communication system. The communication device may be an access point (access point, AP) device or a station (station, STA) device. Alternatively, the communication device may be a wireless communication device that supports concurrent transmission on a plurality of links. For example, the communication device may be referred to as a multi-link device or a multi-band device (multi-band device). Compared with a communication device that supports only single-link transmission, the multi-link device has higher transmission efficiency and a higher throughput.

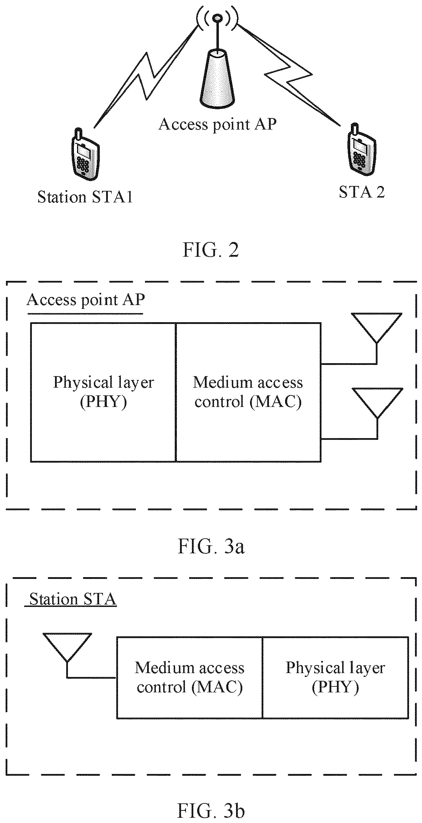

FIG. 2 is a schematic diagram of an architecture of a wireless communication system according to an embodiment of this application. As shown in FIG. 2, the wireless communication system may include one or more APs (for example, an AP in FIG. 2) and one or more STAs (for example, a STA 1 and a STA 2 in FIG. 2). The AP and the STA support a WLAN communication protocol. The communication protocol may include the IEEE 802.11be (or referred to as Wi-Fi 7, EHT protocol), and may further include protocols such as the IEEE 802.11ax and the IEEE 802.11ac. Certainly, the communication protocol may further include a next-generation protocol of IEEE 802.11be and the like with continuous evolution and development of communication technologies. A WLAN is used as an example. An apparatus for implementing the method in this application may be an AP or a STA in the WLAN, or a chip or a processing system disposed in the AP or the STA.

The access point (AP) is an apparatus having a wireless communication function, supports communication by using a WLAN protocol, has a function of communicating with another device (for example, a station or another access point) in a WLAN network, and certainly, may further have a function of communicating with another device. In a WLAN system, an access point may be referred to as an access point station (AP STA). The apparatus having the wireless communication function may be an entire device, or may be a chip or a processing system installed in the entire device. The device in which the chip or the processing system is disposed may implement the method and the function in embodiments of this application under control of the chip or the processing system. The AP in embodiments of this application is an apparatus providing a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

The station (for example, the STA 1 or the STA 2 in FIG. 2) is an apparatus having a wireless communication function, supports communication by using a WLAN protocol, and has a capability of communicating with another station or an access point in a WLAN network. In the WLAN system, a station may be referred to as a non-access point station (non-access point station, non-AP STA). For example, the STA is any user communication device that allows a user to communicate with an AP and further communicate with a WLAN. The apparatus having the wireless communication function may be an entire device, or may be a chip or a processing system installed in the entire device. The device in which the chip or the processing system is disposed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, an intelligent camera, a projector, a display, a television, a stereo, a refrigerator, or a washing machine) in a smart home, a node in the internet of things, an entertainment terminal (for example, an AR, a VR, or another wearable device), a smart device in smart office (for example, a printer, a projector, a loudspeaker, or a stereo), an internet of vehicle device in the internet of vehicle, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

Optionally, FIG. 2 is merely a schematic diagram. In addition to a scenario in which the AP communicates with one or more STAs, the PPDU transmission method provided in embodiments of this application may be further applied to a scenario in which the AP communicates with another AP, and is also applicable to a scenario in which a STA communicates with a STA.

Optionally, FIG. 3a is a schematic diagram of a structure of an access point according to an embodiment of this application. The AP may have a plurality of antennas, or may have a single antenna. In FIG. 3a, the AP includes a physical layer (physical layer, PHY) processing circuit and a medium access control (medium access control, MAC) processing circuit. The physical layer processing circuit may be configured to process a physical layer signal, and the MAC layer processing circuit may be configured to process a MAC layer signal. The 802.11 standard focuses on the PHY and MAC parts. FIG. 3b is a schematic diagram of a structure of a station according to an embodiment of this application. FIG. 3b is a schematic diagram of a structure of a STA with a single antenna. In an actual scenario, the STA may alternatively have a plurality of antennas, and may be a device with more than two antennas. In FIG. 3b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

1. 802.11be tone plan (tone plan)

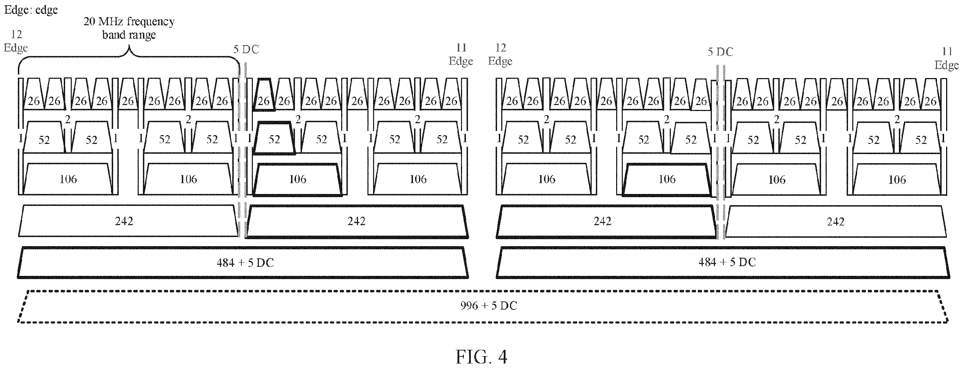

To meet users' requirements for an ultra-large bandwidth, an ultra-high transmission rate, and an extremely high throughput, the 802.11be expands a bandwidth from 160 MHz to 240 MHz and 320 MHz. 240 MHz may be obtained by directly combining subcarriers of three 802.11be 80 MHz. 320 MHz may be obtained by directly combining subcarriers of four 802.11be 80 MHz. FIG. 4 is a schematic diagram of an 80 MHz tone plan (tone plan) in the 802.11be according to an embodiment of this application. FIG. 4 shows an 80 MHz subcarrier design in the 802.11be. As shown in FIG. 4, the 80 MHz bandwidth in the 802.11be includes 36 resource units (resource units, RUs) 26, or includes 16 RU52, or includes 8 RU106, or includes 4 RU242, or includes 2 RU484 and 5 direct current subcarriers/null subcarriers, or includes 1 RU996 and 5 direct current subcarriers. It may be understood that the RU26 may be a resource unit including 26 subcarriers. It may be further understood that the 26 subcarriers may be contiguous or discontiguous. Similarly, the RU52 may be a resource unit including 52 subcarriers, the RU106 may be a resource unit including 106 subcarriers, the RU242 may be a resource unit including 242 subcarriers, and the like.

The following separately describes locations of different RUs in the 80 MHz bandwidth in the 802.11be.

(a) In the 80 MHz subcarrier design in FIG. 4, indices of data subcarriers and pilot subcarriers of an RU26 are shown in the following Table 1. One RU26 includes 11 data subcarriers and 15 pilot subcarriers.

**Table 1: Indices of data subcarriers and pilot subcarriers of an RU26**

| | Locations of a 1st RU26 to an 18th RU26 | | Locations of a 19th RU26 to a 36th RU26 | | Pilot location |
|---|---|---|---|---|---|
| 26-tone RU | [-499 | -474] | [13 | 38] | {-494 -480}, {-468 -454}, {-440 -426}, {-414 -400}, {-386, -372}, {-360 -346}, {-334 -320}, {-306 -292}, {-280 -266}, {-246 -232}, {-220, -206}, {-192 -178}, {-166 -152}, {-140 -126}, {-112 -98}, {-86 -72}, {-58 -44}, {-32 -18}, {18 32}, {44 58}, {72 86}, {98 112}, {126 140}, {152 166}, {178 192}, {206 220}, {232 246}, 5DC, {266 280}, {292 306}, {320 334}, {346 360}, {372 386}, {400 414}, {426 440}, {454 468}, {480 494} |
| | [-473 | -448] | [39 | 64] | |
| | [-445 | -420] | [67 | 92] | |
| | [-419 | -394] | [93 | 118] | |
| | [-392 | -367] | [120 | 145] | |
| | [-365 | -340] | [147 | 172] | |
| | [-339 | -314] | [173 | 198] | |
| | [-311 | -286] | [201 | 226] | |
| | [-285 | -260] | [227 | 252] | |
| | [-252 | -227] | [260 | 285] | |
| | [-226 | -201] | [286 | 311] | |
| | [-198 | -173] | [314 | 339] | |
| | [-172 | -147] | [340 | 365] | |
| | [-145 | -120] | [367 | 392] | |
| | [-118 | -93] | [394 | 419] | |
| | [-92 | -67] | [420 | 445] | |
| | [-64 | -39] | [448 | 473] | |
| | [-38 | -13] | [474 | 499] | |

Each row in a second column and a third column in Table 1 indicates one RU26. For example, a last row in the second column indicates an 18th RU26 [-38 -13], and locations of the 18th RU26 are subcarriers numbered -38 to -13. For another example, a fifth row in the third column indicates a 23rd RU26 [120 145], and locations of the 23rd RU26 are subcarriers numbered 120 to 145. A fourth column in Table 1 sequentially indicates pilot subcarrier indices for corresponding 26-tone RUs. For example, the 1st 26-tone RU includes a subcarrier numbered -499 to a subcarrier numbered -474, where pilot subcarriers are a subcarrier numbered -494 to a subcarrier numbered -480. For another example, the 2nd 26-tone RU includes a subcarrier numbered -473 to a subcarrier numbered -448, where pilot subcarriers are subcarriers numbered -468 to -454. For another example, the 36th 26-tone RU includes a subcarrier numbered 474 to a subcarrier numbered 499, where pilot subcarriers are subcarriers numbered 480 to 494. It may be understood that a 26-tone RU and the RU26 may be used interchangeably.

(b) In the 80 MHz subcarrier design in FIG. 4, indices of data subcarriers and pilot subcarriers of an RU52 are shown in the following Table 2. One RU52 includes 48 data subcarriers and 4 pilot subcarriers.

**Table 2: Indices of data subcarriers and pilot subcarriers of an RU52**

| | Locations of a 1st RU52 to a 16th RU26 | | Pilot location |
|---|---|---|---|
| 52-tone RU | [-499 | -448] | {-494, -480, -468, -454}, {-440, -426, -414,-400}, {-360, -346, -334, -320}, {-306, -292, - 280, -266}, {-246, -232, -220, -206}, {-192, - 178, -166, -152}, {-112, -98, -86, -72}, {-58, -44, -32, -18}, {18, 32, 44, 58}, {72, 86, 98, 112}, {152, 166, 178, 192}, {206, 220, 232, 246}, {266, 280, 292, 306}, {320, 334, 346, 360}, {400, 414, 426, 440}, {454, 468, 480, 494}. |
| | [-445 | -394] | |
| | [-365 | -314] | |
| | [-311 | -260] | |
| | [-252 | -201] | |
| | [-198 | -147] | |
| | [-118 | -67] | |
| | [-64 | -13] | |
| | [13 | 64] | |
| | [67 | 118] | |
| | [147 | 198] | |
| | [201 | 252] | |
| | [260 | 311] | |
| | [314 | 365] | |
| | [394 | 445] | |
| | [448 | 499] | |

Each row in the second column in Table 2 indicates one RU. For example, a first row in a second column indicates a 1st RU52 [-38 -13], and locations of the 1st RU52 are a subcarrier numbered -499 to a subcarrier numbered -448. A third column in Table 2 sequentially indicates pilot subcarrier indices for corresponding 52-tone RUs. For example, the 2nd 52-tone RU includes subcarriers numbered -445 to -394, where pilot subcarriers are subcarriers numbered -440, -426, -414, and -400. It may be understood that a 52-tone RU and the RU52 may be used interchangeably.

It should be understood that, the following table describes same meanings, which are not repeated below.

(c) In the 80 MHz subcarrier design in FIG. 4, indices of data subcarriers and pilot subcarriers of an RU106 are shown in the following Table 3. One RU106 includes 102 data subcarriers and 4 pilot subcarriers. It may be understood that a 106-tone RU and the RU106 may be used interchangeably.

**Table 3: Indices of data subcarriers and pilot subcarriers of an RU106**

| | Locations of a 1st RU106 to an 8th RU106 | | Pilot location |
|---|---|---|---|
| 106-tone RU | [-499 | -394] | {-494, -468, -426, -400}, {-360, -334, -292, -266}, {-246,-220,-178,-152}, {-112,-86,-44,-18}, {18, 44, 86, 112}, {152, 178, 220, 246}, {266, 292, 334, 360}, {400, 426, 468, 494} |
| | [-365 | -260] | |
| | [-252 | -147] | |
| | [-118 | -13] | |
| | [13 | 118] | |
| | [147 | 252] | |
| | [260 | 365] | |
| | [394 | 499] | |

(d) In the 80 MHz subcarrier design in FIG. 4, indices of data subcarriers and pilot subcarriers of an RU242 are shown in the following Table 4. One RU242 includes 234 data subcarriers and 8 pilot subcarriers. It may be understood that a 242-tone RU and the RU242 may be used interchangeably.

**Table 4: Indices of data subcarriers and pilot subcarriers of an RU242**

| | Locations of a 1st RU242 to a 4th RU26 | | Pilot location |
|---|---|---|---|
| 242-tone RU | [-500 | -259] | {-494, -468, -426, -400, -360, -334, -292, -266}, {-246, - 220, -178, -152, -112, -86, -44, -18}, {18, 44, 86, 112, 152, 178, 220, 246}, {266, 292, 334, 360, 400, 426, 468, 494} |
| | [-253 | -12] | |
| | [12 | 253] | |
| | [259 | 500] | |

(e) In the 80 MHz subcarrier design in FIG. 4, indices of data subcarriers and pilot subcarriers of an RU484 are shown in the following Table 5. A 484-tone RU and the RU484 may be used interchangeably. It may be understood that an 80 MHz 484-tone RU in the 802.11ax is an RU composed of 484 consecutive subcarriers. An 80 MHz 484-tone RU in the 802.11be is composed of 468 data subcarriers and 16 pilot subcarriers, and there are 5 direct current subcarriers or null subcarriers in the middle. For example, in the 1st 484-tone RU, subcarriers are numbered from -500 to -12. The 5 direct current subcarriers are numbered -258, -257, -256, -255, and -254. The 16 pilot subcarriers are numbered -494, -468, -426, -400, -360, -334, -292, -266, -246, -220, -178, -152, -112, -86, -44, and -18.

**Table 5: Indices of data subcarriers and pilot subcarriers of an RU484**

| | Locations of a 1st RU484 to a 2nd RU484 | | Pilot location |
|---|---|---|---|
| 484-tone RU | [-500 | -259 | {-494, -468, -426, -400, -360, -334, -292, -266, -246, - 220, -178, -152, -112, -86, -44. -18}, {18, 44, 86, 112, 152, 178, 220, 246, 266, 292, 334, 360, 400, 426, 468, 494} |
| | -253 | -12] | |
| | [12 | 253 | |
| | 259 | 500] | |

(1) In the 80 MHz subcarrier design in FIG. 4, indices of data subcarriers and pilot subcarriers of an RU996 are shown in the following Table 6. A 996-tone RU and the RU996 may be used interchangeably. An 80 MHz 996-tone RU in the 802.11be is composed of 980 data subcarriers and 16 pilot subcarriers, and there are 5 direct current subcarriers in the middle. For example, in the 1st 996-tone RU, subcarriers are numbered -500 to 500, and the 5 direct current subcarriers are numbered -2, -1, 0, 1, and 2. The 16 pilot subcarriers are numbered -468, -400, -334, -266, -220, -152, -86, -18, +18, +86, +152, +220 +266, +334, +400, and +468.

**Table 6: Indices of data subcarriers and pilot subcarriers of an RU996**

| | Locations of a RU996 | Pilot location |
|---|---|---|
| 996-tone RU | [-500 -3 | {-468, -400, -334, -266, -220, -152, -86, -18, +18, +86, +152, +220, +266, +334, +400, +468} |
| | 3 500] | |

Optionally, an LTF sequence included in a PPDU provided in this embodiment of this application is used in a 240 MHz bandwidth and a 320 MHz bandwidth. The 240 MHz bandwidth and the 320 MHz bandwidth may be constructed by using the 80 MHz tone plan shown in FIG. 4. A 160 MHz subcarrier is designed based on two 80 MHz, namely, [RU subcarrier index in 80 MHz, pilot location subcarrier index in 80 MHz] - 512: [RU subcarrier index in 80 MHz, pilot location subcarrier index in 80 MHz] + 512. Similarly, a 240 MHz subcarrier is designed based on three 80 MHz. A 320 MHz subcarrier is designed based on two 160 MHz, namely, [Pilot indices in 160 MHz/pilot indices in 160 MHz] - 1024: [Pilot indices in 160 MHz/pilot indices in 160 MHz] + 1024.

2. Puncturing patterns of 240 MHz and puncturing patterns of 320 MHz

The 240 MHz bandwidth and the 320 MHz bandwidth used in the 802.11be support preamble puncturing transmission. Therefore, there are a plurality of puncturing patterns/preamble puncturing patterns in the 240 MHz bandwidth and the 320 MHz bandwidth. A bitmap (bitmap) indicates a puncturing pattern. Each bit indicates whether one 20 MHz is punctured. For example, "0" indicates that a 20 MHz corresponding to the bit is punctured, and "1" indicates that a 20 MHz corresponding to the bit is not punctured. Optionally, bits from left to right sequentially correspond to the 20 MHz with channel frequencies from low to high.

The following separately describes puncturing patterns in the 240 MHz bandwidth and the 320 MHz bandwidth.

2-1. Puncturing patterns of 240 MHz

Pattern 1: [1 1 1 1 1 1 1 1 1 1 1 1], corresponding to a channel bandwidth of 240 MHz and 4096 subcarriers.
Pattern 2: [0 0 1 1 1 1 1 1 1 1 1 1], corresponding to an available channel bandwidth of 200 MHz.
Pattern 3: [1 1 0 0 1 1 1 1 1 1 1 1], corresponding to an available channel bandwidth of 200 MHz.
Pattern 4: [1 1 1 1 0 0 1 1 1 1 1 1], corresponding to an available channel bandwidth of 200 MHz.
Pattern 5: [1 1 1 1 1 1 0 0 1 1 1 1], corresponding to an available channel bandwidth of 200 MHz.
Pattern 6: [1 1 1 1 1 1 1 1 0 0 1 1], corresponding to an available channel bandwidth of 200 MHz.
Pattern 7: [1 1 1 1 1 1 1 1 1 1 0 0], corresponding to an available channel bandwidth of 200 MHz.
Pattern 8: [0 0 0 0 1 1 1 1 1 1 1 1], corresponding to an available channel bandwidth of 160 MHz.
Pattern 9: [1 1 1 1 0 0 0 0 1 1 1 1], corresponding to an available channel bandwidth of 160 MHz.
Pattern 10: [1 1 1 1 1 1 1 1 0 0 0 0], corresponding to an available channel bandwidth of 160 MHz.

2-2. Puncturing patterns of 320 MHz

Specifically, the puncturing patterns of 320 MHz may be classified into two types: a channel puncturing pattern compatible with 240 MHz, and a channel puncturing pattern incompatible with 240 MHz. "Compatible" means: After 240 MHz is formed by puncturing on 320 MHz, puncturing is further performed based on the 240 MHz formed by puncturing. In other words, puncturing is continued on the 240 MHz formed by puncturing.

A. 320 MHz channel bandwidth puncturing patterns that are compatible with 240 MHz

Pattern 1a: [1 1 1 1 1 1 1 1 1 1 1 1 1 1 1 1], corresponding to a channel bandwidth of 320 MHz and 4096 subcarriers.

Pattern 2a: [0 0 1 1 1 1 1 1 1 1 1 1 1 1 1 1], corresponding to an available channel bandwidth of 280 MHz.

Pattern 3a: [1 1 0 0 1 1 1 1 1 1 1 1 1 1 1 1], corresponding to an available channel bandwidth of 280 MHz.

Pattern 4a: [1 1 1 1 0 0 1 1 1 1 1 1 1 1 1 1], corresponding to an available channel bandwidth of 280 MHz.

Pattern 5a: [1 1 1 1 1 1 0 0 1 1 1 1 1 1 1 1], corresponding to an available channel bandwidth of 280 MHz.

Pattern 6a: [1 1 1 1 1 1 1 1 0 0 1 1 1 1 1 1], corresponding to an available channel bandwidth of 280 MHz.

Pattern 7a: [1 1 1 1 1 1 1 1 1 1 0 0 1 1 1 1], corresponding to an available channel bandwidth of 280 MHz.

Pattern 8a: [1 1 1 1 1 1 1 1 1 1 1 1 0 0 1 1], corresponding to an available channel bandwidth of 280 MHz.

Pattern 9a: [1 1 1 1 1 1 1 1 1 1 1 1 1 1 0 0], corresponding to an available channel bandwidth of 280 MHz.

Pattern 10a: [1 1 1 1 0 0 0 0 1 1 1 1 1 1 1 1], corresponding to an available channel bandwidth of 240 MHz.

Pattern 11a: [1 1 1 1 1 1 1 1 0 0 0 0 1 1 1 1], corresponding to an available channel bandwidth of 240 MHz.

Pattern 12a: [1 1 1 1 1 1 1 1 1 1 1 1 0 0 0 0], corresponding to an available channel bandwidth of 240 MHz.

Pattern 13a: [0 0 0 0 1 1 1 1 1 1 1 1 1 1 1 1], corresponding to an available channel bandwidth of 240 MHz.

Optionally, puncturing is further performed based on the available channel bandwidth of 240 MHz formed in the pattern 10a to obtain puncturing patterns 14a to 22a:

Pattern 14a: [0 0 1 1 0 0 0 0 1 1 1 1 1 1 1 1], corresponding to an available channel bandwidth of 200 MHz.

Pattern 15a: [1 1 0 0 0 0 0 0 1 1 1 1 1 1 1 1], corresponding to an available channel bandwidth of 200 MHz.

Pattern 16a: [1 1 1 10 0 0 0 0 1 1 1 1 1 1], corresponding to an available channel bandwidth of 200 MHz.

Pattern 17a: [1 1 1 1 0 0 0 0 1 1 0 0 1 1 1 1], corresponding to an available channel bandwidth of 200 MHz.

Pattern 18a: [1 1 1 1 0 0 0 0 1 1 1 1 0 0 1 1], corresponding to an available channel bandwidth of 200 MHz.

Pattern 19a: [1 1 1 1 0 0 0 0 1 1 1 1 1 1 0 0], corresponding to an available channel bandwidth of 200 MHz.

Pattern 20a: [0 0 0 0 0 0 0 0 1 1 1 1 1 1 1 1], corresponding to an available channel bandwidth of 160 MHz.

Pattern 21a: [1 1 1 1 0 0 0 0 0 0 0 0 1 1 1 1], corresponding to an available channel bandwidth of 160 MHz.

Pattern 22a: [1 1 1 1 0 0 0 0 1 1 1 1 0 0 0 0], corresponding to an available channel bandwidth of 160 MHz.

Optionally, puncturing is further performed based on the available channel bandwidth of 240 MHz formed in the pattern 11a to obtain puncturing patterns 23a to 31a:

Pattern 23a: [0 0 1 1 1 1 1 1 0 0 0 0 1 1 1 1], corresponding to an available channel bandwidth of 200 MHz.

Pattern 24a: [1 1 0 0 1 1 1 1 0 0 0 0 1 1 1 1], corresponding to an available channel bandwidth of 200 MHz.

Pattern 25a: [1 1 1 1 0 0 1 1 0 0 0 0 1 1 1 1], corresponding to an available channel bandwidth of 200 MHz.

Pattern 26a: [1 1 1 1 1 1 0 0 0 0 0 0 1 1 1 1], corresponding to an available channel bandwidth of 200 MHz.

Pattern 27a: [1 1 1 1 1 1 1 1 0 0 0 0 0 0 1 1], corresponding to an available channel bandwidth of 200 MHz.

Pattern 28a: [1 1 1 1 1 1 1 1 0 0 0 0 1 1 0 0], corresponding to an available channel bandwidth of 200 MHz.

Pattern 29a: [0 0 0 0 1 1 1 1 0 0 0 0 1 1 1 1], corresponding to an available channel bandwidth of 160 MHz.

Pattern 30a: [1 1 1 1 0 0 0 0 0 0 0 0 1 1 1 1], corresponding to an available channel bandwidth of 160 MHz.

Pattern 31a: [1 1 1 1 1 1 1 1 0 0 0 0 0 0 0 0], corresponding to an available channel bandwidth of 160 MHz.

Optionally, puncturing is further performed based on the available channel bandwidth of 240 MHz formed in the pattern 12a to obtain puncturing patterns 32a to 40a:

Pattern 32a: [0 0 1 1 1 1 1 1 1 1 1 1 0 0 0 0], corresponding to an available channel bandwidth of 200 MHz.

Pattern 33a: [1 1 0 0 1 1 1 1 1 1 1 1 0 0 0 0], corresponding to an available channel bandwidth of 200 MHz.

Pattern 34a: [1 1 1 1 0 0 1 1 1 1 1 1 0 0 0 0], corresponding to an available channel bandwidth of 200 MHz.

Pattern 35a: [1 1 1 1 1 1 0 0 1 1 1 1 0 0 0 0], corresponding to an available channel bandwidth of 200 MHz.

Pattern 36a: [1 1 1 1 1 1 1 1 0 0 1 1 0 0 0 0], corresponding to an available channel bandwidth of 200 MHz.

Pattern 37a: [1 1 1 1 1 1 1 1 1 1 0 0 0 0 0 0], corresponding to an available channel bandwidth of 200 MHz.

Pattern 38a: [0 0 0 0 1 1 1 1 1 1 1 1 0 0 0 0], corresponding to an available channel bandwidth of 160 MHz.

Pattern 39a: [1 1 1 1 0 0 0 0 1 1 1 10 0 0 0], corresponding to an available channel bandwidth of 160 MHz.

Pattern 40a: [1 1 1 1 1 1 1 1 0 0 0 0 0 0 0 0], corresponding to an available channel bandwidth of 160 MHz.

Optionally, puncturing is further performed based on the available channel bandwidth of 240 MHz formed in the pattern 13a to obtain puncturing patterns 41a to 49a:

Pattern 41a: [0 0 0 0 0 0 1 1 1 1 1 1 1 1 1 1], corresponding to an available channel bandwidth of 200 MHz.
Pattern 42a: [0 0 0 0 1 1 0 0 1 1 1 1 1 1 1 1], corresponding to an available channel bandwidth of 200 MHz.
Pattern 43a: [0 0 0 0 1 1 1 1 0 0 1 1 1 1 1 1], corresponding to an available channel bandwidth of 200 MHz.
Pattern 44a: [0 0 0 0 1 1 1 1 1 1 0 0 1 1 1 1], corresponding to an available channel bandwidth of 200 MHz.
Pattern 45a: [0 0 0 0 1 1 1 1 1 1 1 1 0 0 1 1], corresponding to an available channel bandwidth of 200 MHz.
Pattern 46a: [0 0 0 0 1 1 1 1 1 1 1 1 1 1 0 0], corresponding to an available channel bandwidth of 200 MHz.
Pattern 47a: [0 0 0 0 0 0 0 0 1 1 1 1 1 1 1 1], corresponding to an available channel bandwidth of 160 MHz.
Pattern 48a: [0 0 0 0 1 1 1 1 0 0 0 0 1 1 1 1], corresponding to an available channel bandwidth of 160 MHz.
Pattern 49a: [0 0 0 0 1 1 1 1 1 1 1 1 0 0 0 0], corresponding to an available channel bandwidth of 160 MHz.

B. 320 MHz channel bandwidth puncturing patterns that are incompatible with 240 MHz

Specifically, 320 MHz channel bandwidth puncturing patterns that are incompatible with 240 MHz are the same as the patterns 1a to 13a. Details are not described herein again.

3. Multi-RU combination for 240 MHz and multi-RU combination for 320 MHz

3-1. A multi-RU combination manner for 240 MHz includes but is not limited to one or more of the following: RU26, RU52, RU26+RU52, RU106, RU26+RU106, RU242, RU484, RU242+RU484, RU996, RU484+RU996, RU242+RU484+RU996, RU484+2*RU996, 3*RU996, 2*RU996.
3-2. A multi-RU combination manner for 320 MHz includes but is not limited to one or more of the following: RU26, RU52, RU26+RU52, RU106, RU26+RU106, RU242, RU484, RU242+RU484, RU996, RU484+RU996, RU242+RU484+RU996, RU484+2*RU996, 2*RU996, 3*RU996, 3*RU996+RU484, 4*RU996.

It may be understood that 2*RU996 may mean two RU996, or may be indicated as RU2*996. Similarly, 3*RU996 may also be indicated as RU3*996, and 4*RU996 may also be indicated as RU4*996. RUA+RUB is equivalent to RUB+RUA, and means combination of RUA and RUB. For example, RU484+RU996 means combination of an RU484 and an RU996. For another example, RU242+RU484+RU996 means combination of an RU242, an RU484, and an RU996. For another example, RU484+2*RU996 means combination of an RU484 and two RU996.
It may be further understood that multi-RU combination means allocating a plurality of RUs to one STA. Each RU still uses data subcarrier locations and pilot subcarrier locations of the RU. For example, for RU26+RU52, an RU26 uses its own data subcarrier locations and pilot locations, and an RU52 uses its own data subcarrier locations and pilot locations.
Optionally, for a 2xLTF sequence/4xLTF sequence in a 240 MHz bandwidth, considered multi-RU combination manners include those shown in Table 7. It may be understood that the 2xLTF sequence is an LTF sequence whose subcarrier spacing is $\Delta_F^{2x} = 20MHz/128 = 156.25kHz$ , and the 4xLTF sequence is an LTF sequence whose subcarrier spacing is $\Delta_F^{4x} = 20MHz/256 = 78.125kHz$ .

**Table 7: Multi-RU combination manners considered for a 2xLTF sequence/4xLTF sequence in a 240 MHz bandwidth**

| | RU26 | RU52 | RU26+RU52 | RU106 | RU26+RU106 | RU242 | RU484 | RU242+RU484 | RU996 | RLJ484+RU996 | 2*RU996 | RU484+2*RU996 | 3*RU996 |
|---|---|---|---|---|---|---|---|---|---|---|---|---|---|
| Manner | 36*3 | 16*3 | 4*3 | 8*3 | 4*3 | 4*3 | 2*3 | 4*3 | 1*3 | 8 | 3 | 6 | 1 |

RU26+RU52 has a fixed combination manner in Table 7. There are four fixed combination manners for each 80 MHz. Therefore, RU26+RU52 in 240 MHz has 4 * 3 = 12 combination manners, which are specifically as follows:

a 1st RU26+RU52: an 8th RU26 and a 3rd RU52;
a 2nd RU26+RU52: an 11th RU26 and a 6th RU52;
a 3rd RU26+RU52: a 26th RU26 and an 11th RU52;
a 4th RU26+RU52: a 29th RU26 and a 14th RU52.
a 5th RU26+RU52: a 44th RU26 and a 19th RU52;
a 6th RU26+RU52: a 47th RU26 and a 22nd RU52;
a 7th RU26+RU52: a 62nd RU26 and a 27th RU52;
an 8th RU26+RU52: a 65th RU26 and a 30th RU52;
a 9th RU26+RU52: an 80th RU26 and a 35th RU52;
a 10th RU26+RU52: an 83rd RU26 and a 38th RU52;
an 11th RU26+RU52: a 98th RU26 and a 43rd RU52; and
a 12th RU26+RU52: a 101st RU26 and a 46th RU52.

It may be understood that each 80 MHz includes 36 26-tone RUs (or RU26). Sequence numbers of the 36 RU26 are in ascending order, and corresponding frequencies are also in ascending order. As shown in FIG. 4, the 36 RU26 are sequentially indicated as a 1st RU26, a 2nd RU26, .., and a 36th RU26 from left to right (from a low frequency to a high frequency). Similarly, 52-tone RU (or RU52), 106-tone RU (RU106), 242-tone RU (or RU242), 484-tone RU (or RU484), and 996-tone RU (or RU996) are numbered in ascending order, and corresponding frequencies are also numbered in ascending order. The 240 MHz may be formed by combining three 80 MHz, which is sequentially indicated as a 1st RU26, a 2nd RU26, ..., and a 108th RU26 from left to right (from a low frequency to a high frequency). To be specific, RU26 included in a first 80 MHz within the 240 MHz are sequentially indicated as the 1st RU26, the 2nd RU26, ..., the 36th RU26; RU26 included in a 2nd 80 MHz within 240 MHz are sequentially indicated as the 37th RU26, the 38th RU26, ..., and the 72nd RU26; and RU26 included in a 3rd 80 MHz within the 240 MHz are sequentially indicated as the 73rd RU26, the 78th RU26, ..., and the 108th RU26.

RU26+RU106 has a fixed combination manner in Table 7. There are also four fixed combination manners for each 80 MHz. Therefore, RU26+RU106 in 240 MHz has 4 * 3 = 12 combination manners, which are specifically as follows:

a 1st RU26+RU106: a 5th RU26 and a 1st RU106;
a 2nd RU26+RU106: a 14th RU26 and a 4th RU106;
a 3rd RU26+RU106: a 23rd RU26 and a 5th RU106;
a 4th RU26+RU106: a 32nd RU26 and an 8th RU106;
a 5th RU26+RU106: a 41st RU26 and a 9th RU106;
a 6th RU26+RU106: a 50th RU26 and a 12th RU106;
a 7th RU26+RU106: a 59th RU26 and a 13th RU106;
an 8th RU26+RU106: a 68th RU26 and a 16th RU106;
a 9th RU26+RU106: a 77th RU26 and a 17th RU106;
a 10th RU26+RU106: an 86th RU26 and a 20th RU106;
an 11th RU26+RU106: a 95th RU26 and a 21st RU106; and
a 12th RU26+RU106: a 104th RU26 and a 24th RU106.

It may be understood that, both an Xth RU26 and a Yth RU106 are indicated by being sequentially numbered from left to right (from a low frequency to a high frequency).

RU242+RU484 has a fixed combination manner in Table 7. There are also four fixed combination manners for each 80 MHz. Therefore, RU242+RU484 in 240 MHz has 4 * 3 = 12 combination manners, which are specifically as follows:

a 1st RU242+RU484: a 1st RU242 and a 2nd RU484;
a 2nd RU242+RU484: a 2nd RU242 and a 2nd RU484;
a 3rd RU242+RU484: a 3rd RU242 and a 1st RU484;
a 4th RU242+RU484: a 4th RU242 and a 1st RU484;
a 5th RU242+RU484: a 5th RU242 and a 4th RU484;
a 6th RU242+RU484: a 6th RU242 and a 4th RU484;
a 7th RU242+RU484: a 7th RU242 and a 3rd RU484;
an 8th RU242+RU484: an 8th RU242 and a 3rd RU484;
a 9th RU242+RU484: a 9th RU242 and a 6th RU484;
a 10th RU242+RU484: a 10th RU242 and a 6th RU484;

an 11<sup>th</sup> RU242+RU484: an 11<sup>th</sup> RU242 and a 5<sup>th</sup> RU484; and
a 12<sup>th</sup> RU242+RU484: a 12<sup>th</sup> RU242 and a 5<sup>th</sup> RU484.

It may be understood that, both a $Z^{th}$ RU242 and an $X^{th}$ RU484 are indicated by being sequentially numbered from left to right (from a low frequency to a high frequency).

Optionally, for a 2xLTF sequence/4xLTF sequence in a 320 MHz bandwidth, considered multi-RU combination manners include those shown in Table 8.

**Table 8: Multi-RU combination manners considered for a 2xLTF sequence/4xLTF sequence in a 320 MHz bandwidth**

| RU size | RU26 | RU52 | RU26+RU52 | RU106 | RU26+RU106 | RU242 | RU484 | RU242+RU484 | RU996 | RLJ484+RU996 | 2*RU996 | RU484+2*RU996 | 3*RU996 | 3*RU996+RU484 | 4*RU996 |
|---|---|---|---|---|---|---|---|---|---|---|---|---|---|---|---|
| Manner 1 | 36*4 | 16*4 | 4*4 | 8*4 | 4*4 | 4*4 | 2*4 | 4*4 | 1*4 | 4*2 | 2 | Not considered | 4 | 8 | 1 |
| Manner 2 | 36*4 | 16*4 | 4*4 | 8*4 | 4*4 | 4*4 | 2*4 | 4*4 | 1*4 | 4*2 | 2 | 24 | 4 | 8 | 1 |
| Manner 3 | 36*4 | 16*4 | 4*4 | 8*4 | 4*4 | 4*4 | 2*4 | 4*4 | 1*4 | 4*2 | 3*4 | 24 | 4 | 8 | 1 |

The manner 1 in Table 8 is a pattern of puncturing and multi-RU combination in a full 320 MHz bandwidth. Specifically, 240 MHz transmission by puncturing of a 320 MHz PPDU is not considered in the manner 1. In other words, during sequence design, a pattern of puncturing and multi-RU combination in a full bandwidth of a 320 MHz or 160+160 MHz PPDU is mainly considered.

RU26+RU52 has a fixed combination manner in Table 8. There are four fixed combination manners for each 80 MHz. Therefore, RU26+RU52 in 320 MHz has 4 * 4 = 16 combination manners. First twelve combination manners for RU26+RU52 in 320 MHz are the same as those of the 1st RU26+RU52 to the 12th RU26+RU52 in 240 MHz. Details are not described herein again. Last four combination manners for RU26+RU52 in 320 MHz are specifically as follows:

a 13th RU26+RU52: a 116th RU26 and a 51st RU52;
a 14th RU26+RU52: a 119th RU26 and a 54th RU52;
a 15th RU26+RU52: a 134th RU26 and a 59th RU52; and
a 16th RU26+RU52: a 137th RU26 and a 62nd RU52.

RU26+RU106 has a fixed combination manner in Table 8. There are four fixed combination manners for each 80 MHz. Therefore, RU26+RU106 in 320 MHz has 4 * 4 = 16 combination manners. First twelve combination manners for RU26+RU106 in 320 MHz are the same as those of the 1st RU26+RU106 to the 12th RU26+RU106 in 240 MHz. Details are not described herein again. Last four combination manners for RU26+RU106 in 320 MHz are specifically as follows:

a 13th RU26+RU106: a 113th RU26 and a 25th RU106;
a 14th RU26+RU106: a 122nd RU26 and a 28th RU106;
a 15th RU26+RU106: a 131st RU26 and a 29th RU106; and
a 16th RU26+RU106: a 140th RU26 and a 32nd RU106.

RU242+RU484 has a fixed combination manner in Table 8. There are four fixed combination manners for each 80 MHz. Therefore, RU242+RU484 in 320 MHz has 4 * 4 = 16 combination manners. First twelve combination manners for RU242+RU484 in 320 MHz are the same as those of the 1st RU242+RU484 to the 12th RU242+RU484 in 240 MHz. Details are not described herein again. Last four combination manners for RU484+RU484 in 320 MHz are specifically as follows:

a 13th RU242+RU484: a 13th RU242 and an 8th RU484;
a 14th RU242+RU484: a 14th RU242 and an 8th RU484;
a 15th RU242+RU484: a 15th RU242 and a 7th RU484; and
a 16th RU242+RU484: a 16th RU242 and a 7th RU484.

RU484+RU996 has a fixed combination manner in Table 8. There are separately four fixed combination manners for primary 160 MHz and secondary 160 MHz. Therefore, there are 4*2=8 combination manners in 320 MHz, which are specifically as follows:

a 1st RU484+RU996: a 2nd RU484 and a 2nd RU996;
a 2nd RU484+RU996: a 1st RU484 and a 2nd RU996;
a 3rd RU484+RU996: a 4th RU484 and a 1st RU996;
a 4th RU484+RU996: a 3rd RU484 and a 1st RU996;
a 5th RU484+RU996: a 6th RU484 and a 4th RU996;
a 6th RU484+RU996: a 5th RU484 and a 4th RU996;
a 7th RU484+RU996: an 8th RU484 and a 3rd RU996; and
an 8th RU484+RU996: a 7th RU484 and a 3rd RU996.

2*RU996 covers two cases of primary 160 MHz or secondary 160 MHz. The details are as follows:

a 1st 2*RU996: a 1st RU996 and a 2nd RU996; and
a 2nd 2*RU996: a 3rd RU996 and a 4th RU996.

3*RU996 means combination manners of any three of four RU996. The details are as follows:

a 1st RU3*996: a 1st RU996, a 3rd RU996, and a 4th RU996;
a 2nd RU3*996: a 1st RU996, a 2nd RU996, and a 4th RU996;

a 3rd RU3*996: a 1st RU996, a 2nd RU996, and a 3rd RU996; and
a 4th RU3*996: a 2nd RU996, a 3rd RU996, and a 4th RU996.

3*RU996+RU484 means a combination manner that does not include one RU484. The details are as follows:

a 1st RU3*996+RU484: a 2nd RU484, a 2nd RU996, a 3rd RU996, and a 4th RU996;
a 2nd RU3*996+RU484: a 1st RU484, a 2nd RU996, a 3rd RU996, and a 4th RU996;
a 3rd RU3*996+RU484: a 1st RU996, a 4th RU484, a 3rd RU996, and a 4th RU996;
a 4th RU3*996+RU484: a 1st RU996, a 3rd RU484, a 3rd RU996, and a 4th RU996;
a 5th RU3*996+RU484: a 1st RU996, a 2nd RU996, a 6th RU484, and a 4th RU996;
a 6th RU3*996+RU484: a 1st RU996, a 2nd RU996, a 5th RU484, and a 4th RU996;
a 7th RU3*996+RU484: a 1st RU996, a 2nd RU996, a 3rd RU996, and an 8th RU484; and
an 8th RU3*996+RU484: a 1st RU996, a 2nd RU996, a 3rd RU996, and a 7th RU484.

Optionally, the manner 2 in Table 8 includes a part of cases in which 240 MHz puncturing is compatible in a full 320 MHz bandwidth. This is equivalent to 2*RU996+RU484 formed after any 80 MHz within 320 MHz is punctured or not considered and one RU484 in remaining three RU996 is also punctured or not considered (to be specific, is further punctured in an available channel bandwidth of 240 MHz). A puncturing scenario is similar to patterns 14a to 49a (24 in total) in a scenario A in the puncturing patterns of 320 MHz.

Optionally, the manner 3 in Table 8 includes all cases in which multi-RU combination and puncturing that are compatible with 240 MHz in a full 320 MHz bandwidth. This is equivalent to 2*RU996+RU484 formed after any 80 MHz within 320 MHz is punctured or not considered and one RU484 in remaining three RU996 is also punctured or not considered (to be specific, is further punctured in an available channel bandwidth of 240 MHz). A puncturing scenario is similar to patterns 14a to 49a in a scenario A in the puncturing patterns of 320 MHz. Compared with the manner 2, the manner 3 considers a puncturing scenario compatible with 240 MHz. Therefore, 2*RU996 changes from 2 cases to 3 * 4 = 12 cases.

The foregoing describes content related to the embodiments of this application. The following describes in detail a PPDU transmission method provided in embodiments of this application with reference to more accompanying drawings. In embodiments of this application, the method is described by using a first communication device and a second communication device. It may be understood that the first communication device may be an AP or a STA (for example, the AP or the STA shown in FIG. 2), and the second communication device may also be an AP or a STA (for example, the AP or the STA shown in FIG. 2).

Embodiments of this application provide a plurality of possible LTF sequences. Some LTF sequences have smallest peak-to-average power ratio (peak-to-average power ratio, PAPR) values in the full 320 MHz bandwidth. Some LTF sequences have smallest maximum PAPR values based on comprehensive consideration of the full 320 MHz bandwidth and a plurality of puncturing patterns, and therefore they have optimal comprehensive performance in the full 320 MHz bandwidth and the plurality of puncturing patterns. Some LTF sequences comprehensively consider PAPR values of the full 320 MHz bandwidth, a plurality of puncturing patterns, and a plurality of RU combinations, and therefore the LTF sequences have optimal comprehensive performance in the full bandwidth, the plurality of puncturing patterns, and the plurality of RU combinations.

It may be understood that a smaller PAPR value indicates a lower requirement for a linear power amplifier and better performance. On the contrary; a larger PAPR value indicates a higher requirement for a linear power amplifier and poorer performance.

**Embodiment 1**

Embodiment 1 of this application describes a possible procedure of a PPDU transmission method provided in this application.

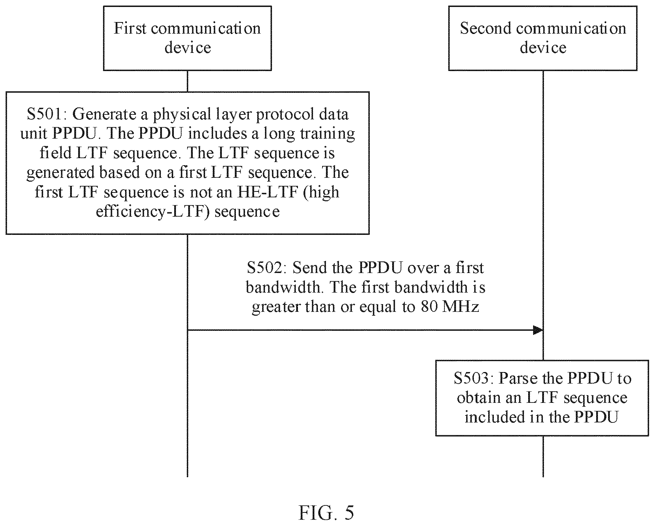

FIG. 5 is a schematic flowchart of a PPDU transmission method according to an embodiment of this application. As shown in FIG. 5, the PPDU transmission method includes the following steps:

S501: A first communication device generates a physical layer protocol data unit PPDU. The PPDU includes a long training field LTF sequence. The LTF sequence is generated based on a first LTF sequence. The first LTF sequence is not an HE-LTF sequence.

S502: The first communication device sends the PPDU over a first bandwidth. The first bandwidth is greater than or equal to 80 MHz. Correspondingly, a second communication device receives the PPDU over the first bandwidth.

S503: The second communication device parses the PPDU to obtain the LTF sequence included in the PPDU.

The first LTF sequence is not an LTF sequence in any bandwidth (for example, an 80 MHz bandwidth or a 160 MHz bandwidth) in the 802.11ax standard. For details of the LTF sequence in the 802.11ax standard, refer to the 802.11ax standard. Details are not described in this specification.

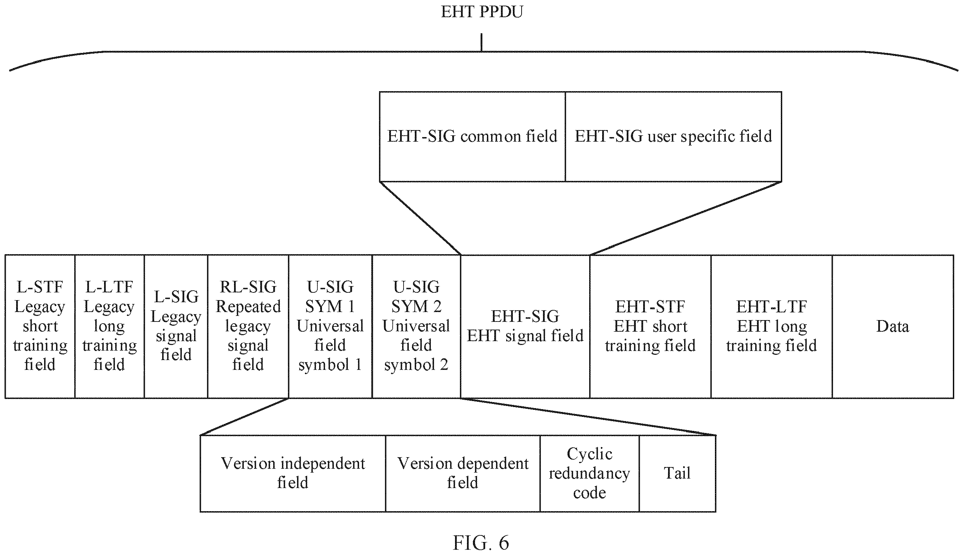

Optionally, the PPDU in this embodiment of this application may be an EHT PPDU. FIG. 6 is a schematic diagram of a structure of an EHT PPDU according to an embodiment of this application. As shown in FIG. 6, the EHT PPDU includes an EHT long training field. The EHT long training field carries the LTF sequence.

Specifically, this embodiment of this application focuses on LTF sequences included in PPDUs transmitted in 80 MHz, 160 MHz, 240 MHz, and 320 MHz bandwidths. Therefore, step S501 and step S502 may also be simplified as follows: The first communication device generates a PPDU. The PPDU is transmitted on a channel whose bandwidth is 80 MHz, 160 MHz, 240 MHz, or 320 MHz. The PPDU includes an LTF sequence. The LTF sequence is generated based on a first LTF sequence, and is any one of a plurality of possible LTF sequences provided in the following Embodiment 4 to Embodiment 6, or in the following Embodiment 9 to Embodiment 11. The first LTF sequence is an LTF sequence that is in the 80 MHz bandwidth and that is provided in the following Embodiment 2 or Embodiment 7. The first communication device sends the PPDU over the 160 MHz, 240 MHz, or 320 MHz bandwidth.

It may be understood that, if the 160 MHz bandwidth is noncontiguous, for example, 160 MHz is divided into two 80 MHz, and there is a frequency spacing between a first 80 MHz and a second 80 MHz (the frequency spacing is greater than 0), the first communication device may send a first half of the LTF sequence in the 160 MHz bandwidth over a lower 80 MHz within the 160 MHz bandwidth, and send a second half of the LTF sequence in the 160 MHz bandwidth over a higher 80 MHz within the 160 MHz bandwidth. On the contrary, if the 160 MHz bandwidth is contiguous, the first communication device may send the entire LTF sequence in the 160 MHz bandwidth over the 160 MHz bandwidth.

Similarly, if the 240 MHz bandwidth is noncontiguous, for example, the 240 MHz bandwidth is divided into one 160 MHz bandwidth and one 80 MHz bandwidth, there is a frequency spacing between the 160 MHz bandwidth and the 80 MHz bandwidth (the frequency spacing is greater than 0). Assuming that the 160 MHz is a lower 160 MHz, and the 80 MHz is a higher 80 MHz, the first communication device may send, over the lower 160 MHz of the 240 MHz bandwidth, a sequence corresponding to the lower 160 MHz in the LTF sequence in the 240 MHz bandwidth (to be specific, first 2/3 of the LTF sequence in the 240 MHz bandwidth). The first communication device may send, over the higher 80 MHz of the 240 MHz bandwidth, a sequence corresponding to the higher 80 MHz in the LTF sequence in the 240 MHz bandwidth (to be specific, last 1/3 of the LTF sequence in the 240 MHz bandwidth). It should be understood that, assuming that the 160 MHz is a higher 160 MHz, and the 80 MHz is a lower 80 MHz, the first communication device may send, over the lower 80 MHz of the 240 MHz bandwidth, a sequence corresponding to the lower 80 MHz in the LTF sequence in the 240 MHz bandwidth (to be specific, first 1/3 of the LTF sequence in the 240 MHz bandwidth). The first communication device may send, over the higher 160 MHz of the 240 MHz bandwidth, a sequence corresponding to the higher 160 MHz in the LTF sequence in the 240 MHz bandwidth (to be specific, last 2/3 of the LTF sequence in the 240 MHz bandwidth).

On the contrary, if the 240 MHz bandwidth is contiguous, the first communication device may send the entire LTF sequence in the 240 MHz bandwidth over the 240 MHz bandwidth.

Similarly, if the 320 MHz bandwidth is noncontiguous, for example, 320 MHz is divided into two 160 MHz, and there is a frequency spacing between a first 160 MHz and a second 160 MHz (the frequency spacing is greater than 0), the first communication device may send a first half of the LTF sequence in the 320 MHz bandwidth over a lower 160 MHz within the 320 MHz bandwidth, and send a second half of the LTF sequence in the 320 MHz bandwidth over a higher 160 MHz within the 320 MHz bandwidth. On the contrary, if the 320 MHz bandwidth is contiguous, the first communication device may send the entire LTF sequence in the 320 MHz bandwidth over the 320 MHz bandwidth.

It may be understood that the "LTF sequence" mentioned in this application may be a frequency domain sequence of an LTF. The "240 MHz bandwidth" mentioned in this application may mean that a bandwidth is 240 MHz. Similarly, the "320 MHz bandwidth" means that a bandwidth is 320 MHz.

This embodiment of this application focuses on a plurality of possible LTF sequences in the 240 MHz bandwidth and the 320 MHz bandwidth. Before the plurality of possible LTF sequences provided in this application are described, a method for generating the LTF sequence is first briefly described. The details are as follows:

I. With reference to an application scenario and an application requirement of the LTF sequence, select a basic sequence with an appropriate length and a small PAPR, namely, a binary Golay complementary pair (Golay complementary pair) with a specific length.

II. Determine a sequence structure of the LTF sequence, and determine a final LTF sequence based on computer search and the following constraint. The constraint includes one or more of the following:

(1) a smaller PAPR value: reducing a requirement on a linear power amplifier;
(2) phase flipping at a non-pilot location: considering a multi-stream scenario (a size of a P-matrix size is 2×2, 4×4, 6×6, 8×8, 12×12, 16×16);
(3) considering a plurality of puncturing scenarios; and
(4) considering multi-RU joint transmission or multi-RU combination (a plurality of RUs are allocated to a same STA).

Alternatively, in other words, the constraint includes: considering PAPR values of the full 320 MHz bandwidth, a plurality of puncturing patterns, and a plurality of RU combination manners, and considering the phase flipping at the non-pilot location.

Specifically, the generated LTF sequence considers an optimal maximum PAPR in a plurality of manners (for example, the full 320 MHz bandwidth, the plurality of puncturing patterns, and the plurality of RU combination manners). Small RUs are combined into a large RU in a transmission bandwidth, and a sequence with an optimal PAPR of various RUs (multi-RU combination or a single RU) is selected. In addition, because the LTF sequence is used for multiple input multiple output (multiple input multiple output, MIMO) channel estimation, and a quantity of streams increases to 16 in a next-generation Wi-Fi standard, the maximum PAPR value of the obtained LTF sequence considers the multi-stream scenario at the non-pilot location (for example, the P-matrix size is $2\times2$, $4\times4$, $6\times6$, $8\times8$, $12\times12$, $16\times16$).

Optionally, specific values of the P-matrix are as follows:

$$P_{4\times4} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

$$P_{6\times6} = \begin{bmatrix} w^{0*0} & -w^{0*1} & w^{0*2} & w^{0*3} & w^{0*4} & -w^{0*5} \\ w^{1*0} & -w^{1*1} & w^{1*2} & w^{1*3} & w^{1*4} & -w^{1*5} \\ w^{2*0} & -w^{2*1} & w^{2*2} & w^{2*3} & w^{2*4} & -w^{2*5} \\ w^{3*0} & -w^{3*1} & w^{3*2} & w^{3*3} & w^{3*4} & -w^{3*5} \\ w^{4*0} & -w^{4*1} & w^{4*2} & w^{4*3} & w^{4*4} & -w^{4*5} \\ w^{5*0} & -w^{5*1} & w^{5*2} & w^{5*3} & w^{5*4} & -w^{5*5} \end{bmatrix}, \quad w = \exp(-j2\pi/6)$$

$$P_{8\times8} = \begin{bmatrix} P_{4\times4} & P_{4\times4} \\ P_{4\times4} & -P_{4\times4} \end{bmatrix}$$

This embodiment of this application generates the LTF sequence included in the PPDU transmitted on a 240 MHz- or 320 MHz-bandwidth channel based on the first LTF sequence. The first LTF sequence is not the LTF sequence in any bandwidth (for example, the 80 MHz bandwidth or the 160 MHz bandwidth) in the 802.11ax standard. In this case, the LTF sequence is applicable to channel estimation for a larger bandwidth such as 240 MHz, and 320 MHz. This provides a basis for subsequent channel estimation, decrease a peak-to-average power ratio, and reduce a requirement for a linear power amplifier.

**Embodiment 2**

Before the LTF sequences included in the PPDUs transmitted over the 240 MHz bandwidth and the 320 MHz bandwidth are described, a method for generating the first LTF sequence is first described. Embodiment 2 of this application describes in detail a first method for generating the first LTF sequence. Embodiment 2 of this application generates the first LTF sequence in a 2x case based on a Golay (Golay) sequence and a Boolean function while comprehensively considering impact of factors such as a plurality of RU combinations, a plurality of puncturing patterns, and pilot flipping on the first LTF sequence. In this case, the first LTF sequence with a smaller PAPR value can be obtained.

Optionally, the first LTF sequence may be a new 2x LTF sequence in an 80 MHz bandwidth (an LTF2x80MHz sequence for short). A possible method for generating the LTF2x80MHz sequence is as follows.

S11: Define a quadratic Boolean function set Func:

$$\text{Func} = \{f(x_1, x_2, ..., x_7) = \sum_{i=1}^{6} x_{\pi(i)} x_{\pi(i+1)} + \sum_{i=1}^{7} \lambda_i x_i \mid \lambda_i \in F_2\}$$

$\pi$ is one arrangement of symbols {1, 2, ..., 7}, and is also referred to as permutation. For example, $\pi$ is {1, 2, 3, 4, 5, 6, 7}, or may be {1, 2, 3, 4, 5, 7, 6}. Simply speaking, there are seven locations here. A first location has seven options, a second location has six options (because one number has been selected, only six numbers are left), and subsequent locations may be deduced by analogy. Therefore, there are 7! = 7 × 6 × 5 × 4 × 3 × 2 × 1 = 5040 cases in total. $\pi(i)$ indicates an $i^{th}$ number in the current arrangement $\pi$. For example, if $\pi$ is {1, 3, 2, 4, 6, 5, 7}, $\pi(5)$ is 6. $\lambda_i \in F_2$ indicates $\lambda_i \in \{0, 1\}$, and $F_2$ is a finite field whose feature is 2.

Here, a size of the quadratic Boolean function set Func should be 27 * 7! /2 = 322560. There are a total of 7! = 5040 cases for the arrangement $\pi$, but the arrangement is symmetric. Therefore, 7!/2. Because each $\lambda$ in {$\lambda 1$, $\lambda 2$, $\lambda 3$, $\lambda 4$, $\lambda 5$, $\lambda 6$, $\lambda 7$} is obtained from {0, 1}, there are $2^7$ types in total. In conclusion, the size of the quadratic Boolean function set Func is 322560. To reduce a subsequent calculation amount, only some functions, for example, 42041 functions, are selected.

S12: Select one function $f(x_1, x_2, ..., x_7)$ from the quadratic Boolean function set Func during traversal, and determine a function $g(x_1, x_2, ..., x_7) = f + x_{\pi(1)}$ based on the selected function $f$. A truth table of functions $f$ and $g$ is separately calculated, and related distribution is denoted as sequences $\overline{f}$ and $\overline{g}$. Assuming that $a = (-1)^{\overline{f}}, b = (-1)^{\overline{g}}$, a sequence pair (a, b) is one binary Golay complementary pair with a length of 128.

The obtaining the truth tables of the functions $f$ and $g$ is specifically: representing an integer $j \in \{0,1,2,...,2^7 - 1\}$ as a 7-bit binary, to be specific,

$$j = \sum_{k=1}^{7} j_k * 2^{7-k}$$

. For example, j = 3, and a corresponding 7-bit binary is (0, 0, 0, 0, 0, 1, 1), then the binary is substituted into the function $f$ to obtain $f(0, 0, 0, 0, 0, 1, 1)$. One function can correspond to one sequence. A sequence $\overline{f}$ is essentially $\overline{f} = \{f(0, 0, ..., 0), f(0, 0, ..., 1), ..., f(1, 1, ...,1)\}$. $F_2 = \{0, 1\}$. Assuming that $a = (-1)^{\overline{f}}$, a sequence on {-1, +1} may be obtained.

S13: Define $\mathbf{a}_{121} = a(5:125)$, $\mathbf{b}_{121} = b(4:124)$, $\mathbf{a}_{128} = a$, and $\mathbf{b}_{128} = b$. seq501 = $[\mathbf{a}_{121}, \pm\mathbf{b}_{128}, 0_3, \pm\mathbf{a}_{128}, \pm\mathbf{b}_{121}]$. $0_3$ indicates three consecutive 0s. "5:125" in "a(5:125)" means a $5^{th}$ element to a $125^{th}$ element. Similarly, "4:124" in "b(4: 124)" means a $4^{th}$ element to a $124^{th}$ element. This is the same in the following, and details are not described in the following.

S14: Insert 0s into a sequence seq501, to be specific, insert one 0 between every two elements, to obtain a to-be-selected sequence seq1001 for 80 MHz in a 2x case.

S15: Obtain a sequence with a smallest comprehensive PAPR as an LTF2x80MHz sequence through computer search of 42041 to-be-selected sequences seq1001.

In one aspect, impact of a pilot flipping factor on a PAPR value of the to-be-screened sequence seq1001 needs to be considered during computer search. Pilot subcarriers and other subcarriers in Table 1 to Table 6 may be multiplied by different phases depending on different quantities of spatial flows. Therefore, when such subcarriers are multiplied by different phases, different PAPR changes occur. In some cases, the PAPR is large. A phase change of the pilot subcarrier corresponds to a first row in a P-matrix, and a phase change of another subcarrier corresponds to a corresponding row in the P-matrix based on the spatial flow. These cases may be summarized as the following four cases: When a phase of the pilot subcarrier does not change and is always multiplied by "+1", phases of other subcarriers change, and are respectively multiplied by "+1", "-1", "w", or "w2", where w = exp((-j * 2 * $\pi$)/6). During computer search, change in the PAPR value needs to be considered. The sequence designed herein is compatible with a feature of 16 streams.

In another aspect, in the 802.11ax, one STA can be associated with only one RU. However, in the 802.11be, one STA may be associated with a plurality of RUs, to be specific, the plurality of RUs are allocated to one STA for association, to transmit data. In addition, because the 802.11be may use an OFDMA technology and a non-OFDMA (non-OFDMA) technology, a multi-RU combination manner mentioned in this application may include a non-OFDMA puncturing pattern and an OFDMA multi-RU combination manner. For example, in this application, the non-OFDMA puncturing pattern is combined into Table 7 (240 MHz bandwidth transmission) and Table 8 (320 MHz bandwidth transmission). Therefore, when an LTF sequence in the 80 MHz bandwidth is designed, the multi-RU combination manner also needs to be considered for a PAPR of the LTF sequence in the 80 MHz bandwidth. Similarly, when LTF sequences in the 240 MHz bandwidth and the 320 MHz bandwidth are subsequently designed, various multi-RU combination manners in Table 7 or Table 8 need to be considered for a PAPR of the LTF sequence.

It should be understood that, the following comprehensively considers impact of factors such as multi-RU combination, a plurality of puncturing patterns, and pilot flipping on LTF sequences in various bandwidths, and meanings are the same as those described above. Therefore, details are not described in the following.

Specifically, LTF2x80MHz (-500:2:500) = $[a_{121}, b_{128}, 0_3, -a_{128}, -b_{121}]$. The expression indicates that values of subcarriers at even locations in subcarriers numbered -500 to 500 are sequentially values in a sequence $[a_{121}, b_{128}, 0_3, -a_{128}, -b_{121}]$, and values of subcarriers at other locations are 0s. For example, a portion of the LTF2x80MHz sequence is [+1, 0, -1, 0, +1, 0, +1, ...]. The LTF2x80MHz sequence has a length of 1001.

**EP 4 167 534 A1**

A coefficient L of the LTF2x80MHz sequence = [1 1-1 -1]. A binary Golay complementary pair (a, b) with a length of 128 is as follows:

$a$ = [1 1 1 1 –1 –1 1 1 1 –1 –1 1 1 –1 1 –1 1 1 1 1 1 1 1 –1 –1 1 1 –1 –1 1 1 –1 1 –1 1 1 1 1 –1 –1 1 1 1 1 –1 –1

1 –1 1 1 –1 1 –1 –1 –1 –1 –1 –1 1 1 –1 1 1 1 –1 1 1 –1 1 –1 –1 –1 –1 1 1 1 –1 –1 1 –1 1 1 –1 1 1 –1 –1 –1 –1 –1 –1 –1 1 1

1 –1 1 1 –1 –1 1 –1 1 1 1 1 1 –1 –1 1 1 1 –1 –1 1 1 –1 1 –1 1 1 –1 –1 –1 –1 –1 –1 1 1 –1 1 1 –1 –1 1 1 –1 1]

$b$ = [–1 –1 –1 –1 1 1 –1 –1 –1 1 1 1 –1 1 1 –1 1 1 –1 –1 –1 –1 –1 –1 –1 –1 1 1 –1 1 1 1 –1 –1 1 1 –1 1 1 –1 –1 –1 –1 –1 1 1 1

–1 –1 –1 1 1 –1 1 1 –1 1 –1 1 1 1 1 1 1 –1 –1 1 1 –1 1 –1 –1 1 1 1 –1 1 1 –1 –1 –1 –1 –1 –1 1 1 1 –1 –1 –1 1 1 1 –1 1 1 –1 1 1 –1 1 –1 –1 –1 –1 –

1 –1 –1 1 1 1 –1 1 1 –1 –1 1 1 –1 1 1 1 1 1 1 –1 –1 1 1 1 1 –1 –1 1 1 –1 1 1 –1 1 –1 1 1 –1 –1 –1 –1 –1 –1 1 1 1 –1 1 1 1 –1 –1 1 1 –1 1]

Optionally, the LTF2x80MHz sequence obtained in step S15 has a small PAPR value. For example, a PAPR value of each RU (a multi-RU combination or a single RU) in the LTF2x80MHz sequence is specifically shown in the following Table 9.

Table 9: PAPR value of each RU in an LTF2x80MHz sequence

| Values (left to right) | RU description | PAPR |
|---|---|---|
| 4.9816, 6.4249, 5.9178, 5.7735, 5.7625, 5.7806, 5.6816, 5.9027, 6.2691, 6.2691, 5.9027, 5.6816, 5.7806, 5.7625, 5.7735, 5.9178, 6.4249, 4.9816, 4.9816, 6.4249, 5.9178, 5.7735, 5.7625, 5.7806, 5.6816, 5.9027, 6.2691, 6.2691, 5.9027, 5.6816, 5.7806, 5.7625, 5.7735, 5.9178, 6.4249, 4.9816 | RU26 (a 1st RU26 to a 36th RU26 from left to right; the rule is applicable to the following) | 6.4249 |
| 6.5021, 6.3553, 5.8132, 6.2857, 6.2857, 5.8132, 6.3553, 6.5021, 6.5021, 6.3553, 5.8132, 6.2857, 6.2857, 5.8132, 6.3553, 6.5021 | RU52 (a 1st RU52 to a 16th R52 from left to right; the rule is applicable to the following) | 6.5021 |
| 7.18, 6.5602, 6.5602, 7.18, 7.18, 6.5602, 6.5602, 7.18 | RU106 (a 1st RU106 to an 8th RU106 from left to right; the rule is applicable to the following) | 7.18 |
| 5.7318, 5.7318, 5.7318, 5.7318 | RU242 (a 1st RU242 to a 4th RU242 from left to right; the rule is applicable to the following) | 5.7318 |
| 5.7057, 5.7057 | RU484 (a 1st RU484 to a 2nd RU484 from left to right; the | 5.7057 |

EP 4 167 534 A1

| | | | | rule is applicable to the following) | |
|---|---|---|---|---|---|
| 6.7823 | | | | RU996 | 6.7823 |
| 6.9427 | 6.9427 | 6.9427 | 6.9427 | RU26+RU52 | 6.9427 |
| 6.7263 | 6.7263 | 6.7263 | 6.7263 | RU26+RU106 | 6.7263 |
| 7.301 | 7.2939 | 7.2939 | 7.301 | RU242+RU484 | 7.301 |

A last column in Table 9 indicates maximum PAPR values of RUs in the LTF2x80MHz sequence. For example, a last column of a first row indicates that a maximum PAPR value of the RU26 in the LTF2x80MHz sequence is 6.4249. For another example, a last column of a third row indicates that a maximum PAPR value corresponding to the RU106 in the LTF2x80MHz sequence is 7.18.

A value in a first column corresponding to a row of RU26+RU52 indicates a 1st RU26+RU52: the 8th RU26 and the 3rd RU52. A value in a second column corresponding to the row of RU26+RU52 indicates a 2nd RU26+RU52: the 11th RU26 and the 6th RU52. A value in a third column corresponding to the row of RU26+RU52 indicates a 3rd RU26+RU52: the 26th RU26 and the 11th RU52. A value in a fourth column corresponding to the row of RU26+RU52 indicates a 4th RU26+RU52: the 29th RU26 and the 14th RU52.

A value in a first column corresponding to a row of RU26+RU106 indicates a 1st RU26+RU106: the 5th RU26 and the 1st RU106. A value in a second column corresponding to the row of RU26+RU106 indicates a 2nd RU26+RU106: the 14th RU26 and the 4th RU106. A value in a third column corresponding to the row of RU26+RU106 indicates a 3rd RU26+RU106: the 23rd RU26 and the 5th RU106. A value in a fourth column corresponding to the row of RU26+RU106 indicates a fourth RU26+RU106: the 32nd RU26 and the 8th RU106.

A value in a first column corresponding to a row of RU242+RU484 indicates a 1st RU242+RU484: the 1st RU242 and the 2nd RU484. A value in a second column corresponding to the row of RU242+RU484 indicates a 2nd RU242+RU484: the 2nd RU242 and the 2nd RU484.

A value in a third column corresponding to the row of RU242+RU484 indicates a 3rd RU242+RU484: the 3rd RU242 and the 1st RU484. A value in a fourth column corresponding to the row of RU242+RU484 indicates a 4th RU242+RU484: the 4th RU242 and the 1st RU484.

As shown in FIG. 4, in a row of RU52, there is one RU26 between a 2nd RU52 and a 3rd RU52, one RU26 between a 6th RU52 and a 7th RU52, one RU26 between a 10th RU52 and an 11th RU52, and one RU26 between a 14th RU52 and a 15th RU52. Accordingly, a value at a corresponding location in the row of RU52 in the table indicates a PAPR value of an RU26 at the corresponding location.

Similarly, as shown in FIG. 4, in a row of RU106, there is one RU26 between the 1st RU106 and the 2nd RU106, one RU26 between the 3rd RU106 and the 4th RU106, one RU26 between the 5th RU106 and the 6th RU106, and one RU26 between the 7th RU106 and the 8th RU106. Accordingly, a value at a corresponding location in the row of RU106 in the table indicates a PAPR value of an RU26 at the corresponding location.

In this embodiment of this application, a plurality of to-be-selected sequences in the 2x case are generated based on the Golay (Golay) sequence and the Boolean function, and then the sequence with the smallest comprehensive PAPR is selected from the to-be-selected sequences as the first LTF sequence (the new 2x LTF sequence in the 80 MHz bandwidth, or LTF2x80MHz sequence), to obtain the first LTF sequence with the smaller PAPR value.

**Embodiment 3**

Embodiment 3 of this application describes a possible 2x LTF sequence in a 160 MHz bandwidth. For ease of description, the 2x LTF sequence in the 160 MHz bandwidth is referred to as an LTF2x160MHz sequence for short below. Embodiment 3 of this application generates the 2x LTF sequence in the 160 MHz bandwidth based on an LTF2x80MHz sequence while comprehensively considering impact of factors such as a plurality of RU combinations, a plurality of puncturing patterns, and pilot flipping on the LTF2x160MHz sequence. In this case, the LTF2x160MHz sequence with a smaller PAPR value can be obtained.

Specifically, a possible LTF2x160MHz sequence = [LTF2x80MHz_part1, LTF2x80MHz_part2, LTF2x80MHz_part3, LTF2x80MHz_part4, LTF2x80MHz_part5, 0$_{23}$, LTF2x80MHz_part1, (-1) * LTF2x80MHz_part2, (-1) * LTF2x80MHz_part3, (-1) * LTF2x80MHz_part4, LTF2x80MHz_part5].

A coefficient L of the LTF2x160MHz sequence = [1 1 1 1 1 1 -1 -1 -1 1]. 0$_{23}$ indicates 23 consecutive 0s. The LTF2x80MHz is a new 2x LTF sequence in an 80 MHz bandwidth in Embodiment 2, and has a length of 1001. LTF2x80MHz = [LTF2x80MHz_part1, LTF2x80MHz_part2, LTF2x80MHz_part3, LTF2x80MHz_part4, LTF2x80MHz_part5].

25

LTF2x80MHz_part1 = LTF2x80MHz (1:242); LTF2x80MHz_part2 = LTF2x80MHz (243:484); LTF2x80MHz_part3 = LTF2x80MHz (485:517); LTF2x80MHz_part4 = LTF2x80MHz (518:759); LTF2x80MHz_part5 = LTF2x80MHz (760:1001). LTF2x80MHz (1:242) may indicate a 1st element to a 242nd element of the LTF2x80MHz sequence. LTF2x80MHz (243:484) may indicate a 243rd element to a 484th element of the LTF2x80MHz sequence. LTF2x80MHz (485:517) may indicate a 485th element to a 517th element of the LTF2x80MHz sequence. LTF2x80MHz (518:759) may indicate a 518th element to a 759th element of the LTF2x80MHz sequence. LTF2x80MHz (760:1001) may indicate a 760th element to a 1001st element of the LTF2x80MHz sequence.

It may be understood that meanings of LTF2x80MHz_part1, LTF2x80MHz_part2, LTF2x80MHz_part3, the LTF2x80MHz_part4, and the LTF2x80MHz_part5 are the same below. Therefore, details are not described below again.

It may be understood that a length of the LTF2x160MHz sequence is 1001 + 23 + 1001 = 2025.

Optionally, the LTF2x160MHz sequence has a small PAPR value in 160 MHz in various cases (including a full 160 MHz bandwidth, various puncturing patterns in 160 MHz, and various multi-RU combinations in 160 MHz).

For example, a PAPR value of each RU (including a multi-RU combination or a single RU) in a first 80 MHz and a second 80 MHz of the LTF2x160MHz sequence is as follows:

**Table 10: PAPR value of each RU in a first 80 MHz in an LTF2x160MHz sequence**

| PAPR values | RU | Max PAPR |
|---|---|---|
| 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | RU26 | 6.425 |
| 6.5021, 6.3553, 5.8132, 6.2861, 6.2861, 5.8132, 6.3553, 6.5021, 6.5021, 6.3553, 5.8132, 6.2861, 6.2861, 5.8132, 6.3553, 6.5021 | RU52 | 6.5021 |
| 7.1801, 6.5607, 6.5607, 7.1801, 7.1801, 6.5607, 6.5607, 7.1801 | RU106 | 7.1801 |
| 5.7366, 5.7366, 5.7366, 5.7366 | RU242 | 5.7366 |
| 5.7057, 5.7057 | RU484 | 5.7057 |
| 6.9341 | RU996 | 6.9341 |
| 6.9427, 6.9427, 6.9427, 6.9427 | RU26+RU52 | 6.9427 |
| 6.7288, 6.7288, 6.7288, 6.7288 | RU26+RU106 | 6.7288 |
| 7.4213, 7.3581, 7.3581, 7.4213 | RU242+RU484 | 7.4213 |

A last column in Table 10 indicates maximum PAPR values of RUs in the first 80 MHz in the LTF2x160MHz sequence. For example, a last column of a first row indicates that a maximum PAPR value of the RU26 in the first 80 MHz in the LTF2x160MHz sequence is 6.425. It may be understood that, in the following table, a last column expresses a similar meaning, and details are not described below again.

**Table 11: PAPR value of each RU in a second 80 MHz in an LTF2x160MHz sequence**

| PAPR values | RU | Max PAPR |
|---|---|---|
| 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | RU26 | 6.425 |
| 6.5021, 6.3553, 5.8132, 6.2861, 6.2861, 5.8132, 6.3553, 6.5021, 6.5021, 6.3553, 5.8132, 6.2861, 6.2861, 5.8132, 6.3553, 6.5021 | RU52 | 6.5021 |
| 7.1801, 6.5607, 6.5607, 7.1801, 7.1801, 6.5607, 6.5607, 7.1801 | RU106 | 7.1801 |
| 5.7366, 5.7366, 5.7366, 5.7366 | RU242 | 5.7366 |
| 6.3478, 6.3478 | RU484 | 6.3478 |
| 7.4364 | RU996 | 7.4364 |
| 6.9427, 6.9427, 6.9427, 6.9427 | RU26+RU52 | 6.9427 |
| 6.7288, 6.7288, 6.7288, 6.7288 | RU26+RU106 | 6.7288 |
| 7.6618, 7.6618, 7.6618, 7.6618 | RU242+RU484 | 7.6618 |

For another example, PAPR values of other RUs in more than 80 MHz (to be specific, a multi-RU combination) in the LTF2x160MHz sequence are shown in the following Table 12.

**Table 12: PAPR value of a multi-RU combination in an LTF2x160MHz sequence**

| 5.8541 | | | | | | | | 2*RU996 | 5.8541 |
|---|---|---|---|---|---|---|---|---|---|
| 6.5191 | 6.5867 | 6.9577 | 6.9577 | | | | | RU484+RU 996 | 6.9577 |
| 7.0185 | 7.3104 | 7.3104 | 6.22 | 6.5763 | 6.9601 | 6.9601 | 6.9841 | RU242+RU 484+RU996 | 7.3104 |

This embodiment of this application provides the 2x LTF sequence in the 160 MHz bandwidth based on the LTF2x80MHz sequence and the 2x LTF sequence has a smaller PAPR value.

## Embodiment 4

Embodiment 4 of this application describes a possible 2x LTF sequence in a 240 MHz bandwidth. For ease of description, the 2x LTF sequence in the 240 MHz bandwidth is referred to as an LTF2x240MHz sequence for short below. Embodiment 4 of this application generates the 2x LTF sequence in the 240 MHz bandwidth based on an LTF2x80MHz sequence while comprehensively considering impact of factors such as a plurality of RU combinations, a plurality of puncturing patterns, and pilot flipping on the LTF2x240MHz sequence. In this case, the LTF2x240MHz sequence with a smaller PAPR value can be obtained.

Specifically, a possible LTF2x240MHz sequence = [LTF2x80MHz_Left, 0, (-1)*LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right].

A coefficient L of the LTF2x240MHz sequence = [1 -1 -1 1 1 1]. $0_{23}$ indicates 23 consecutive 0s. The LTF2x80MHz is a new 2x LTF sequence in an 80 MHz bandwidth in Embodiment 2, and has a length of 1001. LTF2x80MHz = [LTF2x80MHz_Left, 0, LTF2x80MHz_Right]. LTF2x80MHz_Left = LTF2x80MHz (1:500). LTF2x80MHz_Right = LTF2x80MHz (502:1001). LTF2x80MHz (1:500) may indicate a $1^{st}$ element to a $500^{th}$ element of the LTF2x80MHz sequence. LTF2x80MHz (502:1001) may indicate a $502^{nd}$ element to a $1001^{st}$ element of the LTF2x80MHz sequence.

It may be understood that meanings of LTF2x80MHz_Left and LTF2x80MHz_Left and LTF2x80MHz_Right are the same below. Therefore, details are not described below again.

It may understood that the sequence [LTF2x80MHz_Left, 0, (-1)*LTF2x80MHz_Right] has a length of 1001. Therefore, a length of the LTF2x240MHz sequence is 1001 $\times$ 3 + 23 $\times$ 2 = 3049.

Optionally, the LTF2x240MHz sequence has a small PAPR value in 240 MHz in various cases (including a full 240 MHz bandwidth, various puncturing patterns in 240 MHz, and various multi-RU combinations in 240 MHz) in Table 7.

For example, a PAPR value of each RU (including a multi-RU combination or a single RU) in a first 80 MHz to a third 80 MHz in the LTF2x240MHz sequence is as follows:

**Table 13: PAPR value of each RU in a first 80 MHz and a second 80 MHz in an LTF2x240MHz sequence**

| | | | | | | | | | | | | | | | | | | | | | | | | | | | | | | | | | | | | RU | |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | 6.3554 | | 5.8132 | 6.2861 | | 6.2861 | 5.8132 | | 6.3554 | 6.5021 | | 6.5021 | 6.3554 | | 5.8132 | 6.2861 | | 6.2861 | 5.8132 | | 6.3554 | 6.5021 | | | | | | | | | | | | | | | RU52 | 6.5021 |
| 7.181 | | 6.561 | | 6.561 | | | 7.181 | | 7.181 | | | 6.561 | | 6.561 | | | 7.181 | | | | | | | | | | | | | | | | | | | RU106 | 7.181 |
| 5.737 | | | | 5.737 | | | | 5.737 | | | | 5.737 | | | | | | | | | | | | | | | | | | | | | | | | RU242 | 5.737 |
| 5.7146 | | | | | | | | 5.7146 | | | | | | | | | | | | | | | | | | | | | | | | | | | | RU484 | 5.7146 |
| 7.0109 | | | | | | | | | | | | | | | | | | | | | | | | | | | | | | | | | | | | RU996 | 7.0109 |
| 6.9431 | | | | | | | 6.9431 | | | | | | | | | | 6.9431 | | | | | | | | | | 6.9431 | | | | | | | | RU26+RU52 | 6.9431 |

| 6.7288 | 8.1551 |
| RU26+RU106 | RU242+RU484 |
| 6.7288 | 8.1551 |
| 6.7288 | 8.0274 |
| 6.7288 | 8.0274 |
| 6.7288 | 8.1551 |

**Table 14: PAPR value of each RU in a third 80 MHz in an LTF2x240MHz sequence**

| RU26 row | | | | | | | | | | | | | | | | | | RU | PAPR |
|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | | |

| RU52 row | | | | | | | | | | | | | | | | RU | PAPR |
|---|---|---|---|---|---|---|---|---|---|---|---|---|---|---|---|---|---|
| 6.5021 | 6.3554 | 5.8132 | 6.2861 | 6.2861 | 5.8132 | 6.3554 | 6.5021 | 6.5021 | 6.3554 | 5.8132 | 6.2861 | 6.2861 | 5.8132 | 6.3554 | 6.5021 | RU52 | 6.5021 |

| RU106 row | | | | | | | | RU | PAPR |
|---|---|---|---|---|---|---|---|---|---|
| 7.181 | 6.561 | 6.561 | 7.181 | 7.181 | 6.561 | 6.561 | 7.181 | RU106 | 7.181 |

| RU242 row | | | | RU | PAPR |
|---|---|---|---|---|---|
| 5.737 | 5.737 | 5.737 | 5.737 | RU242 | 5.737 |

| RU484 row | | RU | PAPR |
|---|---|---|---|
| 5.7146 | 5.7146 | RU484 | 5.7146 |

| RU996 row | RU | PAPR |
|---|---|---|
| 6.9341 | RU996 | 6.9341 |

| RU26+RU52 row | | | | RU | PAPR |
|---|---|---|---|---|---|
| 6.9431 | 6.9431 | 6.9431 | 6.9431 | RU26+RU52 | 6.9431 |

| RU26+RU106 row | | | | RU | PAPR |
|---|---|---|---|---|---|
| 6.7288 | 6.7288 | 6.7288 | 6.7288 | RU26+RU106 | 6.7288 |

| RU242+RU484 row | | | | RU | PAPR |
|---|---|---|---|---|---|
| 7.4213 | 7.3638 | 7.3638 | 7.4213 | RU242+RU484 | 7.4213 |

For another example, PAPR values of other RUs in more than 80 MHz (to be specific, a multi-RU combination) in the LTF2x240MHz sequence in Table 7 are shown in the following Table 15.

**Table 15: PAPR value of a multi-RU combination in an LTF2x240MHz sequence**

| 8.5232 | 8.2513 | 7.4746 | 8.913 | 7.9472 | 9.2987 | | | RU484+2*RU996 | 9.2987 |
|--------|--------|--------|-------|--------|--------|--------|--------|---------------|--------|
| 6.7353 | 6.8599 | 8.6505 | | | | | | 2*RU996 | 8.6505 |
| 7.2317 | 8.4722 | 8.4722 | 7.2317 | 9.0133 | 8.71 | 9.2346 | 7.2317 | RU484+RU996 | 9.2346 |
| 8.1462 | | | | | | | | 3*RU996 | 8.1462 |

Values in a first row in Table 15 are sequentially from left to right, PAPR values of multi-RU combinations in the manner 1 to the manner 6 of RU484+2*RU996 in 240 MHz shown in Table 7. Values in a second row in Table 15 are sequentially from left to right, PAPR values of multi-RU combinations in the manner 1 to the manner 3 of 2*RU996 in 240 MHz shown in Table 7. Values in a third row in Table 15 are sequentially from left to right, PAPR values of multi-RU combinations in the manner 1 to the manner 8 of RU484+RU996 in 240 MHz shown in Table 7. A value in a fourth row in Table 15 is a PAPR value of a multi-RU combination in the manner 1 of 3 *RU996 in 240 MHz shown in Table 7.

This embodiment of this application provides the 2x LTF sequence (to be specific, the LTF2x240MHz sequence) for the 240 MHz bandwidth. The LTF2x240MHz sequence is generated based on the LTF2x80MHz sequence, and has the small PAPR value. This provides a basis for subsequent channel estimation.

**Embodiment 5**

Embodiment 5 of this application describes a possible 2x LTF sequence in a 320 MHz bandwidth. For ease of description, the 2x LTF sequence in the 320 MHz bandwidth is referred to as an LTF2x320MHz sequence for short below. Embodiment 5 of this application generates the 2x LTF sequence in the 320 MHz bandwidth based on an LTF2x80MHz sequence while comprehensively considering impact of factors such as a plurality of RU combinations, a plurality of puncturing patterns, and pilot flipping on the LTF2x320MHz sequence. In this case, the LTF2x320MHz sequence with a smaller PAPR value can be obtained.

Specifically, a possible LTF2x320MHz sequence = [LTF2x80MHz_Left, 0, (-1)*LTF2x80MHz_Right, $0_{23}$, (-1)*LTF2x80MHz_Left, 0, LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right].

A coefficient L of the LTF2x320MHz sequence = [1 -1 -1 1-1 1 1 1], $0_{23}$ indicates 23 consecutive 0s. The LTF2x80MHz is a new 2x LTF sequence in an 80 MHz bandwidth in Embodiment 2, and has a length of 1001.

It may be understood that the sequence [LTF2x80MHz_Left, 0, (-1)*LTF2x80MHz_Right] has a length of 1001. Therefore, a length of the LTF2x320MHz sequence is $1001 \times 4 + 23 \times 3 = 4073$.

Optionally, the LTF2x320MHz sequence has a small PAPR value in the manner 1 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz to a fourth 80 MHz in the LTF2x320MHz sequence in the manner 1 is as follows:

Table 16: PAPR value of each RU in a first 80 MHz and a third 80 MHz in an LTF2x320MHz sequence

| RU | PAPR values (per position) | Value |
|---|---|---|
| RU26 | 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | 6.425 |
| RU52 | 6.5021, 6.3554, 5.8132, 6.2861, 6.2861, 5.8132, 6.3554, 6.5021, 6.5021, 6.3554, 5.8132, 6.2861, 6.2861, 5.8132, 6.3554, 6.5021 | 6.5021 |
| RU106 | 7.181, 6.561, 6.561, 7.181, 7.181, 6.561, 6.561, 7.181 | 7.181 |
| RU242 | 5.737, 5.737, 5.737, 5.737 | 5.737 |
| RU484 | 5.7146, 5.7146 | 5.7146 |
| RU996 | 7.0109 | 7.0109 |
| RU26+RU52 | 6.9431, 6.9431, 6.9431, 6.9431 | 6.9431 |
| RU26+RU106 | 6.7288, 6.7288, 6.7288, 6.7288 | 6.7288 |
| RU242+RU484 | 8.1551, 8.0274, 8.0274, 8.1551 | 8.1551 |

**Table 17: PAPR value of each RU in a fourth 80 MHz in an LTF2x320MHz sequence**

| | | | | | | | | | | | | | | | | | | | | | | | | | | | | | | | | | | | | RU | |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | 6.3554 | | 5.8132 | 6.2861 | | 6.2861 | 5.8132 | | | 6.3554 | 6.5021 | | 6.5021 | 6.3554 | | | 5.8132 | 6.2861 | | 6.2861 | 5.8132 | | | 6.3554 | 6.5021 | | | | | | | | | | | RU52 | 6.5021 |
| 7.181 | | 6.561 | | 6.561 | | 7.181 | | 7.181 | | 6.561 | | 6.561 | | 7.181 | | | | | | | | | | | | | | | | | | | | | | RU106 | 7.181 |
| 5.737 | | | | 5.737 | | | | 5.737 | | | | 5.737 | | | | | | | | | | | | | | | | | | | | | | | | RU242 | 5.737 |
| 5.7146 | | | | | | | | 5.7146 | | | | | | | | | | | | | | | | | | | | | | | | | | | | RU484 | 5.7146 |
| 6.9341 | | | | | | | | | | | | | | | | | | | | | | | | | | | | | | | | | | | | RU996 | 6.9341 |
| 6.9431 | | | | | | | 6.9431 | | | | | | | | 6.9431 | | | | | | | | 6.9431 | | | | | | | | | | | | | RU26+RU52 | 6.9431 |
| 6.7288 | | | | | | | 6.7288 | | | | | | | | 6.7288 | | | | | | | | 6.7288 | | | | | | | | | | | | | RU26+RU106 | 6.7288 |
| 7.4213 | | | | | | | 7.3638 | | | | | | | | 7.3638 | | | | | | | | 7.4213 | | | | | | | | | | | | | RU242+RU484 | 7.4213 |

For another example, PAPR values of other RUs in more than 80 MHz (to be specific, a multi-RU combination) in the LTF2x320MHz sequence in the manner 1 in Table 8 are shown in the following Table 18.

**Table 18: PAPR value of a multi-RU combination in an LTF2x320MHz sequence in the manner 1 in Table 8**

| | | | | | | | | | |
|---|---|---|---|---|---|---|---|---|---|
| 8.5623 | 7.108 | 7.8651 | 9.4644 | 7.2695 | 8.6573 | 8.4538 | 9.2066 | RU484+3*RU996 | 9.4644 |
| 8.3015 | 8.8969 | 8.7337 | 8.6581 | | | | | 3*RU996 | 8.8969 |
| 8.6505 | 6.7353 | | | | | | | 2*RU996 | 8.6505 |
| 7.2317 | 8.4722 | 8.4722 | 7.2317 | 9.0133 | 8.71 | 9.2346 | 7.2317 | RU484+RU996 | 9.2346 |
| 7.6204 | | | | | | | | 4*RU996 | 7.6204 |

Values in a first row in Table 18 are sequentially from left to right, PAPR values of multi-RU combinations in a first manner 1 to an eighth manner 1 of RU484+3*RU996 in 320 MHz shown in Table 8. Values in a second row in Table 18 are sequentially from left to right, PAPR values of multi-RU combinations in a first manner 1 to a fourth manner 1 of 3*RU996 in 320 MHz shown in Table 8. Values in a third row in Table 18 are sequentially from left to right, PAPR values of multi-RU combinations in a first manner 1 to a second manner 1 of 2*RU996 in 320 MHz shown in Table 8. Values in a fourth row in Table 18 are PAPR values of multi-RU combinations a first manner 1 to an eighth manner 1 of RU484+RU996 in 320 MHz shown in Table 8. A value in a fifth row in Table 18 is a PAPR value of a multi-RU combination in a first manner 1 of 4*RU996 in 320 MHz shown in Table 8.

It may be understood that a correspondence between the PAPR values of RUs in more than 80 MHz (to be specific, the multi-RU combination) and the RU combination in Table 18 is applicable to another table of PAPR values of other RUs in more than 80 MHz (to be specific, a multi-RU combination) in this specification. The following description provides only PAPR values in a table. A correspondence between PAPR values and an RU combination in the table is not described again.

This embodiment of this application provides the 2x LTF sequence (to be specific, the LTF2x320MHz sequence) for the 320 MHz bandwidth. The LTF2x320MHz sequence is generated based on the LTF2x80MHz sequence, and has the small PAPR value. This provides a basis for subsequent channel estimation.

**Embodiment 6**

Embodiment 6 of this application describes a possible 2x LTF sequence in the manner 2 and the manner 3 in a 320 MHz bandwidth in Table 8. Embodiment 6 of this application generates the 2x LTF sequence in the 320 MHz bandwidth based on an LTF2x80MHz sequence while comprehensively considering impact of factors such as a plurality of RU combinations, a plurality of puncturing patterns, and pilot flipping on the LTF2x320MHz sequence. In this case, the LTF2x320MHz sequence with a smaller PAPR value can be obtained.

Specifically, a possible LTF2x320MHz sequence = [LTF2x80MHz_part1, LTF2x80MHz_part2, LTF2x80MHz_part3, LTF2x80MHz_part4, LTF2x80MHz_part5, 0₂₃, LTF2x80MHz_part1, LTF2x80MHz_part2, LTF2x80MHz_part3, LTF2x80MHz_part4, (-1)*LTF2x80MHz_part5, 0₂₃, LTF2x80MHz_part1, (-1)*LTF2x80MHz_part2, (-1)*LTF2x80MHz_part3, (-1)*LTF2x80MHz_part4, (-1)*LTF2x80MHz_part5, 0₂₃, (-1)*LTF2x80MHz_part1, LTF2x80MHz_part2, LTF2x80MHz_part3, LTF2x80MHz_part4, (-1)*LTF2x80MHz_part5].

A coefficient L of the LTF2x320MHz sequence = [1 1 1 1 1 1 1 1 -1 1 -1 -1 -1 -1 -1 1 1 1 -1]. $0_{23}$ indicates 23 consecutive 0s. The LTF2x80MHz is a new 2x LTF sequence in an 80 MHz bandwidth in Embodiment 2, and has a length of 1001.

It may be understood that a length of the LTF2x320MHz sequence is 1001 × 4 + 23 × 3 = 4073.

Optionally, the LTF2x320MHz sequence has a small PAPR value in the manner 2 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz to a fourth 80 MHz in the LTF2x320MHz sequence in the manner 2 is as follows:

**Table 19: PAPR value of each RU in a first 80 MHz in an LTF2x320MHz sequence (manner 2)**

| | | | | | | | | | | | | | | | | | | | | | | | | | | | | | | | | | | | | RU | |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | 6.3554 | | 5.8132 | | 6.2861 | | 6.2861 | | 5.8132 | | 6.3554 | | 6.5021 | | 6.5021 | | 6.3554 | | 5.8132 | | 6.2861 | | 6.2861 | | 5.8132 | | 6.3554 | | 6.5021 | | | | | | | | RU52 | 6.5021 |
| 7.181 | | | | 6.561 | | | | 6.561 | | | | 7.181 | | | | 7.181 | | | | 6.561 | | | | 6.561 | | | | 7.181 | | | | | | | | RU106 | 7.181 |
| 5.737 | | | | | | | | 5.737 | | | | | | | | 5.737 | | | | | | | | 5.737 | | | | | | | | | | | | RU242 | 5.737 |
| 5.7146 | | | | | | | | | | | | | | | | 5.7146 | | | | | | | | | | | | | | | | | | | | RU484 | 5.7146 |
| 6.9341 | | | | | | | | | | | | | | | | | | | | | | | | | | | | | | | | | | | | RU996 | 6.9341 |
| 6.9431 | | | | | | | | 6.9431 | | | | | | | | 6.9431 | | | | | | | | 6.9431 | | | | | | | | | | | | RU26+RU52 | 6.9431 |
| 6.7288 | | | | | | | | 6.7288 | | | | | | | | 6.7288 | | | | | | | | 6.7288 | | | | | | | | | | | | RU26+RU106 | 6.7288 |
| 7.4213 | | | | | | | | 7.3638 | | | | | | | | 7.3638 | | | | | | | | 7.4213 | | | | | | | | | | | | RU242+RU484 | 7.4213 |

34

**Table 20: PAPR value of each RU in a second 80 MHz in an LTF2x320MHz sequence (manner 2)**

| Per-subchannel PAPR values | RU | PAPR |
|---|---|---|
| 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | RU26 | 6.425 |
| 6.5021, 6.3554, 5.8132, 6.2861, 6.2861, 5.8132, 6.3554, 6.5021, 6.5021, 6.3554, 5.8132, 6.2861, 6.2861, 5.8132, 6.3554, 6.5021 | RU52 | 6.5021 |
| 7.181, 6.561, 6.561, 7.181, 7.181, 6.561, 6.561, 7.181 | RU106 | 7.181 |
| 5.737, 5.737, 5.737, 5.737 | RU242 | 5.737 |
| 5.7146, 6.3569 | RU484 | 6.3569 |
| 5.5348 | RU996 | 5.5348 |
| 6.9431, 6.9431, 6.9431, 6.9431 | RU26+RU52 | 6.9431 |
| 6.7288, 6.7288, 6.7288, 6.7288 | RU26+RU106 | 6.7288 |
| 8.3338, 7.6618, 7.3638, 8.1551 | RU242+RU484 | 8.3338 |

**Table 21: PAPR value of each RU in a third 80 MHz in an LTF2x320MHz sequence (manner 2)**

| RU | PAPR | Values |
|---|---|---|
| RU26 | 6.425 | 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 |
| RU52 | 6.5021 | 6.5021, 6.3554, 5.8132, 6.2861, 6.2861, 5.8132, 6.3554, 6.5021, 6.5021, 6.3554, 5.8132, 6.2861, 6.2861, 5.8132, 6.3554, 6.5021 |
| RU106 | 7.181 | 7.181, 6.561, 6.561, 7.181, 7.181, 6.561, 6.561, 7.181 |
| RU242 | 5.737 | 5.737, 5.737, 5.737, 5.737 |
| RU484 | 6.3569 | 6.3569, 5.7146 |
| RU996 | 5.5348 | 5.5348 |
| RU26+RU52 | 6.9431 | 6.9431, 6.9431, 6.9431, 6.9431 |
| RU26+RU106 | 6.7288 | 6.7288, 6.7288, 6.7288, 6.7288 |
| RU242+RU484 | 8.3338 | 8.1551, 7.3638, 7.6618, 8.3338 |

EP 4 167 534 A1

36

**Table 22: PAPR value of each RU in a fourth 80 MHz in an LTF2x320MHz sequence (manner 2)**

| | | | | | | | | | | | | | | | | | | | | | | | | | | | | | | | | | | | | RU | Value |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | 6.3554 | | 5.8132 | | 6.2861 | | 6.2861 | | 5.8132 | | 6.3554 | | 6.5021 | | | 6.5021 | | | 6.3554 | | 5.8132 | | 6.2861 | | 6.2861 | | 5.8132 | | 6.3554 | | | 6.5021 | | | | RU52 | 6.5021 |
| 7.181 | | | 6.561 | | | 6.561 | | | 7.181 | | | 7.181 | | | 6.561 | | | 6.561 | | | 7.181 | | | | | | | | | | | | | | | RU106 | 7.181 |
| 5.737 | | | | | 5.737 | | | | | | 5.737 | | | | | 5.737 | | | | | | | | | | | | | | | | | | | | RU242 | 5.737 |
| 6.3569 | | | | | | | | | 6.3569 | | | | | | | | | | | | | | | | | | | | | | | | | | | RU484 | 6.3569 |
| 7.4422 | | | | | | | | | | | | | | | | | | | | | | | | | | | | | | | | | | | | RU996 | 7.4422 |
| 6.9431 | | | | | | | | 6.9431 | | | | | | | | 6.9431 | | | | | | | | 6.9431 | | | | | | | | | | | | RU26+RU52 | 6.9431 |
| 6.7288 | | | | | | | | 6.7288 | | | | | | | | 6.7288 | | | | | | | | 6.7288 | | | | | | | | | | | | RU26+RU106 | 6.7288 |
| 7.6618 | | | | | | | | 7.6618 | | | | | | | | 7.6618 | | | | | | | | 7.6618 | | | | | | | | | | | | RU242+RU484 | 7.6618 |

For another example, PAPR values of other RUs in more than 80 MHz (to be specific, a multi-RU combination) in the LTF2x320MHz sequence in the manner 2 in Table 8 are shown in the following Table 23.

**Table 23: PAPR values of multi-RU combinations in an LTF2x320MHz sequence in the manner 2 in Table 8**

| | | | | | | | | | |
|---|---|---|---|---|---|---|---|---|---|
| 6.7443 | 8.2949 | 6.7273 | 7.6055 | 7.6045 | 7.7432 | 7.9883 | 8.0463 | RU484+3*RU996 | 8.2949 |
| 7.5963 | 7.8897 | 8.1012 | 7.4804 | | | | | 3*RU996 | 8.1012 |
| 7.4016 | 7.6213 | 7.2712 | 7.3925 | 7.5201 | 7.5237 | | | RU484+2*RU996 | 7.6213 |
| 7.1368 | 8.5028 | 7.6456 | 7.1309 | 8.9747 | 7.4242 | | | | 8.9747 |
| 7.7987 | 7.4939 | 8.0416 | 9.0683 | 8.6806 | 8.9747 | | | | 9.0683 |
| 7.5859 | 6.4937 | 8.5028 | 7.5859 | 7.6781 | 7.967 | | | | 8.5028 |
| 8.0877 | 7.5999 | | | | | | | 2*RU996 | 8.0877 |
| 7.3743 | 8.0137 | 6.9577 | 9.0133 | 6.5565 | 8.4927 | 7.5204 | 7.6086 | RU484+RU996 | 9.0133 |
| 6.5443 | | | | | | | | 4*RU996 | 6.5443 |

Optionally, the LTF2x320MHz sequence has a small PAPR value in the manner 3 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz to a fourth 80 MHz in the LTF2x320MHz sequence in the manner 3 is as follows:

**Table 24: PAPR value of each RU in a first 80 MHz in an LTF2x320MHz sequence (manner 3)**

| | RU | Value |
|---|---|---|
| 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | RU26 | 6.425 |
| 6.5021, 6.3554, 5.8132, 6.2861, 6.2861, 5.8132, 6.3554, 6.5021, 6.5021, 6.3554, 5.8132, 6.2861, 6.2861, 5.8132, 6.3554, 6.5021 | RU52 | 6.5021 |
| 7.181, 6.561, 6.561, 7.181, 7.181, 6.561, 6.561, 7.181 | RU106 | 7.181 |
| 5.737, 5.737, 5.737, 5.737 | RU242 | 5.737 |
| 5.7146, 5.7146 | RU484 | 5.7146 |
| 6.9341 | RU996 | 6.9341 |
| 6.9431, 6.9431, 6.9431, 6.9431 | RU26+RU52 | 6.9431 |
| 6.7288, 6.7288, 6.7288, 6.7288 | RU26+RU106 | 6.7288 |
| 7.4213, 7.3638, 7.3638, 7.4213 | RU242+RU484 | 7.4213 |

Table 25: PAPR value of each RU in a second 80 MHz in an LTF2x320MHz sequence (manner 3)

| RU | PAPR values | Value |
|---|---|---|
| RU26 | 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816, 4.9816, 6.425, 5.9179, 5.7735, 5.7625, 5.7806, 5.6816, 5.9027, 6.2691, 6.2691, 5.9027, 5.6816, 5.7806, 5.7625, 5.7735, 5.9179, 6.425, 4.9816 | 6.425 |
| RU52 | 6.5021, 6.3554, 5.8132, 6.2861, 6.2861, 5.8132, 6.3554, 6.5021, 6.5021, 6.3554, 5.8132, 6.2861, 6.2861, 5.8132, 6.3554, 6.5021 | 6.5021 |
| RU106 | 7.181, 6.561, 6.561, 7.181, 7.181, 6.561, 6.561, 7.181 | 7.181 |
| RU242 | 5.737, 5.737, 5.737, 5.737 | 5.737 |
| RU484 | 5.7146, 6.3569 | 6.3569 |
| RU996 | 5.5348 | 5.5348 |
| RU26+RU52 | 6.9431, 6.9431, 6.9431, 6.9431 | 6.9431 |
| RU26+RU106 | 6.7288, 6.7288, 6.7288, 6.7288 | 6.7288 |
| RU242+RU484 | 8.3338, 7.6618, 7.3638, 8.1551 | 8.3338 |

**Table 26: PAPR value of each RU in a third 80 MHz in an LTF2x320MHz sequence (manner 3)**

| | | | | | | | | | | | | | | | | | | | | | | | | | | | | | | | | | | | | RU | |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | | 6.3554 | | | 5.8132 | | 6.2861 | | 6.2861 | | 5.8132 | | | 6.3554 | | | 6.5021 | 6.5021 | | | 6.3554 | | | 5.8132 | | 6.2861 | | 6.2861 | | 5.8132 | | | 6.3554 | | 6.5021 | RU52 | 6.5021 |
| 7.181 | | | | 6.561 | | | | 6.561 | | | | 7.181 | | | | 7.181 | | | | | 6.561 | | | | 6.561 | | | | 7.181 | | | | | | | RU106 | 7.181 |
| 5.737 | | | | | | | | | 5.737 | | | | | | | | | 5.737 | | | | | | | | | | 5.737 | | | | | | | | RU242 | 5.737 |
| 6.3569 | | | | | | | | | | | | | | | | | | 5.7146 | | | | | | | | | | | | | | | | | | RU484 | 6.3569 |
| 5.5348 | | | | | | | | | | | | | | | | | | | | | | | | | | | | | | | | | | | | RU996 | 5.5348 |
| 6.9431 | | | | | | | | | 6.9431 | | | | | | | | | 6.9431 | | | | | | | | | | 6.9431 | | | | | | | | RU26+RU52 | 6.9431 |
| 6.7288 | | | | | | | | | 6.7288 | | | | | | | | | 6.7288 | | | | | | | | | | 6.7288 | | | | | | | | RU26+RU106 | 6.7288 |
| 8.1551 | | | | | | | | | 7.3638 | | | | | | | | | 7.6618 | | | | | | | | | | 8.3338 | | | | | | | | RU242+RU484 | 8.3338 |

40

**Table 27: PAPR value of each RU in a fourth 80 MHz in an LTF2x320MHz sequence (manner 3)**

| | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|
| 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | 4.9816 | 6.425 | 5.9179 | 5.7735 | 5.7625 | 5.7806 | 5.6816 | 5.9027 | 6.2691 | 6.2691 | 5.9027 | 5.6816 | 5.7806 | 5.7625 | 5.7735 | 5.9179 | 6.425 | 4.9816 | RU26 | 6.425 |
| 6.5021 | 6.3554 | | 5.8132 | 6.2861 | | 6.2861 | 5.8132 | | 6.3554 | 6.5021 | | 6.5021 | 6.3554 | | 5.8132 | 6.2861 | | 6.2861 | 5.8132 | | 6.3554 | 6.5021 | | | | | | | | | | | | | | | RU52 | 6.5021 |
| 7.181 | | 6.561 | | 6.561 | | 7.181 | | 7.181 | | 6.561 | | 6.561 | | 7.181 | | | | | | | | | | | | | | | | | | | | | | RU106 | 7.181 |
| 5.737 | | | | 5.737 | | | | 5.737 | | | | 5.737 | | | | | | | | | | | | | | | | | | | | | | | | RU242 | 5.737 |
| 6.3569 | | | | | | | | 6.3569 | | | | | | | | | | | | | | | | | | | | | | | | | | | | RU484 | 6.3569 |
| 7.4422 | | | | | | | | | | | | | | | | | | | | | | | | | | | | | | | | | | | | RU996 | 7.4422 |
| 6.9431 | | | | 6.9431 | | | | 6.9431 | | | | 6.9431 | | | | | | | | | | | | | | | | | | | | | | | | RU26+RU52 | 6.9431 |
| 6.7288 | | | | 6.7288 | | | | 6.7288 | | | | 6.7288 | | | | | | | | | | | | | | | | | | | | | | | | RU26+RU106 | 6.7288 |
| 7.6618 | | | | 7.6618 | | | | 7.6618 | | | | 7.6618 | | | | | | | | | | | | | | | | | | | | | | | | RU242+RU484 | 7.6618 |

For another example, PAPR values of other RUs in more than 80 MHz (to be specific, a multi-RU combination) in the LTF2x320MHz sequence in the manner 3 in Table 8 are shown in the following Table 28.

**Table 28: PAPR values of multi-RU combinations in an LTF2x320MHz sequence in the manner 3 in Table 8**

| | | | | | | | | | |
|---|---|---|---|---|---|---|---|---|---|
| 6.7443 | 8.2949 | 6.7273 | 7.6055 | 7.6045 | 7.7432 | 7.9883 | 8.0463 | RU484+3*RU996 | 8.2949 |
| 7.5963 | 7.8897 | 8.1012 | 7.4804 | | | | | 3*RU996 | 8.1012 |
| 7.4016 | 7.6213 | 7.2712 | 7.3925 | 7.5201 | 7.5237 | | | RU484+2*RU996 | 7.6213 |
| 7.1368 | 8.5028 | 7.6456 | 7.1309 | 8.9747 | 7.4242 | | | | 8.9747 |
| 7.7987 | 7.4939 | 8.0416 | 9.0683 | 8.6806 | 8.9747 | | | | 9.0683 |
| 7.5859 | 6.4937 | 8.5028 | 7.5859 | 7.6781 | 7.967 | | | | 8.5028 |
| 7.5999 | 5.9549 | 8.001 | | | | | | 2*RU996 | 8.001 |
| 8.1513 | 5.9549 | 8.0877 | | | | | | | 8.1513 |
| 6.4349 | 8.001 | 8.0877 | | | | | | | 8.0877 |
| 7.5999 | 8.1513 | 6.4349 | | | | | | | 8.1513 |
| 7.3743 | 8.0137 | 6.9577 | 9.0133 | 6.5565 | 8.4927 | 7.5204 | 7.6086 | RU484+RU996 | 9.0133 |
| 6.5443 | | | | | | | | 4*RU996 | 6.5443 |

This embodiment of this application provides the 2x LTF sequence (to be specific, an LTF2x320MHz sequence) in the manner 2 and the manner 3 of the multi-RU combination in the 320 MHz bandwidth. The 2x LTF sequence is generated based on the LTF2x80MHz sequence, and has the small PAPR value. This provides a basis for subsequent channel estimation.

**Embodiment 7**

Embodiment 7 of this application describes in detail a second method for generating the first LTF sequence. Embodiment 7 of this application generates the first LTF sequence in a 4x case based on a Golay (Golay) sequence and a Boolean function while comprehensively considering impact of factors such as a plurality of RU combinations, a plurality of puncturing patterns, and pilot flipping on the first LTF sequence. In this case, the first LTF sequence with a smaller PAPR value can be obtained.

Optionally, the first LTF sequence may be a new 4x LTF sequence in an 80 MHz bandwidth (an LTF4x80MHz sequence for short). A possible method for generating the LTF4x80MHz sequence is as follows:

S21: Define a quadratic Boolean function set Func.

S22: Select one function $f(x_1, x_2,...,x_7)$ from the quadratic Boolean function set Func during traversal, and determine a function $g(x_1, x_2, ..., x_7) = f + x_{\pi(1)}$ based on the selected function $f$. A truth table of functions $f$ and g is separately obtained, and related distribution is denoted as sequences $\overline{f}$ and $\overline{g}$. Assuming that $a = (_{-1})^{\overline{f}}$, $b = (-1)^{\overline{g}}$, a sequence pair (a, b) is one binary Golay complementary pair with a length of 128.

Specifically, for step S21 to step S22, refer to step S11 to step S12 in Embodiment 2. Details are not described herein again.

S23: Define $\mathbf{a}_{121}$ = a(1:121), $\mathbf{b}_{121}$ = b(8:128), $\mathbf{a}_{128}$ = a, and $\mathbf{b}_{128}$ = b. seq1001 = [$\mathbf{a}_{128}$, $\pm\mathbf{b}_{121}$, $\pm\mathbf{a}_{121}$, $\pm\mathbf{b}_{128}$, $0_5$, $\pm\mathbf{a}_{128}$, $\pm\mathbf{b}_{121}$, $\pm\mathbf{a}_{121}$, $\pm\mathbf{b}_{128}$]. $0_5$ indicates five consecutive 0s.

S24: Obtain a tobe-selected sequence seq1001 for 80 MHz in a 4x case.

S25: Obtain a sequence with a smallest comprehensive PAPR as an LTF4x80MHz sequence through computer search of 42041 to-be-selected sequences seq1001.

Specifically, LTF4x80MHz (-500:1:500) = [$a_{128}$, $(-1)*b_{121}$, $(-1)*a_{121}$, $(-1)*b_{128}$, 05, $(-1)*a_{128}$, $(-1)*b_{121}$, $a_{121}$, $(-1)*b_{128}$]. The LTF4x80MHz sequence has a length of 1001. (-500:1:500) in the LTF4x80MHz (-500:1:500) indicates that subcarrier indices corresponding to 80 MHz are -500 to 500. For details, refer to the "802.11be tone plan".

A coefficient L of the LTF4x80MHz sequence = [1 -1 -1 -1 -1 -1 1 -1]. A binary Golay complementary pair (a, b) with a length of 128 is as follows:

$a$ = [1 1 1 1 1 –1 –1 1 1 1 –1 –1 1 –1 1 –1 –1 –1 –1 –1 –1 –1 1 1 –1 1 1 –1 –1 1 –1 1 –1 1 1 1 1 1 –1 –1 1 1 1

–1 –1 1 1 –1 1 –1 1 1 1 1 1 –1 –1 1 1 –1 1 –1 1 1 1 –1 1 1 –1 1 –1 –1 –1 –1 –1 1 1 1 –1 –1 –1 1 1 1 –1 1 1 –1 1 1 1 1 1 1 1 –1 –1 1 1 –1

–1 1 1 1 –1 1 1 –1 1 1 1 1 1 1 –1 –1 1 1 1 1 –1 –1 1 1 1 –1 1 1 –1 1 1 –1 1 1 1 1 1 1 –1 –1 1 1 –1 –1 1 1 1 –1 1 1 –1 1 –1 1 1 –1 1 –1 1 1]

$b$ = [–1 –1 –1 –1 –1 1 1 –1 –1 1 1 1 –1 1 1 –1 1 1 1 1 1 1 1 –1 –1 1 1 1 –1 –1 1 1 1 –1 1 1 –1 1 1 –1 1 1 –1 –1 –1 –1 –1 1 1 –

1 –1 –1 1 1 –1 1 1 –1 1 1 –1 –1 1 –1 –1 1 1 1 –1 1 1 1 –1 –1 1 1 –1 1 1 –1 –1 1 –1 1 –1 –1 –1 –1 1 –1 1 1 –1 –1 1 1 1 –1 1 1 1 1 1 1 1 –

1 –1 1 –1 –1 1 1 1 –1 1 1 –1 1 1 1 1 1 1 1 –1 –1 1 1 1 1 –1 –1 1 1 –1 1 1 –1 1 –1 1 1 –1 1 1 –1 1 –1 1 1]

Optionally, the LTF4x80MHz sequence obtained in step S25 has a small PAPR value. For example, a PAPR value of each RU (a multi-RU combination or a single RU) in the LTF4x80MHz sequence is specifically shown in the following Table 29.

Table 29: PAPR value of each RU in an LTF4x80MHz sequence

| | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.337 | 5.2379 | 6.3833 | 5.4877 | 5.3386 | 5.5426 | 5.0836 | 5.9215 | 6.2124 | 5.2379 | 5.9345 | 5.8967 | 5.9347 | 6.044 | 4.7698 | 4.941 | 4.941 | 4.7698 | 6.044 | 5.9347 | 5.8967 | 5.9345 | 5.2379 | 6.2124 | 5.9215 | 5.0836 | 5.5426 | 5.3386 | 5.4877 | 6.3833 | 5.2379 | 6.337 | 5.8503 | 4.9796 | RU26 | 6.3833 |
| 6.5855 | 5.8088 | | 5.6134 | 6.324 | 6.9224 | 6.5136 | | 6.3304 | 5.3911 | | 5.3911 | 6.3304 | | 6.5136 | 6.9224 | 6.324 | 5.6134 | | 5.8088 | 6.5855 | | | | | | | | | | | | | | | | RU52 | 6.9224 |
| 6.5635 | | 6.1034 | | 6.3062 | | 6.2019 | | 6.2019 | | 6.3062 | | 6.1034 | | 6.5635 | | | | | | | | | | | | | | | | | | | | | | RU106 | 6.5635 |
| 6.5287 | | | | 6.1475 | | | | 6.1475 | | | | 6.5287 | | | | | | | | | | | | | | | | | | | | | | | | RU242 | 6.5287 |
| 6.1345 | | | | | | | | 6.1345 | | | | | | | | | | | | | | | | | | | | | | | | | | | | RU484 | 6.1345 |
| 6.137 | | | | | | | | | | | | | | | | | | | | | | | | | | | | | | | | | | | | RU996 | 6.137 |
| 7.4429 | | | | 6.2312 | | | | 6.2312 | | | | 7.4429 | | | | | | | | | | | | | | | | | | | | | | | | RU26+RU52 | 7.4429 |
| 6.1194 | | | | 6.8836 | | | | 6.8836 | | | | 6.1194 | | | | | | | | | | | | | | | | | | | | | | | | RU26+RU106 | 6.8836 |
| 6.8794 | | | | 7.4326 | | | | 7.4326 | | | | 6.8794 | | | | | | | | | | | | | | | | | | | | | | | | RU242+RU484 | 7.4326 |

In this embodiment of this application, a plurality of to-be-selected sequences in the 4x case are generated based on the Golay (Golay) sequence and the Boolean function, and then the sequence with the smallest comprehensive PAPR is selected from the to-be-selected sequences as the first LTF sequence (the new 4x LTF sequence in the 80 MHz bandwidth, or LTF4x80MHz sequence), to obtain the first LTF sequence with the smaller PAPR value.

**Embodiment 8**

Embodiment 8 of this application describes a possible 4x LTF sequence in a 160 MHz bandwidth. For ease of description, the 4x LTF sequence in the 160 MHz bandwidth is referred to as an LTF4x160MHz sequence for short below. Embodiment 8 of this application generates the 4x LTF sequence in the 160 MHz bandwidth based on an LTF4x80MHz sequence while comprehensively considering impact of factors such as a plurality of RU combinations, a plurality of puncturing patterns, and pilot flipping on the LTF4x160MHz sequence. In this case, the LTF4x160MHz sequence with a smaller PAPR value can be obtained.

Specifically, a possible LTF4x160MHz sequence = [LTF4x80MHz_part1, (-1)*LTF4x80MHz_part2, LTF4x80MHz_part3, LTF4x80MHz_part4, (-1)*LTF4x80MHz_part5, $0_{23}$, LTF4x80MHz_part1, LTF4x80MHz_part2, (-1)*LTF4x80MHz_part3, LTF4x80MHz_part4, LTF4x80MHz_part5].

A coefficient L of the LTF4x160MHz sequence = [1 -1 1 1 -1 1 1 -1 1 1]. $0_{23}$ indicates 23 consecutive 0s. The LTF4x80MHz is a new 4x LTF sequence in an 80 MHz bandwidth in Embodiment 7, and has a length of 1001. LTF4x80MHz = [LTF4x80MHz_part1, LTF4x80MHz_part2, LTF4x80MHz_part3, LTF4x80MHz_part4, LTF4x80MHz_part5]. LTF4x80MHz_part1 = LTF4x80MHz (1:242). LTF4x80MHz_part2 = LTF4x80MHz (243:484). LTF4x80MHz_part3 = LTF4x80MHz (485:517). LTF4x80MHz_part4 = LTF4x80MHz (518:759). LTF4x80MHz_part5 = LTF4x80MHz (760:1001). LTF4x80MHz (1:242) may indicate a $1^{st}$ element to a $242^{nd}$ element of the LTF4x80MHz sequence. LTF4x80MHz (243:484) may indicate a $243^{rd}$ element to a $484^{th}$ element of the LTF4x80MHz sequence. LTF4x80MHz (485:517) may indicate a $485^{th}$ element to a $517^{th}$ element of the LTF4x80MHz sequence. LTF4x80MHz (518:759) may indicate a $518^{th}$ element to a $759^{th}$ element of the LTF4x80MHz sequence. LTF4x80MHz (760:1001) may indicate a $760^{th}$ element to a $1001^{st}$ element of the LTF4x80MHz sequence.

It may be understood that meanings of LTF4x80MHz_part1, LTF4x80MHz_part2, LTF4x80MHz_part3, the LTF4x80MHz_part4, and the LTF4x80MHz_part5 are the same below. Therefore, details are not described below again.

It may be understood that a lenght of the LTF4x160MHz sequence is 1001 + 23 + 1001 = 2025.

Optionally, the LTF4x160MHz sequence has a small PAPR value in various cases of 160 MHz (including a full 160 MHz bandwidth, various puncturing patterns in 160 MHz, and various multi-RU combinations in 160 MHz).

For example, a PAPR value of each RU (including a multi-RU combination or a single RU) in a first 80 MHz and a second 80 MHz in the LTF4x160MHz sequence is as follows:

Table 30: PAPR value of each RU in a first 80 MHz in an LTF4x160MHz sequence

| | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 6.4157 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.4157 |
| 6.5858 | | 5.8088 | | 5.6134 | | 6.324 | | 6.9224 | | 6.5137 | | 6.3304 | | 7.0712 | | 5.3915 | | 6.3304 | | 6.5137 | | 6.9224 | | 6.324 | | 5.6134 | | 5.8088 | | 6.5858 | | RU52 | 7.0712 | | | | |
| 6.5635 | | | 6.1034 | | | 6.3062 | | | 7.2392 | | | 6.2019 | | | 6.3062 | | | 6.1034 | | | 6.5635 | | | RU106 | 7.2392 | | | | | | | | | | | | |
| 6.5287 | | | | | | 6.4217 | | | | | | 6.1475 | | | | | | 6.5287 | | | | | | RU242 | 6.5287 | | | | | | | | | | | | |
| 6.3604 | | | | | | | | | | | | 6.0972 | | | | | | | | | | | | RU484 | 6.3604 | | | | | | | | | | | | |
| 7.5239 | | | | | | | | | | | | | | | | | | | | | | | | RU996 | 7.5239 | | | | | | | | | | | | |
| 7.4435 | | | | | | 6.2312 | | | | | | 6.2312 | | | | | | 7.4435 | | | | | | RU26+RU52 | 7.4435 | | | | | | | | | | | | |
| 6.123 | | | | | | 7.2704 | | | | | | 6.8836 | | | | | | 6.123 | | | | | | RU26+RU106 | 7.2704 | | | | | | | | | | | | |
| 7.016 | | | | | | 7.5684 | | | | | | 7.4405 | | | | | | 7.3324 | | | | | | RU242+RU484 | 7.5684 | | | | | | | | | | | | |

**Table 31: PAPR value of each RU in a second 80 MHz in an LTF4x160MHz sequence**

| | | | | | | | | | | | | | | | | | RU | PAPR |
|---|---|---|---|---|---|---|---|---|---|---|---|---|---|---|---|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 6.4157, 6.4157, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | | | | | | | | | | | | | | | | | RU26 | 6.4157 |
| 6.5858, 5.8088, 5.6134, 6.324, 6.9224, 6.5137, 6.3304, 7.0712, 7.0712, 6.3304, 6.5137, 6.9224, 6.324, 5.6134, 5.8088, 6.5858 | | | | | | | | | | | | | | | | | RU52 | 7.0712 |
| 6.5635, 6.1034, 6.3062, 7.2392, 7.2392, 6.3062, 6.1034, 6.5635 | | | | | | | | | | | | | | | | | RU106 | 7.2392 |
| 6.5287, 6.4217, 6.4217, 6.5287 | | | | | | | | | | | | | | | | | RU242 | 6.5287 |
| 6.567, 6.567 | | | | | | | | | | | | | | | | | RU484 | 6.567 |
| 7.1371 | | | | | | | | | | | | | | | | | RU996 | 7.1371 |
| 7.4435, 6.2312, 6.2312, 7.4435 | | | | | | | | | | | | | | | | | RU26+RU52 | 7.4435 |
| 6.123, 7.2704, 7.2704, 6.123 | | | | | | | | | | | | | | | | | RU26+RU106 | 7.2704 |
| 7.3057, 7.431, 7.431, 7.3057 | | | | | | | | | | | | | | | | | RU242+RU484 | 7.431 |

For another example, PAPR values of other RUs in more than 80 MHz (to be specific, a multi-RU combination) in the LTF4x160MHz sequence are shown in the following Table 32.

**Table 32: PAPR value of a multi-RU combination in an LTF4x160MHz sequence**

| 7.6258 | | | | | | | | 2*RU996 | 7.6258 |
|---|---|---|---|---|---|---|---|---|---|
| 7.4417 | 7.5527 | 8.2019 | 7.4228 | | | | | RU484+RU996 | 8.2019 |
| 7.7636 | 7.63 | 7.6039 | 7.8399 | 8.1653 | 7.9825 | 8.2861 | 7.888 | RU242+RU484+RU996 | 8.2861 |

This embodiment of this application provides the 4x LTF sequence in the 160 MHz bandwidth based on the LTF4x80MHz and the 4x LTF sequence has a smaller PAPR value.

**Embodiment 9**

Embodiment 9 of this application describes a possible 4x LTF sequence in a 240 MHz bandwidth. For ease of description, the 4x LTF sequence in the 240 MHz bandwidth is referred to as an LTF4x240MHz sequence for short below. Embodiment 9 of this application generates the 2x LTF sequence in the 240 MHz bandwidth based on an LTF4x80MHz sequence while comprehensively considering impact of factors such as a plurality of RU combinations, a plurality of puncturing patterns, and pilot flipping on the LTF4x240MHz sequence. In this case, the LTF4x240MHz sequence with a smaller PAPR value can be obtained.

Specifically, a possible LTF4x240MHz sequence = [LTF4x80MHz_part1, LTF4x80MHz_part2, LTF4x80MHz_part3, LTF4x80MHz_part4, (-1)*LTF4x80MHz_part5, $0_{23}$, (-1)*LTF4x80MHz_part1, LTF4x80MHz_part2, LTF4x80MHz_part3, LTF4x80MHz_part4, LTF4x80MHz_part5, $0_{23}$, LTF4x80MHz_part1, LTF4x80MHz_part2, (-1)*LTF4x80MHz_part3, (-1)*LTF4x80MHz_part4, LTF4x80MHz_part5].

A coefficient L of the LTF4x240MHz sequence = [1 1 1 1 -1 -1 1 1 1 1 1 -1 -1 1]. The LTF4x80MHz is a new 4x LTF sequence in an 80 MHz bandwidth in Embodiment 7.

It may be understood that a length of the LTF4x240MHz sequence is $1001 \times 3 + 23 \times 2 = 3049$.

Optionally, the LTF4x240MHz sequence has a small PAPR value in 240 MHz in various cases (including a full 240 MHz bandwidth, various puncturing patterns in 240 MHz, and various multi-RU combinations in 240 MHz) in Table 7.

For example, a PAPR value of each RU (including a multi-RU combination or a single RU) in a first 80 MHz to a third 80 MHz in the LTF4x240MHz sequence is as follows:

**Table 33: PAPR value of each RU in a first 80 MHz in an LTF4x240MHz sequence**

| Values | RU | PAPR |
|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 4.9411, 4.9411, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | RU26 | 6.3834 |
| 6.5858, 5.8088, 5.6134, 6.324, 6.9224, 6.5138, 6.3305, 5.3916, 5.3916, 6.3305, 6.5138, 6.9224, 6.324, 5.6134, 5.8088, 6.5858 | RU52 | 6.9224 |
| 6.5644, 6.1041, 6.3062, 6.2019, 6.2019, 6.3062, 6.1041, 6.5644 | RU106 | 6.5644 |
| 6.5302, 6.1475, 6.1475, 6.5302 | RU242 | 6.5302 |
| 6.1564, 6.1046 | RU484 | 6.1564 |
| 7.2746 | RU996 | 7.2746 |
| 7.4435, 6.2312, 6.2312, 7.4435 | RU26+RU52 | 7.4435 |
| 6.123, 6.8839, 6.8839, 6.123 | RU26+RU106 | 6.8839 |
| 7.0934, 8.3752, 7.4326, 7.5804 | RU242+RU484 | 8.3752 |

**Table 34: PAPR value of each RU in a second 80 MHz in an LTF4x240MHz sequence**

| Per-tone PAPR values | | RU | Max |
|---|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 4.9411, 4.9411, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | | RU26 | 6.3834 |
| 6.5858, 5.8088, 5.6134, 6.324, 6.9224, 6.5138, 6.3305, 5.3916, 5.3916, 6.3305, 6.5138, 6.9224, 6.324, 5.6134, 5.8088, 6.5858 | | RU52 | 6.9224 |
| 6.5644, 6.1041, 6.3062, 6.2019, 6.2019, 6.3062, 6.1041, 6.5644 | | RU106 | 6.5644 |
| 6.5302, 6.1475, 6.1475, 6.5302 | | RU242 | 6.5302 |
| 6.1046, 6.1564 | | RU484 | 6.1564 |
| 7.2746 | | RU996 | 7.2746 |
| 7.4435, 6.2312, 6.2312, 7.4435 | | RU26+RU52 | 7.4435 |
| 6.123, 6.8839, 6.8839, 6.123 | | RU26+RU106 | 6.8839 |
| 7.5804, 7.4326, 8.3752, 7.0934 | | RU242+RU484 | 8.3752 |

**Table 35: PAPR value of each RU in a third 80 MHz in an LTF4x240MHz sequence**

| | | | | | | | | | | | | | | | | | RU | PAPR |
|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 6.4157 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.4157 |
| 6.5858 | 5.8088 | | 5.6134 | 6.324 | 6.9224 | 6.5138 | | 6.3305 | 7.0712 | 5.3916 | 6.3305 | | 6.5138 | 6.9224 | 6.324 | 5.6134 | | 5.8088 | 6.5858 | | | | | | | | | | | | | | | | | RU52 | 7.0712 |
| 6.5644 | | 6.1041 | 6.3062 | | 7.2399 | 6.2019 | | 6.3062 | 6.1041 | | 6.5644 | | | | | | | | | | | | | | | | | | | | | | | | | RU106 | 7.2399 |
| 6.5302 | | | 6.4248 | | | 6.1475 | | | 6.5302 | | | | | | | | | | | | | | | | | | | | | | | | | | | RU242 | 6.5302 |
| 6.567 | | | | | | 6.1046 | | | | | | | | | | | | | | | | | | | | | | | | | | | | | | RU484 | 6.567 |
| 8.2554 | | | | | | | | | | | | | | | | | | | | | | | | | | | | | | | | | | | | RU996 | 8.2554 |
| 7.4435 | | | 6.2312 | | | 6.2312 | | | 7.4435 | | | | | | | | | | | | | | | | | | | | | | | | | | | RU26+RU52 | 7.4435 |
| 6.123 | | | 7.2704 | | | 6.8839 | | | 6.123 | | | | | | | | | | | | | | | | | | | | | | | | | | | RU26+RU106 | 7.2704 |
| 7.2123 | | | 7.5684 | | | 7.3074 | | | 7.3057 | | | | | | | | | | | | | | | | | | | | | | | | | | | RU242+RU484 | 7.5684 |

For another example, PAPR values of other RUs in more than 80 MHz (to be specific, a multi-RU combination) in the LTF4x240MHz sequence in Table 7 are shown in the following Table 36.

**Table 36: PAPR value of a multi-RU combination in an LTF4x240MHz sequence**

| 8.3187 | 7.891 | 7.2367 | 8.0776 | 8.2887 | 8.4861 | | | RU484+2*996 | 8.4861 |
|---|---|---|---|---|---|---|---|---|---|
| 7.8425 | 7.8753 | 8.0056 | | | | | | 2*RU996 | 8.0056 |
| 7.5183 | 7.6146 | 7.6146 | 7.5183 | 7.9014 | 7.6213 | 7.4344 | 7.0332 | RU484+RU996 | 7.9014 |
| 8.2249 | | | | | | | | 3*RU996 | 8.2249 |

This embodiment of this application provides the 4x LTF sequence (to be specific, the LTF4x240MHz sequence) for the 240 MHz bandwidth. The LTF4x240MHz sequence is generated based on the LTF4x80MHz sequence, and has the small PAPR value. This provides a basis for subsequent channel estimation.

**Embodiment 10**

Embodiment 10 of this application describes a possible 4x LTF sequence in a 320 MHz bandwidth. For ease of description, the 4x LTF sequence in the 320 MHz bandwidth is referred to as an LTF4x320MHz sequence for short below. Embodiment 10 of this application generates the 4x LTF sequence in the 320 MHz bandwidth based on an LTF4x80MHz sequence while comprehensively considering impact of factors such as a plurality of RU combinations, a plurality of puncturing patterns, and pilot flipping on the LTF4x320MHz sequence. In this case, the LTF4x320MHz sequence with a smaller PAPR value can be obtained.

Specifically, a possible LTF4x320MHz sequence = [LTF4x80MHz_part1, LTF4x80MHz_part2, LTF4x80MHz_part3, LTF4x80MHz_part4, LTF4x80MHz_part5, $0_{23}$, LTF4x80MHz_part1, (-1)* LTF4x80MHz_part2, LTF4x80MHz_part3, LTF4x80MHz_part4, (-1)*LTF4x80MHz_part5, $0_{23}$, (-1)* LTF4x80MHz_part1, (-1)*LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, LTF4x80MHz_part3, LTF4x80MHz_part4, (-1)*LTF4x80MHz_part5].

A coefficient L of the LTF4x320MHz sequence = [1 1 1 1 1 1 -1 1 1 -1 -1 -1 1 1 1 -1 1 1 1 -1]. $0_{23}$ indicates 23 consecutive 0s. The LTF4x80MHz is a new 4x LTF sequence in an 80 MHz bandwidth in Embodiment 7, and has a length of 1001.

It may be understood that a length of the LTF4x320MHz sequence is $1001 \times 4 + 23 \times 3 = 4073$.

Optionally, the LTF4x320MHz sequence has a small PAPR value in the manner 1 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz to a fourth 80 MHz in the LTF4x320MHz sequence in the manner 1 is as follows:

**Table 37: PAPR value of each RU in a first 80 MHz in an LTF4x320MHz sequence**

| | | | | | | | | | | | | | | | | | | | | | | | | | | | | | | | | | | | | | RU | Value |
|---|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | 5.6134 | | 6.324 | | 6.9224 | | 6.5138 | | | 6.3305 | | 5.3916 | | | 5.3916 | | 6.3305 | | | 6.5138 | | 6.9224 | | 6.324 | | 5.6134 | | 5.8088 | | 6.5858 | | RU52 | 6.9224 |
| 6.5644 | | | 6.1041 | | | 6.3062 | | | 6.2019 | | | 6.2019 | | | 6.3062 | | | 6.1041 | | | 6.5644 | | | | | | | | | | | | | RU106 | 6.5644 |
| 6.5302 | | | | | | 6.1475 | | | | | | 6.1475 | | | | | | 6.5302 | | | | | | | | | | | | | | | | RU242 | 6.5302 |
| 6.1564 | | | | | | | | | | | | 6.1564 | | | | | | | | | | | | | | | | | | | | | | RU484 | 6.1564 |
| 6.179 | | | | | | | | | | | | | | | | | | | | | | | | | | | | | | | | | | RU996 | 6.179 |
| 7.4435 | | | | | | 6.2312 | | | | | | 6.2312 | | | | | | 7.4435 | | | | | | | | | | | | | | | | RU26+RU52 | 7.4435 |
| 6.123 | | | | | | 6.8839 | | | | | | 6.8839 | | | | | | 6.123 | | | | | | | | | | | | | | | | RU26+RU106 | 6.8839 |
| 7.0661 | | | | | | 7.4326 | | | | | | 7.4326 | | | | | | 7.0661 | | | | | | | | | | | | | | | | RU242+RU484 | 7.4326 |

**Table 38: PAPR value of each RU in a second 80 MHz in an LTF4x320MHz sequence**

| Values | | | | | | | | RU | PAPR |
|---|---|---|---|---|---|---|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 6.4157, 4.9411, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | | | | | | | | RU26 | 6.4157 |
| 6.5858 | 5.8088 | 5.6134 | 6.324 | 6.9224 | 6.5138 | 6.3305 | 7.0712 | RU52 | 7.0712 |
| 5.3916 | 6.3305 | 6.5138 | 6.9224 | 6.324 | 5.6134 | 5.8088 | 6.5858 | | |
| 6.5644 | 6.1041 | 6.3062 | 7.2399 | 6.2019 | 6.3062 | 6.1041 | 6.5644 | RU106 | 7.2399 |
| 6.5302 | 6.4248 | 6.1475 | 6.5302 | | | | | RU242 | 6.5302 |
| 6.3604 | 6.1046 | | | | | | | RU484 | 6.3604 |
| 7.5239 | | | | | | | | RU996 | 7.5239 |
| 7.4435 | 6.2312 | 6.2312 | 7.4435 | | | | | RU26+RU52 | 7.4435 |
| 6.123 | 7.2704 | 6.8839 | 6.123 | | | | | RU26+RU106 | 7.2704 |
| 7.0934 | 7.5684 | 7.4524 | 7.4069 | | | | | RU242+RU484 | 7.5684 |

EP 4 167 534 A1

**Table 39: PAPR value of each RU in a third 80 MHz in an LTF4x320MHz sequence**

| PAPR values (left to right) | RU | Value |
|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 6.4157, 4.9411, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | RU26 | 6.4157 |
| 6.5858, 5.8088, 5.6134, 6.324, 6.9224, 6.5138, 6.3305, 7.0712, 5.3916, 6.3305, 6.5138, 6.9224, 6.324, 5.6134, 5.8088, 6.5858 | RU52 | 7.0712 |
| 6.5644, 6.1041, 6.3062, 7.2399, 6.2019, 6.3062, 6.1041, 6.5644 | RU106 | 7.2399 |
| 6.5302, 6.4248, 6.1475, 6.5302 | RU242 | 6.5302 |
| 6.567, 6.1564 | RU484 | 6.567 |
| 7.7205 | RU996 | 7.7205 |
| 7.4435, 6.2312, 6.2312, 7.4435 | RU26+RU52 | 7.4435 |
| 6.123, 7.2704, 6.8839, 6.123 | RU26+RU106 | 7.2704 |
| 7.5804, 7.2789, 7.3074, 7.8962 | RU242+RU484 | 7.8962 |

**Table 40: PAPR value of each RU in a fourth 80 MHz in an LTF4x320MHz sequence**

| | | | | | | | | | | | | | | | | | | | | | | | | | | | | | | | | | | | | RU | value |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | 5.6134 | 6.324 | | 6.9224 | | 6.5138 | | 6.3305 | | 5.3916 | | 5.3916 | | 6.3305 | | 6.5138 | | 6.924 | | 6.324 | | 5.6134 | | | 5.8088 | | 6.5858 | | | | | | | RU52 | 6.9224 |

| | | | | | | | | RU | value |
|---|---|---|---|---|---|---|---|---|---|
| 6.5644 | | 6.1041 | | 6.3062 | | 6.2019 | | 6.2019 | 6.3062 |
| | 6.1041 | | 6.5644 | RU106 | 6.5644 | | | | |

| | | | RU | value |
|---|---|---|---|---|
| 6.5302 | 6.1475 | 6.1475 | 6.5302 | RU242 |
| 6.1046 | 6.1046 | | RU484 | 6.1046 |
| 7.6907 | | | RU996 | 7.6907 |
| 7.4435 | 6.2312 | 6.2312 | 7.4435 | RU26+RU52 |
| 6.123 | 6.8839 | 6.8839 | 6.123 | RU26+RU106 |
| 7.2123 | 8.3752 | 8.3752 | 7.2123 | RU242+RU484 |

(Table 40 trailing values — RU242: 6.5302, RU26+RU52: 7.4435, RU26+RU106: 6.8839, RU242+RU484: 8.3752)

For another example, PAPR values of other RUs in more than 80 MHz (to be specific, a multi-RU combination) in the LTF4x320MHz sequence in the manner 1 in Table 8 are shown in the following Table 41.

**Table 41: PAPR values of multi-RU combinations in an LTF4x320MHz sequence in the manner 1 in Table 8**

| 8.1661 | 8.5346 | 8.08 | 7.936 | 8.3941 | 8.2548 | 8.4507 | 8 | RU484+3*RU996 | 8.5346 |
|---|---|---|---|---|---|---|---|---|---|
| 7.7891 | 7.9706 | 7.8722 | 8.3753 | | | | | 3*RU996 | 8.3753 |
| 7.7308 | 6.94 | | | | | | | 2*RU996 | 7.7308 |
| 8.021 | 7.6717 | 7.3086 | 6.8378 | 7.3944 | 7.583 | 8.1026 | 8.3884 | RU484+RU996 | 8.3884 |
| 7.3905 | | | | | | | | 4*RU996 | 7.3905 |

This embodiment of this application provides the 4x LTF sequence (to be specific, the LTF4x320MHz sequence) for the 320 MHz bandwidth. The LTF4x320MHz sequence is generated based on the LTF4x80MHz sequence, and has the small PAPR value. This provides a basis for subsequent channel estimation.

**Embodiment 11**

Embodiment 11 of this application describes a possible 4x LTF sequence in the manner 2 and the manner 3 in a 320 MHz bandwidth in Table 8. Embodiment 11 of this application generates the 4x LTF sequence in the 320 MHz bandwidth based on an LTF4x80MHz sequence while comprehensively considering impact of factors such as a plurality of RU combinations, a plurality of puncturing patterns, and pilot flipping on the LTF4x320MHz sequence. In this case, the LTF4x320MHz sequence with a smaller PAPR value can be obtained.

Specifically, a possible LTF4x320MHz sequence = [LTF4x80MHz_part1, LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, (-1)*LTF4x80MHz_part3, LTF4x80MHz_part4, LTF4x80MHz_part5, $0_{23}$, (-1)*LTF4x80MHz_part1, (-1)*LTF4x80MHz_part2, (-1)*LTF4x80MHz_part3, (-1)*LTF4x80MHz_part4, LTF4x80MHz_part5, $0_{23}$, LTF4x80MHz_part1, (-1)*LTF4x80MHz_part2, (-1)*LTF4x80MHz_part3, (-1)*LTF4x80MHz_part4, LTF4x80MHz_part5].

A coefficient L of the LTF4x320MHz sequence = [1 1 1 1 1 -1 1 -1 1 1 -1 -1 -1 -1 1 1 -1 -1 -1 1]. $0_{23}$ indicates 23 consecutive 0s. The LTF4x80MHz is a new 4x LTF sequence in an 80 MHz bandwidth in Embodiment 7, and has a length of 1001.

It may be understood that a length of the LTF4x320MHz sequence is $1001 \times 4 + 23 \times 3 = 4073$.

Optionally, the LTF4x320MHz sequence has a small PAPR value in the manner 2 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz in the LTF4x320MHz sequence in the manner 2 is as follows:

**Table 42: PAPR value of each RU in a first 80 MHz in an LTF4x320MHz sequence (manner 2)**

| | | | | | | | | | | | | | | | | | | | | | | | | | | | | | | | | | | | | RU | Value |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | | 5.6134 | 6.324 | | | 6.9224 | 6.5138 | | | | 6.3305 | 5.3916 | | | 5.3916 | 6.3305 | | | | 6.5138 | 6.9224 | | | 6.324 | 5.6134 | | | 5.8088 | 6.5858 | | | | | RU52 | 6.9224 |
| 6.5644 | | | 6.1041 | | 6.3062 | | | | 6.2019 | | | | 6.2019 | | | | 6.3062 | | | | 6.1041 | | | | 6.5644 | | | | | | | | | | | RU106 | 6.5644 |
| 6.5302 | | | | | | 6.1475 | | | | | | | 6.1475 | | | | | | | 6.5302 | | | | | | | | | | | | | | | | RU242 | 6.5302 |
| 6.1564 | | | | | | | | | | | | | 6.1564 | | | | | | | | | | | | | | | | | | | | | | | RU484 | 6.1564 |
| 6.179 | | | | | | | | | | | | | | | | | | | | | | | | | | | | | | | | | | | | RU996 | 6.179 |
| 7.4435 | | | | | | 6.2312 | | | | | | | 6.2312 | | | | | | | 7.4435 | | | | | | | | | | | | | | | | RU26+RU52 | 7.4435 |
| 6.123 | | | | | | 6.8839 | | | | | | | 6.8839 | | | | | | | 6.123 | | | | | | | | | | | | | | | | RU26+RU106 | 6.8839 |

| | |
|---|---|
| 7.4326 | RU242+RU484 |
| 7.0661 | |
| 7.4326 | |
| 7.4326 | |
| 7.0661 | |

Table 43: PAPR value of each RU in a second 80 MHz in an LTF4x320MHz sequence (manner 2)

| PAPR values | RU | Value |
|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 6.4157, 6.4157, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | RU26 | 6.4157 |
| 6.5858, 5.8088, 5.6134, 6.324, 6.9224, 6.5138, 6.3305, 7.0712, 7.0712, 6.3305, 6.5138, 6.9224, 6.324, 5.6134, 5.8088, 6.5858 | RU52 | 7.0712 |
| 6.5644, 6.1041, 6.3062, 7.2399, 7.2399, 6.3062, 6.1041, 6.5644 | RU106 | 7.2399 |
| 6.5302, 6.4248, 6.4248, 6.5302 | RU242 | 6.5302 |
| 6.3604, 6.567 | RU484 | 6.567 |
| 7.7083 | RU996 | 7.7083 |
| 7.4435, 6.2312, 6.2312, 7.4435 | RU26+RU52 | 7.4435 |
| 6.123, 7.2704, 7.2704, 6.123 | RU26+RU106 | 7.2704 |
| 7.8962, 7.431, 7.7859, 7.4069 | RU242+RU484 | 7.8962 |

Table 44: PAPR value of each RU in a third 80 MHz in an LTF4x320MHz sequence (manner 2)

| Sub-band values | | | | | | | | | | | | | | | | | | | | | | | | | | | | | | | | | | | | RU | Value |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | 5.6134 | | 6.324 | | 6.9224 | | 6.5138 | | | 6.3305 | | 5.3916 | | | 5.3916 | 6.3305 | | | 6.5138 | | 6.9224 | | 6.324 | | 5.6134 | | | 5.8088 | | 6.5858 | | | | RU52 | 6.9224 |
| 6.5644 | | | | 6.1041 | | | 6.3062 | | | | 6.2019 | | | | 6.2019 | | | | 6.3062 | | | | 6.1041 | | | | 6.5644 | | | | | | | | | RU106 | 6.5644 |
| 6.5302 | | | | | | | | 6.1475 | | | | | | | | 6.1475 | | | | | | | | 6.5302 | | | | | | | | | | | | RU242 | 6.5302 |
| 6.1564 | | | | | | | | | | | | | | | | 6.1046 | | | | | | | | | | | | | | | | | | | | RU484 | 6.1564 |
| 7.2746 | | | | | | | | | | | | | | | | | | | | | | | | | | | | | | | | | | | | RU996 | 7.2746 |
| 7.4435 | | | | | | | | 6.2312 | | | | | | | | 6.2312 | | | | | | | | 7.4435 | | | | | | | | | | | | RU26+RU52 | 7.4435 |
| 6.123 | | | | | | | | 6.8839 | | | | | | | | 6.8839 | | | | | | | | 6.123 | | | | | | | | | | | | RU26+RU106 | 6.8839 |
| 7.0934 | | | | | | | | 8.3752 | | | | | | | | 7.4326 | | | | | | | | 7.5804 | | | | | | | | | | | | RU242+RU484 | 8.3752 |

**EP 4 167 534 A1**

Table 45: PAPR value of each RU in a fourth 80 MHz in an LTF4x320MHz sequence (manner 2)

| | | | | | | | | | | | | | | | | | | | | | | | | | | | | | | | | | | | | RU | PAPR |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | 5.6134 | 6.324 | | 6.9224 | 6.5138 | | 6.3305 | 5.3916 | | 5.3916 | 6.3305 | | 6.5138 | 6.9224 | | 6.324 | 5.6134 | | 5.8088 | 6.5858 | | | | | | | | | | | | | | RU52 | 6.9224 |
| 6.5644 | | 6.1041 | | 6.3062 | | 6.2019 | | 6.2019 | | 6.3062 | | 6.1041 | | 6.5644 | | | | | | | | | | | | | | | | | | | | | | RU106 | 6.5644 |
| 6.5302 | | | | 6.1475 | | | | 6.1475 | | | | 6.5302 | | | | | | | | | | | | | | | | | | | | | | | | RU242 | 6.5302 |
| 6.1046 | | | | | | | | 6.1046 | | | | | | | | | | | | | | | | | | | | | | | | | | | | RU484 | 6.1046 |
| 7.6907 | | | | | | | | | | | | | | | | | | | | | | | | | | | | | | | | | | | | RU996 | 7.6907 |
| 7.4435 | | | | 6.2312 | | | | 6.2312 | | | | 7.4435 | | | | | | | | | | | | | | | | | | | | | | | | RU26+RU52 | 7.4435 |
| 6.123 | | | | 6.8839 | | | | 6.8839 | | | | 6.123 | | | | | | | | | | | | | | | | | | | | | | | | RU26+RU106 | 6.8839 |
| 7.2123 | | | | 8.3752 | | | | 8.3752 | | | | 7.2123 | | | | | | | | | | | | | | | | | | | | | | | | RU242+RU484 | 8.3752 |

For another example, PAPR values of each RUs in more than 80 MHz (to be specific, a multi-RU combination) in the LTF4x320MHz sequence in the manner 2 in Table 8 are shown in the following Table 46.

**Table 46: PAPR values of multi-RU combinations in an LTF4x320MHz sequence in the manner 2 in Table 8**

| | | | | | | | | | |
|---|---|---|---|---|---|---|---|---|---|
| 8.4729 | 8.7558 | 8.9336 | 8.8846 | 8.6747 | 8.6987 | 8.4276 | 8.8166 | RU484+3*RU996 | 8.9336 |
| 8.7196 | 8.1578 | 8.2191 | 8.364 | | | | | 3*RU996 | 8.7196 |
| 8.4347 | 8.6684 | 8.5721 | 8.8573 | 8.5917 | 7.9571 | | | RU484+2*RU996 | 8.8573 |
| 8.6882 | 8.7317 | 8.4999 | 8.4906 | 8.2156 | 8.8838 | | | | 8.8838 |
| 8.5657 | 8.4942 | 8.4859 | 8.0612 | 7.9869 | 7.9447 | | | | 8.5657 |
| 8.2144 | 8.6784 | 8.5507 | 8.7317 | 8.516 | 8.6435 | | | | 8.7317 |
| 8.2785 | 8.8864 | | | | | | | 2*RU996 | 8.8864 |
| 8.8059 | 8.5709 | 8.1826 | 7.2908 | 8.662 | 7.8547 | 8.912 | 7.5183 | RU484+RU996 | 8.912 |
| 8.8663 | | | | | | | | 4*RU996 | 8.8663 |

Optionally, the LTF4x320MHz sequence has a small PAPR value in the manner 3 (including a full 320 MHz bandwidth, various puncturing patterns in 320 MHz, and various multi-RU combinations in 320 MHz) in 320 MHz in Table 8.

For example, a PAPR value of each RU (including a multi-RU combination or a single RU) in a first 80 MHz to a fourth 80 MHz in the LTF4x320MHz sequence in the manner 3 is as follows:

EP 4 167 534 A1

Table 47: PAPR value of each RU in a first 80 MHz in an LTF4x320MHz sequence (manner 3)

| | | | | | | | | | | | | | | | | | | | | | | | | | | | | | | | | | | | | RU | PAPR |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | | 5.8088 | | 5.6134 | | 6.324 | | 6.9224 | | 6.5138 | | 6.3305 | | 5.3916 | | 5.3916 | | 6.3305 | | 6.5138 | | 6.9224 | | 6.324 | | 5.6134 | | 5.8088 | | 6.5858 | | | | | | RU52 | 6.9224 |
| 6.5644 | | | | 6.1041 | | | | 6.3062 | | | | 6.2019 | | | | 6.2019 | | | | 6.3062 | | | | 6.1041 | | | | 6.5644 | | | | | | | RU106 | 6.5644 |
| 6.5302 | | | | | | | | 6.1475 | | | | | | | | 6.1475 | | | | | | | | 6.5302 | | | | | | | | | | | RU242 | 6.5302 |
| 6.1564 | | | | | | | | | | | | | | | | 6.1564 | | | | | | | | | | | | | | | | | | | RU484 | 6.1564 |
| 6.179 | | | | | | | | | | | | | | | | | | | | | | | | | | | | | | | | | | | RU996 | 6.179 |
| 7.4435 | | | | | | | | 6.2312 | | | | | | | | 6.2312 | | | | | | | | 7.4435 | | | | | | | | | | | RU26+RU52 | 7.4435 |
| 6.123 | | | | | | | | 6.8839 | | | | | | | | 6.8839 | | | | | | | | 6.123 | | | | | | | | | | | RU26+RU106 | 6.8839 |
| 7.0661 | | | | | | | | 7.4326 | | | | | | | | 7.4326 | | | | | | | | 7.0661 | | | | | | | | | | | RU242+RU484 | 7.4326 |

Table 48: PAPR value of each RU in a second 80 MHz in an LTF4x320MHz sequence (manner 3)

| | | | | | | | | | | | | | | | | | | | | | | | | | | | | | | | | | | | | RU type | Value |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 6.4157 | 6.4157 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.4157 |
| 6.5858 | | 5.8088 | | | 5.6134 | | 6.324 | | 6.9224 | | 6.5138 | | | 6.3305 | | 7.0712 | | 7.0712 | | 6.3305 | | | 6.5138 | | 6.9224 | | 6.324 | | 5.6134 | | | 5.8088 | | 6.5858 | | RU52 | 7.0712 |
| 6.5644 | | | | | 6.1041 | | | | 6.3062 | | | | | 7.2399 | | | | 7.2399 | | | | | 6.3062 | | | | 6.1041 | | | | | | | 6.5644 | | RU106 | 7.2399 |
| 6.5302 | | | | | | | | | 6.4248 | | | | | | | | | 6.4248 | | | | | | | | | 6.5302 | | | | | | | | | RU242 | 6.5302 |
| 6.3604 | | | | | | | | | | | | | | | | | | 6.567 | | | | | | | | | | | | | | | | | | RU484 | 6.567 |
| 7.7083 | | | | | | | | | | | | | | | | | | | | | | | | | | | | | | | | | | | | RU996 | 7.7083 |
| 7.4435 | | | | | | | | | 6.2312 | | | | | | | | | 6.2312 | | | | | | | | | 7.4435 | | | | | | | | | RU26+RU52 | 7.4435 |
| 6.123 | | | | | | | | | 7.2704 | | | | | | | | | 7.2704 | | | | | | | | | 6.123 | | | | | | | | | RU26+RU106 | 7.2704 |
| 7.8962 | | | | | | | | | 7.431 | | | | | | | | | 7.7859 | | | | | | | | | 7.4069 | | | | | | | | | RU242+RU484 | 7.8962 |

**Table 49: PAPR value of each RU in a third 80 MHz in an LTF4x320MHz sequence (manner 3)**

| PAPR values | RU type | Max |
|---|---|---|
| 4.9796, 5.8503, 6.3371, 5.2379, 6.3834, 5.4877, 5.3386, 5.5427, 5.0837, 5.9215, 6.2124, 5.2379, 5.9346, 5.8967, 5.9349, 6.0441, 4.7698, 4.9411, 4.9411, 4.7698, 6.0441, 5.9349, 5.8967, 5.9346, 5.2379, 6.2124, 5.9215, 5.0837, 5.5427, 5.3386, 5.4877, 6.3834, 5.2379, 6.3371, 5.8503, 4.9796 | RU26 | 6.3834 |
| 6.5858, 5.8088, 5.6134, 6.324, 6.9224, 6.5138, 6.3305, 5.3916, 5.3916, 6.3305, 6.5138, 6.9224, 6.324, 5.6134, 5.8088, 6.5858 | RU52 | 6.9224 |
| 6.5644, 6.1041, 6.3062, 6.2019, 6.2019, 6.3062, 6.1041, 6.5644 | RU106 | 6.5644 |
| 6.5302, 6.1475, 6.1475, 6.5302 | RU242 | 6.5302 |
| 6.1564, 6.1046 | RU484 | 6.1564 |
| 7.2746 | RU996 | 7.2746 |
| 7.4435, 6.2312, 6.2312, 7.4435 | RU26+RU52 | 7.4435 |
| 6.123, 6.8839, 6.8839, 6.123 | RU26+RU106 | 6.8839 |
| 7.0934, 8.3752, 7.4326, 7.5804 | RU242+RU484 | 8.3752 |

59

**Table 50: PAPR value of each RU in a fourth 80 MHz in an LTF4x320MHz sequence (manner 3)**

| | | | | | | | | | | | | | | | | | | | | | | | | | | | | | | | | | | | | RU | value |
|---|---|---|---|---|---|---|---|---|---|---|---|---|---|---|---|---|---|---|---|---|---|---|---|---|---|---|---|---|---|---|---|---|---|---|---|---|---|
| 4.9796 | 5.8503 | 6.3371 | 5.2379 | 6.3834 | 5.4877 | 5.3386 | 5.5427 | 5.0837 | 5.9215 | 6.2124 | 5.2379 | 5.9346 | 5.8967 | 5.9349 | 6.0441 | 4.7698 | 4.9411 | 4.9411 | 4.7698 | 6.0441 | 5.9349 | 5.8967 | 5.9346 | 5.2379 | 6.2124 | 5.9215 | 5.0837 | 5.5427 | 5.3386 | 5.4877 | 6.3834 | 5.2379 | 6.3371 | 5.8503 | 4.9796 | RU26 | 6.3834 |
| 6.5858 | 5.8088 | | 5.6134 | 6.324 | 6.9224 | 6.5138 | | 6.3305 | 5.3916 | | 5.3916 | 6.3305 | | 6.5138 | 6.9224 | 6.324 | 5.6134 | | 5.8088 | 6.5858 | | | | | | | | | | | | | | | | RU52 | 6.9224 |
| 6.5644 | | 6.1041 | | 6.3062 | | 6.2019 | | 6.2019 | | 6.3062 | | 6.1041 | | 6.5644 | | | | | | | | | | | | | | | | | | | | | | RU106 | 6.5644 |
| 6.5302 | | | | 6.1475 | | | | 6.1475 | | | | 6.5302 | | | | | | | | | | | | | | | | | | | | | | | | RU242 | 6.5302 |
| 6.1046 | | | | | | | | 6.1046 | | | | | | | | | | | | | | | | | | | | | | | | | | | | RU484 | 6.1046 |
| 7.6907 | | | | | | | | | | | | | | | | | | | | | | | | | | | | | | | | | | | | RU996 | 7.6907 |
| 7.4435 | | | | 6.2312 | | | | 6.2312 | | | | 7.4435 | | | | | | | | | | | | | | | | | | | | | | | | RU26+RU52 | 7.4435 |
| 6.123 | | | | 6.8839 | | | | 6.8839 | | | | 6.123 | | | | | | | | | | | | | | | | | | | | | | | | RU26+RU106 | 6.8839 |
| 7.2123 | | | | 8.3752 | | | | 8.3752 | | | | 7.2123 | | | | | | | | | | | | | | | | | | | | | | | | RU242+RU484 | 8.3752 |

For another example, PAPR values of other RUs in more than 80 MHz (to be specific, a multi-RU combination) in the LTF4x320MHz sequence in the manner 3 in Table 8 are shown in the folllowing Table 51.

**Table 51: PAPR values of multi-RU combinations in an LTF4x320MHz sequence in the manner 3 in Table 8**

| | | | | | | | | RU | value |
|---|---|---|---|---|---|---|---|---|---|
| 8.4729 | 8.7558 | 8.9336 | 8.8846 | 8.6747 | 8.6987 | 8.4276 | 8.8166 | RU484+3*RU996 | 8.9336 |
| 8.7196 | 8.1578 | 8.2191 | 8.364 | | | | | 3*RU996 | 8.7196 |
| 8.4347 | 8.6684 | 8.5721 | 8.8573 | 8.5917 | 7.9571 | | | RU484+2*RU996 | 8.8573 |
| 8.6882 | 8.7317 | 8.4999 | 8.4906 | 8.2156 | 8.8838 | | | | 8.8838 |
| 8.5657 | 8.4942 | 8.4859 | 8.0612 | 7.9869 | 7.9447 | | | | 8.5657 |
| 8.2144 | 8.6784 | 8.5507 | 8.7317 | 8.516 | 8.6435 | | | | 8.7317 |
| 8.8864 | 8.0679 | 8.2856 | | | | | | 2*RU996 | 8.8864 |
| 9.0787 | 8.0679 | 8.2785 | | | | | | | 9.0787 |
| 7.552 | 8.2856 | 8.2785 | | | | | | | 8.2856 |
| 8.8864 | 9.0787 | 7.552 | | | | | | | 9.0787 |
| 8.8059 | 8.5709 | 8.1826 | 7.2908 | 8.662 | 7.8547 | 8.912 | 7.5183 | RU484+RU996 | 8.912 |
| 8.8663 | | | | | | | | 4*RU996 | 8.8663 |

This embodiment of this application provides the 4x LTF sequence (to be specific, an LTF4x320MHz sequence) in the manner 2 and the manner 3 of the multi-RU combination in the 320 MHz bandwidth. The 4x LTF sequence is generated based on the LTF4x80MHz sequence, and has the small PAPR value. This provides a basis for subsequent channel estimation.

The foregoing content describes in detail the method provided in this application. To better implement the foregoing solutions in embodiments of this application, embodiments of this application further provide corresponding apparatuses or devices.

In embodiments of this application, functional modules in the multi-link device may be defined based on the foregoing method examples. For example, each functional module may be defined in a correspondence to each function, or two or more functions may be integrated in one processing module. The integrated module may be implemented in a form of hardware, or may be implemented in a form of a software function module. It should be noted that, in embodiments of this application, module division is an example, and is merely a logical function division. In actual implementation, another division manner may be used.

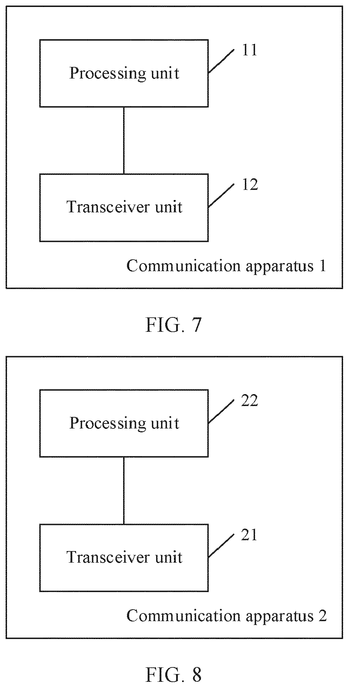

When an integrated unit is used, FIG. 7 is a schematic diagram of a structure of a communication apparatus according to an embodiment of this application. The communication apparatus 1 may be a first communication device (for example, an AP) or a chip in the first communication device (for example, the AP), for example, a Wi-Fi chip. As shown in FIG. 7, the communication apparatus 1 includes a processing unit 11 and a transceiver unit 12.

The processing unit 11 is configured to generate a PPDU. The PPDU includes an LTF sequence. The LTF sequence is generated based on a first LTF sequence. The first LTF sequence is not a high efficiency LTF sequence. The transceiver unit 12 is configured to send the PPDU over a first bandwidth. The first bandwidth is greater than or equal to 80 MHz.

The communication apparatus 1 in this embodiment of this application lias any function of the first communication device in the foregoing method. Details are not described herein again.

FIG. 8 is a schematic diagram of another structure of a communication apparatus according to an embodiment of this application. The communication apparatus 2 may be a second communication device (for example, a STA) or a chip in the second communication device (for example, the STA), for example, a Wi-Fi chip. As shown in FIG. 8, the communication apparatus 2 includes a transceiver unit 21 and a processing unit 22.

The transceiver unit 21 is configured to receive a PPDU over a first bandwidth. The first bandwidth is greater than or equal to 80 MHz. The processing unit 22 is configured to parse the received PPDU to obtain an LTF sequence included in the PPDU. The LTF sequence is generated based on a first LTF sequence. The first LTF sequence is not a high efficiency LTF sequence.

The communication apparatus 2 in this embodiment of this application has any function of the second communication device in the foregoing method. Details are not described herein again.

The foregoing describes the first communication device and the second communication device in this embodiment of this application. The following describes possible product forms of the first communication device and the second communication device. It should be understood that any form of product having a function of the first communication device in FIG. 7 and any form of product having a function of the second communication device in FIG. 8 both fall within the protection scope of embodiments of this application. It should be further understood that the following description is merely an example, and the product forms of the first communication device and the second communication device in this embodiment of this application is not limited thereto.

In a possible product form, the first communication device and the second communication device in this embodiment of this application may be implemented by using a general bus architecture.

The first communication device includes a processor and a transceiver that is internally connected to and communicates with the processor. The processor is configured to generate a PPDU. The PPDU includes an LTF sequence. The LTF sequence is generated based on a first LTF sequence. The first LTF sequence is not a high efficiency LTF sequence. The transceiver is configured to send the PPDU over a first bandwidth. The first bandwidth is greater than or equal to 80 MHz. Optionally, the first communication device may further include a memory. The memory is configured to store instructions to be executed by the processor.

The second communication device includes a processor and a transceiver that is internally connected to and communicates with the processor. The transceiver is configured to receive a PPDU over a first bandwidth. The first bandwidth is greater than or equal to 80 MHz. The processor is configured to parse the received PPDU to obtain an LTF sequence included in the PPDU. The LTF sequence is generated based on a first LTF sequence. The first LTF sequence is not a high efficiency LTF sequence. Optionally, the second communication device may further include a memory. The memory is configured to store instructions to be executed by the processor.

In a possible product form, the first communication device and the second communication device in this embodiment of this application may be implemented by general-purpose processors.

A general-purpose processor for implementing the first communication device includes a processing circuit and an input/output interface that is internally connected to and communicates with the processing circuit. The processing circuit is configured to generate a PPDU. The PPDU includes an LTF sequence. The LTF sequence is generated based on a first LTF sequence. The first LTF sequence is not a high efficiency LTF sequence. The input/output interface is configured to send the PPDU over a first bandwidth. The first bandwidth is greater than or equal to 80 MHz. Optionally, the general-purpose processor may further include a storage medium, and the storage medium is configured to store instructions executed by the processing circuit.

A general-purpose processor for implementing the second communication device includes a processing circuit and an input/output interface that is internally connected to and communicates with the processing circuit. The input/output interface is configured to receive a PPDU over a first bandwidth. The first bandwidth is greater than or equal to 80 MHz. The processing circuit is configured to parse the received PPDU to obtain an LTF sequence included in the PPDU. The LTF sequence is generated based on a first LTF sequence. The first LTF sequence is not a high efficiency LTF sequence. Optionally, the general-purpose processor may further include a storage medium, and the storage medium is configured to store instructions executed by the processing circuit.

Alternatively, as a possible product form, the first communication device and the second communication device described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the communication apparatuses in the foregoing various product forms have any function of the AP MLD in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including a first communication device (for example, an AP) and a second communication device (for example, a STA). The first communication device and the second communication device may perform the method in any one of the foregoing embodiments.

Method or algorithm steps described in combination with the content disclosed in this application may be implemented by using hardware, or may be implemented by using a processor by executing a software instruction. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A method for transmitting a physical layer protocol data unit, comprising:

   generating, by a first communication device, a physical layer protocol data unit PPDU, wherein the PPDU comprises a long training field LTF sequence, the LTF sequence is generated based on a first LTF sequence, and the first LTF sequence is not a high efficiency LTF sequence; and
   sending, by the first communication device, the PPDU over a first bandwidth, wherein the first bandwidth is greater than or equal to 80 MHz.

2. A method for transmitting a physical layer protocol data unit, comprising:

   receiving, by a second communication device, a PPDU over a first bandwidth, wherein the first bandwidth is greater than or equal to 80 MHz; and
   parsing, by the second communication device, the received PPDU to obtain an LTF sequence comprised in the PPDU, wherein the LTF sequence is generated based on a first LTF sequence, and the first LTF sequence is not a high efficiency LTF sequence.

3. The method according to claim 1 or 2, wherein the first LTF sequence is determined based on a Golay complementary pair (a, b) with a length of 128, wherein a is determined based on a truth table of a quadratic Boolean function *f*, and b is determined based on a truth table of a function *g,* wherein the function g is determined based on the quadratic Boolean function *f*.

4. The method according to any one of claims 1 to 3, wherein the first LTF sequence is a 2x LTF sequence in an 80 MHz bandwidth, and the first LTF sequence has a length of 1001; and

the first LTF sequence is: LTF2x80MHz (-500:2:500) = $[a_{121}, b_{128}, 0_3, -a_{128}, -b_{121}]$, wherein the expression indicates that values of subcarriers at even locations in subcarriers numbered -500 to 500 are sequentially values in the foregoing sequence, values of subcarriers at other locations are 0s, $a_{121}$ = a (5:125), $b_{121}$ = b (4:124), $a_{128}$ = a, $b_{128}$ = b, $0_3$ indicates three consecutive 0s, $a = (-1)^{\overline{f}}$, and $b = (-1)^{\overline{g}}$, wherein $\overline{f}$ indicates the truth table of the quadratic Boolean function *f*, and $\overline{g}$ indicates the truth table of the function *g*, wherein the function $g(x_1, x_2,..., x_7) = f + x_{\pi(1)}$, wherein $\pi$ is an arrangement or permutation of symbols {1, 2, ..., 7}, and $\pi(1)$ indicates a first number in the current arrangement $\pi$.

5. The method according to any one of claims 1 to 3, wherein the first LTF sequence is a 4x LTF sequence in an 80 MHz bandwidth, wherein

LTF4x80MHz (-500:1:500) = $[a_{128}, (-1)*b_{121}, (-1)*a_{121}, (-1)*b_{128}, 0_5, (-1)*a_{128}, (-1)*b_{121}, a_{121}, (-1)*b_{128}]$, wherein LTF4x80MHz (-500:1:500) indicates the first LTF sequence with a length of 1001, $a_{121}$ = a (1:121), $b_{121}$ = b (8:128), $a_{128}$ = a, $b_{128}$ = b, $0_5$ indicates five consecutive 0s, $a = (-1)^{\overline{f}}$, and $b = (-1)^{\overline{g}}$, wherein $\overline{f}$ indicates the truth table of the quadratic Boolean function *f*, and $\overline{g}$ indicates the truth table of the function *g*, wherein the function $g(x_1, x_2,...,x_7) = f + x_{\pi(1)}$, wherein $\pi$ is an arrangement or permutation of symbols {1, 2, ..., 7}, and $\pi(1)$ indicates a first number in the current arrangement $\pi$.

6. The method according to claim 4 or 5, wherein the first bandwidth is 160 MHz and the LTF sequence is:

[LTF2x80MHz_part1, LTF2x80MHz_part2, LTF2x80MHz_part3, LTF2x80MHz_part4, LTF2x80MHz_part5, $0_{23}$, LTF2x80MHz_part1, (-1)* LTF2x80MHz_part2, (-1)*LTF2x80MHz_part3, (-1)*LTF2x80MHz_part4, LTF2x80MHz_part5]; or
[LTF4x80MHz_part1, (-1)*LTF4x80MHz_part2, LTF4x80MHz_part3, LTF4x80MHz_part4, (-1)*LTF4x80MHz_part5, $0_{23}$, LTF4x80MHz_part1, LTF4x80MHz_part2, (-1)* LTF4x80MHz_part3, LTF4x80MHz_part4, LTF4x80MHz_part5], wherein
both LTF2x80MHz and LTF4x80MHz indicate the first LTF sequence with the length of 1001, wherein LTF2x80MHz = [LTF2x80MHz_part1, LTF2x80MHz_part2, LTF2x80MHz_part3, LTF2x80MHz_part4, LTF2x80MHz_part5], wherein LTF2x80MHz_part1 is a 1st element to a 242nd element of LTF2x80MHz, LTF2x80MHz_part2 is a 243rd element to a 484th element of LTF2x80MHz, LTF2x80MHz_part3 is a 485th element to a 517th element of LTF2x80MHz, LTF2x80MHz_part4 is a 518th element to a 759th element of LTF2x80MHz, and LTF2x80MHz_part5 is a 760th element to a 1001st element of LTF2x80MHz; and LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a 1st element to a 242nd element of LTF4x80MHz, LTF4x80MHz_part2 is a 243rd element to a 484th element of LTF4x80MHz, LTF4x80MHz_part3 is a 485th element to a 517th element of LTF4x80MHz, LTF4x80MHz_part4 is a 518th element to a 759th element of LTF4x80MHz, and LTF4x80MHz_part5 is a 760th element to a 1001st element of LTF4x80MHz; and $0_{23}$ indicates 23 consecutive 0s.

7. The method according to claim 4 or 5, wherein the first bandwidth is 240 MHz and the LTF sequence is:

[LTF2x80MHz_Left, 0, (-1)*LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF4x80MHz_part1, LTF4x80MHz_part2, LTF4x80MHz_part3, LTF4x80MHz_part4, (-1)*LTF4x80MHz_part5, $0_{23}$, (-1)*LTF4x80MHz_part1, LTF4x80MHz_part2, LTF4x80MHz_part3, LTF4x80MHz_part4, LTF4x80MHz_part5, $0_{23}$, LTF4x80MHz_part1, LTF4x80MHz_part2, (-1)*LTF4x80MHz_part3, (-1)*LTF4x80MHz_part4, LTF4x80MHz_part5], wherein
both LTF2x80MHz and LTF4x80MHz indicate the first LTF sequence with the length of 1001, wherein LTF2x80MHz = [LTF2x80MHz_Left, 0, LTF2x80MHz _Right], wherein LTF2x80MHz_Left is a 1st element to a 500th element of LTF2x80MHz, and LTF2x80MHz_Right is a 502nd element to a 1001st element of LTF2x80MHz; and

LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a 1st element to a 242nd element of LTF4x80MHz, LTF4x80MHz_part2 is a 243rd element to a 484th element of LTF4x80MHz, LTF4x80MHz_part3 is a 485th element to a 517th element of LTF4x80MHz, LTF4x80MHz_part4 is a 518th element to a 759th element of LTF4x80MHz, and LTF4x80MHz_part5 is a 760th element to a 1001st element of LTF4x80MHz; and $0_{23}$ indicates 23 consecutive 0s.

8. The method according to claim 4, wherein the first bandwidth is 320 MHz and the LTF sequence is:

[LTF2x80MHz_Left, 0, (-1)*LTF2x80MHz_Right, $0_{23}$, (-1)*LTF2x80MHz_Left, 0, LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF2x80MHz_part1, LTF2x80MHz_part2, LTF2x80MHz_part3, LTF2x80MHz_part4, LTF2x80MHz_part5, $0_{23}$, LTF2x80MHz_part1, LTF2x80MHz_part2, LTF2x80MHz_part3, LTF2x80MHz_part4, (-1)*LTF2x80MHz_part5, $0_{23}$, LTF2x80MHz_part1, (-1)*LTF2x80MHz_part2, (-1)*LTF2x80MHz_part3, (-1)*LTF2x80MHz_part4, (-1)*LTF2x80MHz_part5, $0_{23}$, (-1)*LTF2x80MHz_part1, LTF2x80MHz_part2, LTF2x80MHz_part3, LTF2x80MHz_part4, (-1)*LTF2x80MHz_part5], wherein

LTF2x80MHz indicates the first LTF sequence with the length of 1001, wherein LTF2x80MHz = [LTF2x80MHz_Left, 0, LTF2x80MHz_Right], wherein LTF2x80MHz_Left is a 1st element to a 500th element of LTF2x80MHz, and LTF2x80MHz_Right is a 502nd element to a 1001st element of LTF2x80MHz; and

LTF2x80MHz = [LTF2x80MHz_part1, LTF2x80MHz_part2, LTF2x80MHz_part3, LTF2x80MHz_part4, LTF2x80MHz_part5], wherein LTF2x80MHz_part1 is a 1st element to a 242nd element of LTF2x80MHz, LTF2x80MHz_part2 is a 243rd element to a 484th element of LTF2x80MHz, LTF2x80MHz_part3 is a 485th element to a 517th element of LTF2x80MHz, LTF2x80MHz_part4 is a 518th element to a 759th element of LTF2x80MHz, and LTF2x80MHz_part5 is a 760th element to a 1001st element of LTF2x80MHz; and 023 indicates 23 consecutive 0s.

9. The method according to claim 5, wherein the first bandwidth is 320 MHz and the LTF sequence is:

[LTF4x80MHz_part1, LTF4x80MHz_part2, LTF4x80MHz_part3, LTF4x80MHz_part4, LTF4x80MHz_part5, $0_{23}$, LTF4x80MHz_part1, (-1)*LTF4x80MHz_part2, LTF4x80MHz_part3, LTF4x80MHz_part4, (-1)*LTF4x80MHz_part5, $0_{23}$, (-1)* LTF4x80MHz_part1, (-1)*LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, LTF4x80MHz_part3, LTF4x80MHz_part4, (-1)*LTF4x80MHz_part5]; or
[LTF4x80MHz_part1, LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, (-1)*LTF4x80MHz_part3, LTF4x80MHz_part4, LTF4x80MHz_part5, $0_{23}$, (-1)*LTF4x80MHz_part1, (-1)*LTF4x80MHz_part2, (-1)*LTF4x80MHz_part3, (-1)*LTF4x80MHz_part4, LTF4x80MHz_part5, $0_{23}$, LTF4x80MHz_part1, (-1)*LTF4x80MHz_part2, (-1)*LTF4x80MHz_part3, (-1)*LTF4x80MHz_part4, LTF4x80MHz_part5], wherein

LTF4x80MHz indicates the first LTF sequence with the length of 1001, wherein LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a 1st element to a 242nd element of LTF4x80MHz, LTF4x80MHz_part2 is a 243rd element to a 484th element of LTF4x80MHz, LTF4x80MHz_part3 is a 485th element to a 517th element of LTF4x80MHz, LTF4x80MHz_part4 is a 518th element to a 759th element of LTF4x80MHz, and LTF4x80MHz_part5 is a 760th element to a 1001st element of LTF4x80MHz; and 023 indicates 23 consecutive 0s.

10. The method according to any one of claims 1 to 9, wherein the PPDU is an extremely high throughput PPDU, and the LTF sequence is carried in an extremely high throughput EHT long training field in the extremely high throughput PPDU.

11. A communication apparatus, applied to a first communication device and comprising:

a processing unit, configured to generate a PPDU, wherein the PPDU comprises an LTF sequence, the LTF sequence is generated based on a first LTF sequence, and the first LTF sequence is not a high efficiency LTF sequence; and
a transceiver unit, configured to send the PPDU over a first bandwidth, wherein the first bandwidth is greater than or equal to 80 MHz.

12. A communication apparatus, applied to a second communication device and comprising:

a transceiver unit, configured to receive a PPDU over a first bandwidth, wherein the first bandwidth is greater than or equal to 80 MHz; and
a processing unit, configured to parse the received PPDU to obtain an LTF sequence comprised in the PPDU, wherein the LTF sequence is generated based on a first LTF sequence, and the first LTF sequence is not a high efficiency LTF sequence.

13. The communication apparatus according to claim 11 or 12, wherein the first LTF sequence is determined based on a Golay complementary pair (a, b) with a length of 128, wherein a is determined based on a truth table of a quadratic Boolean function $f$, and b is determined based on a truth table of a function $g$, wherein the function $g$ is determined based on the quadratic Boolean function $f$.

14. The communication apparatus according to any one of claims 11 to 13, wherein the first LTF sequence is a 2x LTF sequence in an 80 MHz bandwidth, and the first LTF sequence has a length of 1001; and

the first LTF sequence is: LTF2x80MHz (-500:2:500) = $[a_{121}, b_{128}, 0_3, -a_{128}, -b_{121}]$, wherein the expression indicates that values of subcarriers at even locations in subcarriers numbered -500 to 500 are sequentially values in the foregoing sequence, values of subcarriers at other locations are 0s, $a_{121}$ = a (5:125), $b_{121}$ = b (4:124), $a_{128}$ = a, $b_{128}$ = b, $0_3$ indicates three consecutive 0s, $a = (-1)^{\overline{f}}$, and b = $(-1)^{\overline{g}}$, wherein $\overline{f}$ indicates the truth table of the quadratic Boolean function $f$, and $\overline{g}$ indicates the truth table of the function $g$, wherein the function $g(x_1,x_2,...,x_7) = f + x_{\pi(1)}$, wherein $\pi$ is an arrangement or permutation of symbols {1, 2, ..., 7}, and $\pi(1)$ indicates a first number in the current arrangement $\pi$.

15. The communication apparatus according to any one of claims 11 to 13, wherein the first LTF sequence is a 4x LTF sequence in an 80 MHz bandwidth, wherein

LTF4x80MHz (-500:1:500) = $[a_{128}, (-1)*b_{121}, (-1)*a_{121}, (-1)*b_{128}, 0_5, (-1)*a_{128}, (-1)*b_{121}, a_{121}, (-1)*b_{128}]$, wherein LTF4x80MHz (-500:1:500) indicates the first LTF sequence with a length of 1001, $a_{121}$ = a (1:121), $b_{121}$ = b (8:128), $a_{128}$ = a, $b_{128}$ = b, $0_5$ indicates five consecutive 0s, $a = (-1)^{\overline{f}}$, and $b = (-1)^{\overline{g}}$, wherein $\overline{f}$ indicates the truth table of the quadratic Boolean function $f$, and $\overline{g}$ indicates the truth table of the function g, wherein the function $g(x_1,x_2,...,x_7) = f + x_{\pi(1)}$, wherein $\pi$ is an arrangement or permutation of symbols {1, 2, ..., 7}, and $\pi(1)$ indicates a first number in the current arrangement $\pi$.

16. The communication apparatus according to claim 14 or 15, wherein the first bandwidth is 160 MHz and the LTF sequence is:

[LTF2x80MHz_part1, LTF2x80MHz_part2, LTF2x80MHz_part3, LTF2x80MHz_part4, LTF2x80MHz_part5, $0_{23}$, LTF2x80MHz_part1, (-1)* LTF2x80MHz_part2, (-1)*LTF2x80MHz_part3, (-1)*LTF2x80MHz_part4, LTF2x80MHz_part5]; or
[LTF4x80MHz_part1, (-1)*LTF4x80MHz_part2, LTF4x80MHz_part3, LTF4x80MHz_part4, (-1)*LTF4x80MHz_part5, $0_{23}$, LTF4x80MHz_part1, LTF4x80MHz_part2, (-1)* LTF4x80MHz_part3, LTF4x80MHz_part4, LTF4x80MHz_part5], wherein
both LTF2x80MHz and LTF4x80MHz indicate the first LTF sequence with the length of 1001, wherein LTF2x80MHz = [LTF2x80MHz_part1, LTF2x80MHz_part2, LTF2x80MHz_part3, LTF2x80MHz_part4, LTF2x80MHz_part5], wherein LTF2x80MHz_part1 is a 1st element to a 242nd element of LTF2x80MHz, LTF2x80MHz_part2 is a 243rd element to a 484th element of LTF2x80MHz, LTF2x80MHz_part3 is a 485th element to a 517th element of LTF2x80MHz, LTF2x80MHz_part4 is a 518th element to a 759th element of LTF2x80MHz, and LTF2x80MHz_part5 is a 760th element to a 1001st element of LTF2x80MHz; and LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a 1st element to a 242nd element of LTF4x80MHz, LTF4x80MHz_part2 is a 243rd element to a 484th element of LTF4x80MHz, LTF4x80MHz_part3 is a 485th element to a 517th element of LTF4x80MHz, LTF4x80MHz_part4 is a 518th element to a 759th element of LTF4x80MHz, and LTF4x80MHz_part5 is a 760th element to a 1001st element of LTF4x80MHz; and $0_{23}$ indicates

23 consecutive 0s.

17. The communication apparatus according to claim 14 or 15, wherein the first bandwidth is 240 MHz and the LTF sequence is:

[LTF2x80MHz_Left, 0, (-1)*LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF4x80MHz_part1, LTF4x80MHz_part2, LTF4x80MHz_part3, LTF4x80MHz_part4, (-1)*LTF4x80MHz_part5, $0_{23}$, (-1)*LTF4x80MHz_part1, LTF4x80MHz_part2, LTF4x80MHz_part3, LTF4x80MHz_part4, LTF4x80MHz_part5, $0_{23}$, LTF4x80MHz_part1, LTF4x80MHz_part2, (-1)*LTF4x80MHz_part3, (-1)*LTF4x80MHz_part4, LTF4x80MHz_part5], wherein both LTF2x80MHz and LTF4x80MHz indicate the first LTF sequence with the length of 1001, wherein LTF2x80MHz = [LTF2x80MHz_Left, 0, LTF2x80MHz _Right], wherein LTF2x80MHz_Left is a $1^{st}$ element to a $500^{th}$ element of LTF2x80MHz, and LTF2x80MHz_Right is a $502^{nd}$ element to a $1001^{st}$ element of LTF2x80MHz; and LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a $1^{st}$ element to a $242^{nd}$ element of LTF4x80MHz, LTF4x80MHz_part2 is a $243^{rd}$ element to a $484^{th}$ element of LTF4x80MHz, LTF4x80MHz_part3 is a $485^{th}$ element to a $517^{th}$ element of LTF4x80MHz, LTF4x80MHz_part4 is a $518^{th}$ element to a $759^{th}$ element of LTF4x80MHz, and LTF4x80MHz_part5 is a $760^{th}$ element to a $1001^{st}$ element of LTF4x80MHz, and $0_{23}$ indicates 23 consecutive 0s.

18. The communication apparatus according to claim 14, wherein the first bandwidth is 320 MHz and the LTF sequence is:

[LTF2x80MHz_Left, 0, (-1)*LTF2x80MHz_Right, $0_{23}$, (-1)*LTF2x80MHz_Left, 0, LTF2x80MHz_Right, $0_{23}$, (-1)*LTF2x80MHz_Left, 0, LTF2x80MHz_Right, $0_{23}$, LTF2x80MHz_Left, 0, LTF2x80MHz_Right]; or
[LTF2x80MHz_part1, LTF2x80MHz_part2, LTF2x80MHz_part3, LTF2x80MHz_part4, LTF2x80MHz_part5, $0_{23}$, LTF2x80MHz_part1, LTF2x80MHz_part2, LTF2x80MHz_part3, LTF2x80MHz_part4, (-1)*LTF2x80MHz_part5, $0_{23}$, LTF2x80MHz_part1, (-1)*LTF2x80MHz_part2, (-1)*LTF2x80MHz_part3, (-1)*LTF2x80MHz_part4, (-1)*LTF2x80MHz_part5, $0_{23}$, (-1)*LTF2x80MHz_part1, LTF2x80MHz_part2, LTF2x80MHz_part3, LTF2x80MHz_part4, (-1)*LTF2x80MHz_part5], wherein LTF2x80MHz indicates the first LTF sequence with the length of 1001, wherein LTF2x80MHz = [LTF2x80MHz_Left, 0, LTF2x80MHz_Right], wherein LTF2x80MHz_Left is a $1^{st}$ element to a $500^{th}$ element of LTF2x80MHz, and LTF2x80MHz _Right is a $502^{nd}$ element to a $1001^{st}$ element of LTF2x80MHz; and LTF2x80MHz = [LTF2x80MHz_part1, LTF2x80MHz_part2, LTF2x80MHz_part3, LTF2x80MHz_part4, LTF2x80MHz_part5], wherein LTF2x80MHz_part1 is a $1^{st}$ element to a $242^{nd}$ element of LTF2x80MHz, LTF2x80MHz_part2 is a $243^{rd}$ element to a $484^{th}$ element of LTF2x80MHz, LTF2x80MHz_part3 is a $485^{th}$ element to a $517^{th}$ element of LTF2x80MHz, LTF2x80MHz_part4 is a $518^{th}$ element to a $759^{th}$ element of LTF2x80MHz, and LTF2x80MHz_part5 is a $760^{th}$ element to a $1001^{st}$ element of LTF2x80MHz; and 023 indicates 23 consecutive 0s.

19. The communication apparatus according to claim 15, wherein the first bandwidth is 320 MHz and the LTF sequence is:

[LTF4x80MHz_part1, LTF4x80MHz_part2, LTF4x80MHz_part3, LTF4x80MHz_part4, LTF4x80MHz_part5, $0_{23}$, LTF4x80MHz_part1, (-1)*LTF4x80MHz_part2, LTF4x80MHz_part3, LTF4x80MHz_part4, (-1)*LTF4x80MHz_part5, $0_{23}$, (-1)* LTF4x80MHz_part1, (-1)*LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, LTF4x80MHz_part3, LTF4x80MHz_part4, (-1)*LTF4x80MHz_part5]; or
[LTF4x80MHz_part1, LTF4x80MHz_part2, LTF4x80MHz_part3, LTF4x80MHz_part4, LTF4x80MHz_part5, $0_{23}$, (-1)*LTF4x80MHz_part1, LTF4x80MHz_part2, (-1)*LTF4x80MHz_part3, LTF4x80MHz_part4, LTF4x80MHz_part5, $0_{23}$, (-1)*LTF4x80MHz_part1, (-1)*LTF4x80MHz_part2, (-1)*LTF4x80MHz_part3, (-1)*LTF4x80MHz_part4, LTF4x80MHz_part5, $0_{23}$, LTF4x80MHz_part1, (-1)*LTF4x80MHz_part2, (-1)*LTF4x80MHz_part3, (-1)*LTF4x80MHz_part4, LTF4x80MHz_part5], wherein LTF4x80MHz indicates the first LTF sequence with the length of 1001, wherein LTF4x80MHz = [LTF4x80MHz_part1, LTF4x80MHz_part2, LTF4x80MHz_part3, LTF4x80MHz_part4, LTF4x80MHz_part5], wherein LTF4x80MHz_part1 is a $1^{st}$ element to a $242^{nd}$ element of LTF4x80MHz, LTF4x80MHz_part2 is a $243^{rd}$ element to a $484^{th}$ element of LTF4x80MHz, LTF4x80MHz_part3 is a $485^{th}$ element to a $517^{th}$ element of LTF4x80MHz, LTF4x80MHz_part4 is a $518^{th}$ element to a $759^{th}$ element of LTF4x80MHz, and LTF4x80MHz_part5 is a $760^{th}$ element to a $1001^{st}$ element of LTF4x80MHz; and $0_{23}$ indicates 23 consecutive 0s.

20. The communication apparatus according to any one of claims 11 to 19, wherein the PPDU is an extremely high throughput PPDU, and the LTF sequence is carried in an extremely high throughput EHT long training field in the extremely high throughput PPDU.

21. A communication apparatus, wherein the communication apparatus is a first communication device and comprises a processor and a transceiver; the processor is configured to generate a PPDU, the PPDU comprises an LTF sequence, the LTF sequence is generated based on a first LTF sequence, and the first LTF sequence is not a high efficiency LTF sequence; and
the transceiver unit is configured to send the PPDU over a first bandwidth, wherein the first bandwidth is greater than or equal to 80 MHz.

22. A communication apparatus, wherein the communication apparatus is a station device and comprises a processor and a transceiver; the transceiver is configured to receive a PPDU over a first bandwidth, and the first bandwidth is greater than or equal to 80 MHz; and
the processor is configured to parse the received PPDU to obtain an LTF sequence comprised in the PPDU, wherein the LTF sequence is generated based on a first LTF sequence, and the first LTF sequence is not a high efficiency LTF sequence.

23. A computer-readable storage medium, wherein the computer-readable storage medium stores instructions; and when the instructions are run on a computer, the computer is enabled to perform the method according to any one of claims 1 to 10.

24. A computer program product that comprises instructions, wherein when the instructions run on a computer, the computer performs the method according to any one of claims 1 to 10.

25. A chip or a chip system, comprising an input/output interface and a processing circuit, wherein the processing circuit is configured to generate a PPDU; the PPDU comprises an LTF sequence, a length of the LTF sequence is greater than or equal to a first length, the LTF sequence is generated based on a first LTF sequence, the first length is a length of an LTF sequence of a PPDU transmitted on a 160 MHz channel, and the first LTF sequence is not a high efficiency LTF sequence; and the input/output interface is configured to send the PPDU over a first bandwidth, wherein the first bandwidth is greater than or equal to 160 MHz.

26. A chip or a chip system, comprising an input/output interface and a processing circuit, wherein the input/output interface is configured to receive a PPDU from a first communication device over a first bandwidth, and the first bandwidth is greater than or equal to 160 MHz; and the processing circuit is configured to parse the received PPDU to obtain an LTF sequence comprised in the PPDU, wherein a length of the LTF sequence is greater than or equal to a first length, the LTF sequence is generated based on a first LTF sequence, the first length is a length of an LTF sequence of a PPDU transmitted on a 160 MHz channel, and the first LTF sequence is not a high efficiency LTF sequence.

◄──────────────── **PHY Preamble/PHY preamble** ────────────────►

| **L-STF/** Legacy short training field | **L-LTF/** Legacy long training field | **L-SIG/** Legacy signal field | **RL-SIG/** Repeated legacy signal field | HE-SIG-A/ High efficiency signal field A | HE-SIG-B/ High efficiency signal field B | **HE-STF/** High efficiency short training field | HE-LTF/ High efficiency long training field | HE-DATA/High efficiency data |

FIG. 1

FIG. 2

FIG. 3a

FIG. 3b

FIG. 4

First communication device

Second communication device

S501: Generate a physical layer protocol data unit PPDU. The PPDU includes a long training field LTF sequence. The LTF sequence is generated based on a first LTF sequence. The first LTF sequence is not an HE-LTF (high efficiency-LTF) sequence

S502: Send the PPDU over a first bandwidth. The first bandwidth is greater than or equal to 80 MHz

S503: Parse the PPDU to obtain an LTF sequence included in the PPDU

FIG. 5

EHT PPDU

| EHT-SIG common field | EHT-SIG user specific field |

| L-STF Legacy short training field | L-LTF Legacy long training field | L-SIG Legacy signal field | RL-SIG Repeated legacy signal field | U-SIG SYM 1 Universal field symbol 1 | U-SIG SYM 2 Universal field symbol 2 | EHT-SIG EHT signal field | EHT-STF EHT short training field | EHT-LTF EHT long training field | Data |

| Version independent field | Version dependent field | Cyclic redundancy code | Tail |

FIG. 6

EP 4 167 534 A1

FIG. 7

FIG. 8

## INTERNATIONAL SEARCH REPORT

| International application No. |
|---|
| **PCT/CN2021/105105** |

**A. CLASSIFICATION OF SUBJECT MATTER**

H04L 25/02(2006.01)i; H04L 5/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; IEEE: 长训练字段, 物理层协议数据单元, 高效率, 带宽, 格雷, 互补, 布尔函数, 生成, 极高吞吐率, 80MHz, LTF, PPDU, EHT, long training field, physical protocol data unit, extremely high throughput, Golay, complementary, 802.11

**C. DOCUMENTS CONSIDERED TO BE RELEVANT**

| Category* | Citation of document, with indication, where appropriate, of the relevant passages | Relevant to claim No. |
|---|---|---|
| PX | CN 112821998 A (HUAWEI TECHNOLOGIES CO., LTD.) 18 May 2021 (2021-05-18) description, paragraphs [0064]-[0484], and figures 1-8 | 1-26 |
| X | WO 2020050528 A1 (LG ELECTRONICS INC.) 12 March 2020 (2020-03-12) description, paragraphs [6]-[1081], and figures 1-21 | 1, 2, 11, 12, 21-26 |
| A | CN 106464630 B (HUAWEI TECHNOLOGIES CO., LTD.) 29 November 2019 (2019-11-29) entire document | 1-26 |
| A | CN 110876200 A (HUAWEI TECHNOLOGIES CO., LTD.) 10 March 2020 (2020-03-10) entire document | 1-26 |
| A | WO 2019178511 A1 (QUALCOMM INCORPORATED) 19 September 2019 (2019-09-19) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 September 2021** | **28 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/105105**

| Patent document cited in search report | | | Publication date (day/month/year) | Patent family member(s) | | | Publication date (day/month/year) |
|---|---|---|---|---|---|---|---|
| CN | 112821998 | A | 18 May 2021 | WO | 2021093858 | A1 | 20 May 2021 |
| WO | 2020050528 | A1 | 12 March 2020 | CN | 112655181 | A | 13 April 2021 |
| | | | | EP | 3826257 | A1 | 26 May 2021 |
| CN | 106464630 | B | 29 November 2019 | WO | 2016000108 | A1 | 07 January 2016 |
| | | | | CN | 106464630 | A | 22 February 2017 |
| CN | 110876200 | A | 10 March 2020 | WO | 2020048280 | A1 | 12 March 2020 |
| | | | | US | 2021195591 | A1 | 24 June 2021 |
| WO | 2019178511 | A1 | 19 September 2019 | US | 2019289612 | A1 | 19 September 2019 |
| | | | | CN | 111886839 | A | 03 November 2020 |

Form PCT/ISA/210 (patent family annex) (January 2015)

**REFERENCES CITED IN THE DESCRIPTION**

**Patent documents cited in the description**

- CN 202010664650